(19) 

Europäisches
Patentamt

European
Patent Office

Office européen
des brevets

(11) **EP 4 671 802 A2**

(12) **EUROPEAN PATENT APPLICATION**

(43) Date of publication:
**31.12.2025 Bulletin 2026/01**

(21) Application number: **25206347.4**

(22) Date of filing: **06.02.2023**

(51) International Patent Classification (IPC):
***G01S 5/00*** *(2006.01)*

(52) Cooperative Patent Classification (CPC):
**G01S 5/02; G01S 5/0205; G01S 11/02;**
G01S 5/0036; G01S 5/14; G01S 2205/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.03.2022 GR 20220100276**

(62) Document number(s) of the earlier application(s) in
accordance with Art. 76 EPC:
**23710510.1 / 4 500 215**

(71) Applicant: **QUALCOMM Incorporated**
**San Diego, CA 92121-1714 (US)**

(72) Inventors:
 • **MANOLAKOS, Alexandros**
   **San Diego, 92121 (US)**
 • **KUMAR, Mukesh**
   **San Diego, 92121 (US)**

 • **YERRAMALLI, Srinivas**
   **San Diego, 92121 (US)**
 • **ZORGUI, Marwen**
   **San Diego, 92121 (US)**
 • **SIDDHANT, Fnu**
   **San Diego, 92121 (US)**

(74) Representative: **Reddie & Grose LLP**
**The White Chapel Building**
**10 Whitechapel High Street**
**London E1 8QS (GB)**

Remarks:
This application was filed on 02.10.25 as a divisional
application to the application mentioned under INID
code 62.

(54) **CARRIER PHASE BASED POSITIONING IN TERRESTRIAL WIRELESS NETWORK**

(57)    A carrier phase based positioning for a user equipment (UE) in a terrestrial wireless network is supported. Carrier phase (CP) based positioning may be supported by determining a distance estimate between a receiving entity and transmitting entity using a sequential search of combinations of CP measurements of a positioning signal transmitted by the transmitting entity. The sequential search of combinations of the CP measurements is performed from wide to narrow lane combinations, using results from one or more wide lane combinations in the sequential search. An expected trip time or expected integer cycle associated with positioning signals may be provided to the UE, which may be used to assist in determining a distance estimate to a transmitting entity. If cycle slip of a CP measured for a positioning signal is detected, an indication of the cycle slip may be provided.

**EP 4 671 802 A2**

## Description

## CROSS-REFERENCE TO RELATED APPLICATION

This application claims the benefit of Greek Patent Application Serial No. 20220100276, entitled "METHODS AND APPARATUS FOR CARRIER PHASE BASED POSITIONING IN TERRESTRIAL WIRELESS NETWORK" and filed on March 29, 2022, which is expressly incorporated by reference herein in its entirety.

## BACKGROUND OF THE DISCLOSURE

### 1. Field of the Disclosure

Aspects of the disclosure relate generally to wireless communications and positioning, and in particular to positioning of a mobile device using carrier phase in positioning signals.

### 2. Description of the Related Art

A receiver for Satellite Positioning Systems (SPS) and a transceiver for wireless communication systems are often embedded in a mobile device, such as a mobile phone, a wearable device, a laptop computer, an Internet of Thing (IoT) device, etc. SPS, for example, may include Global Navigation Satellite Systems (GNSS), such as Global Positioning System (GPS), while wireless communication systems include, e.g., terrestrial Wireless Wide Area Networks (WWAN), such as Long-Term Evolution (LTE) or Fifth Generation New Radio (5G NR), non-terrestrial WWANs, e.g., satellite communication systems, and Wireless Local Area Networks (WLAN), such as Wi-Fi.

One type of positioning using SPS signals is based on carrier phase. For example, commercial GPS carrier phase positioning is widely used and for centimeter level accuracy. A carrier signal in a satellite positioning signal is used to carry timing information, e.g., the pseudorandom noise ranging codes, and any navigation messages, e.g., ephemeris information. The phase of the carrier signal in a positioning signal may be measured and used to determine a distance between the receiver and the satellite. Using the distance to a plurality of satellites (determined based on the carrier phase), and known positions of each of the satellites, multilateration may be used to compute the position of the mobile device.

While carrier phase based positioning is currently used in SPS systems, carrier phase based positioning in a terrestrial wireless network has not yet been implemented due to a number of complications and challenges. Accordingly, a number of improvements are desirable for carrier phase based positioning in a terrestrial wireless network.

## SUMMARY

A carrier phase based positioning for a user equipment (UE) in a terrestrial wireless network is supported. Carrier phase (CP) based positioning may be supported by determining a distance estimate between a receiving entity and transmitting entity using a sequential search of combinations of CP measurements of a positioning signal transmitted by the transmitting entity. The sequential search of combinations of the CP measurements is performed from wide to narrow lane combinations, using results from one or more wide lane combinations in the sequential search. An expected trip time or expected integer cycle associated with positioning signals may be provided to the UE, which may be used to assist in determining a distance estimate to a transmitting entity. If a receiving entity detects a cycle slip of a CP measured for a positioning signal, the receiving entity may report the cycle slip for the positioning signal. A location server may determine a likelihood of an occurrence of a cycle slip for a positioning signal and may provide an indication of the likelihood to a UE.

In one implementation, a method performed by a user equipment (UE) for supporting carrier phase positioning of the UE in a terrestrial wireless network, includes receiving positioning signals from base stations in the terrestrial wireless network; performing carrier phase (CP) measurements of the positioning signals received from the base stations; and determining a distance estimate from each base station to the UE using a sequential search of combinations of the CP measurements from a wide lane combination to a narrow lane combination, wherein results from the wide lane combination of the CP measurements is used in the sequential search.

In one implementation, a user equipment (UE) configured for supporting carrier phase positioning of the UE in a terrestrial wireless network, includes a wireless transceiver configured to wirelessly communicate with entities in a wireless network; at least one memory; at least one processor coupled to the wireless transceiver and the at least one memory, wherein the at least one processor is configured to: receive, via the wireless transceiver, positioning signals from base stations in the terrestrial wireless network; perform carrier phase (CP) measurements of the positioning signals received from the base stations; and determine a distance estimate from each base station to the UE using a sequential search of combinations of the CP measurements from a wide lane combination to a narrow lane combination, wherein results from the wide lane combination of the CP measurements is used in the sequential search.

In one implementation, a user equipment (UE) configured for supporting carrier phase positioning of the UE in a terrestrial wireless network, includes means for receiving positioning signals from base stations in the terrestrial wireless network; means for performing carrier phase (CP) measurements of the positioning signals received from the base stations; and means for determining a distance estimate from each base station to the UE using a sequential search of combinations of the CP measurements from a wide lane combination to a narrow lane combination, wherein results from the wide lane combination of the CP measurements is used in the sequential search.

In one implementation, a non-transitory storage medium including program code stored thereon, the program code is operable to configure at least one processor in a user equipment (UE) for supporting carrier phase positioning of the UE in a terrestrial wireless network, the program code comprising instructions to: receive positioning signals from base stations in the terrestrial wireless network; perform carrier phase (CP) measurements of the positioning signals received from the base stations; and determine a distance estimate from each base station to the UE using a sequential search of combinations of the CP measurements from a wide lane combination to a narrow lane combination, wherein results from the wide lane combination of the CP measurements is used in the sequential search.

In one implementation, a method performed by a user equipment (UE) for supporting carrier phase positioning of the UE in a terrestrial wireless network, includes receiving positioning signals from base stations in the terrestrial wireless network; performing carrier phase (CP) measurements of the positioning signals received from the base stations; and sending location information to a location server, wherein the location information comprises the carrier phase measurements or one or more combinations of the carrier phase measurements to enable a distance estimate from each base station to the UE determined using a sequential search of combinations of the CP measurements from a wide lane combination to a narrow lane combination, wherein results from the wide lane combination of the CP measurements is used in the sequential search.

In one implementation, a user equipment (UE) configured for supporting carrier phase positioning of the UE in a terrestrial wireless network, includes a wireless transceiver configured to wirelessly communicate with entities in a wireless network; at least one memory; at least one processor coupled to the wireless transceiver and the at least one memory, wherein the at least one processor is configured to: receive, via the wireless transceiver, positioning signals from base stations in the terrestrial wireless network; perform carrier phase (CP) measurements of the positioning signals received from the base stations; and send, via the wireless transceiver, location information to a location server, wherein the location information comprises the carrier phase measurements or one or more combinations of the carrier phase measurements to enable a distance estimate from each base station to the UE determined using a sequential search of combinations of the CP measurements from a wide lane combination to a narrow lane combination, wherein results from the wide lane combination of the CP measurements is used in the sequential search.

In one implementation, a user equipment (UE) configured for supporting carrier phase positioning of the UE in a terrestrial wireless network, includes means for receiving positioning signals from base stations in the terrestrial wireless network; means for performing carrier phase (CP) measurements of the positioning signals received from the base stations; and means for sending location information to a location server, wherein the location information comprises the carrier phase measurements or one or more combinations of the carrier phase measurements to enable a distance estimate from each base station to the UE determined using a sequential search of combinations of the CP measurements from a wide lane combination to a narrow lane combination, wherein results from the wide lane combination of the CP measurements is used in the sequential search.

In one implementation, a non-transitory storage medium including program code stored thereon, the program code is operable to configure at least one processor in a user equipment (UE) for supporting carrier phase positioning of the UE in a terrestrial wireless network, the program code comprising instructions to: receive positioning signals from base stations in the terrestrial wireless network; perform carrier phase (CP) measurements of the positioning signals received from the base stations; and send location information to a location server, wherein the location information comprises the carrier phase measurements or one or more combinations of the carrier phase measurements to enable a distance estimate from each base station to the UE determined using a sequential search of combinations of the CP measurements from a wide lane combination to a narrow lane combination, wherein results from the wide lane combination of the CP measurements is used in the sequential search.

In one implementation, a method performed by a location server for supporting carrier phase positioning of a user equipment (UE) in a terrestrial wireless network, includes receiving from the UE carrier phase (CP) measurements of positioning signal received by the UE from base stations in the terrestrial wireless network; and determining a distance estimate from each base station to the UE using a sequential search of combinations of the CP measurements from a wide lane combination to a narrow lane combination, wherein results from the wide lane combination of the CP measurements is used in the sequential search.

In one implementation, a location server configured for supporting carrier phase positioning of a user equipment (UE) in a terrestrial wireless network, includes an external interface configured to communicate with entities in a wireless network; at least one memory; at least one processor coupled to the external interface and the at least one memory, wherein the at least one processor is configured to: receive, via the external interface, from the UE carrier phase (CP) measurements of positioning signal received by the UE from base stations in the terrestrial wireless network; and determine a distance estimate from each base station to the UE using a sequential search of combinations of the CP measurements from a wide lane combination to a narrow lane combination, wherein results from the wide lane combination of the CP measurements is used in the sequential search.

In one implementation, a location server configured for supporting carrier phase positioning of a user equipment (UE) in a terrestrial wireless network, includes means for receiving from the UE carrier phase (CP) measurements of positioning signal received by the UE from base stations in the terrestrial wireless network; and means for determining a distance estimate from each base station to the UE using a sequential search of combinations of the CP measurements from a wide lane combination to a narrow lane combination, wherein results from the wide lane combination of the CP measurements is used in the sequential search.

In one implementation, a non-transitory storage medium including program code stored thereon, the program code is operable to configure at least one processor in a location server for supporting carrier phase positioning of a user equipment (UE) in a terrestrial wireless network, the program code comprising instructions to: receive from the UE carrier phase (CP) measurements of positioning signal received by the UE from base stations in the terrestrial wireless network; and determine a distance estimate from each base station to the UE using a sequential search of combinations of the CP measurements from a wide lane combination to a narrow lane combination, wherein results from the wide lane combination of the CP measurements is used in the sequential search.

In one implementation, a method performed by a user equipment (UE) for supporting carrier phase positioning of the UE in a terrestrial wireless network, includes receiving from an entity in the terrestrial wireless network an expected trip time or expected integer cycle associated with at least one positioning signal from at least one transmitting entity; receiving the at least one positioning signal from the at least one transmitting entity; performing CP measurements of the at least one positioning signal received from the at least one transmitting entity; and determining a distance estimate from the at least one transmitting entity to the UE based on the CP measurements and the expected trip time or the expected integer cycle associated with the at least one positioning signal from the at least one transmitting entity.

In one implementation, a user equipment (UE) configured for supporting carrier phase positioning of the UE in a terrestrial wireless network, includes a wireless transceiver configured to wirelessly communicate with entities in a wireless network; at least one memory; at least one processor coupled to the wireless transceiver and the at least one memory, wherein the at least one processor is configured to: receive, via the wireless transceiver, from an entity in the terrestrial wireless network an expected trip time or expected integer cycle associated with at least one positioning signal from at least one transmitting entity; receive, via the wireless transceiver, the at least one positioning signal from the at least one transmitting entity; perform CP measurements of the at least one positioning signal received from the at least one transmitting entity; and determine a distance estimate from the at least one transmitting entity to the UE based on the CP measurements and the expected trip time or the expected integer cycle associated with the at least one positioning signal from the at least one transmitting entity.

In one implementation, a user equipment (UE) configured for supporting carrier phase positioning of the UE in a terrestrial wireless network, includes means for receiving from an entity in the terrestrial wireless network an expected trip time or expected integer cycle associated with at least one positioning signal from at least one transmitting entity; means for receiving the at least one positioning signal from the at least one transmitting entity; means for performing CP measurements of the at least one positioning signal received from the at least one transmitting entity; and means for determining a distance estimate from the at least one transmitting entity to the UE based on the CP measurements and the expected trip time or the expected integer cycle associated with the at least one positioning signal from the at least one transmitting entity.

In one implementation, a non-transitory storage medium including program code stored thereon, the program code is operable to configure at least one processor in a user equipment (UE) for supporting carrier phase positioning of the UE in a terrestrial wireless network, the program code comprising instructions to: receive from an entity in the terrestrial wireless network an expected trip time or expected integer cycle associated with at least one positioning signal from at least one transmitting entity; receive the at least one positioning signal from the at least one transmitting entity; perform CP measurements of the at least one positioning signal received from the at least one transmitting entity; and determine a distance estimate from the at least one transmitting entity to the UE based on the CP measurements and the expected trip time or the expected integer cycle associated with the at least one positioning signal from the at least one transmitting entity.

In one implementation, a method performed by a location server for supporting carrier phase positioning of a user equipment (UE) in a terrestrial wireless network, includes receiving a capabilities message from the UE indicating that the UE is capable of performing carrier phase (CP) positioning measurements; sending assistance data to the UE associated with a CP positioning method at least based on the received capabilities message, wherein the assistance data includes an expected trip time or expected integer cycle associated with at least one positioning signal from at least one transmitting entity; wherein a distance estimate from the at least one transmitting entity to the UE is determined based on CP measurements of the at least one positioning signal received by the UE from the at least one transmitting entity and the expected trip time or the expected integer cycle for the at least one positioning signal from the at least one transmitting entity.

In one implementation, a location server configured for supporting carrier phase positioning of a user equipment (UE) in a terrestrial wireless network, includes an external interface configured to communicate with entities in a wireless network; at least one memory; at least one processor coupled to the external interface and the at least one memory, wherein the at least one processor is configured to: receive, via the external interface, a capabilities message from the UE indicating that the UE is capable of performing carrier phase (CP) positioning measurements; send, via the external interface, assistance data to the UE associated with a CP positioning method at least based on the received capabilities message, wherein the assistance data includes an expected trip time or expected integer cycle associated with at least one positioning signal from at least one transmitting entity; wherein a distance estimate from the at least one transmitting entity to the UE is determined based on CP measurements of the at least one positioning signal received by the UE from the at least one transmitting entity and the expected trip time or the expected integer cycle for the at least one positioning signal from the at least one transmitting entity.

In one implementation, a location server configured for supporting carrier phase positioning of a user equipment (UE) in a terrestrial wireless network, includes means for receiving a capabilities message from the UE indicating that the UE is capable of performing carrier phase (CP) positioning measurements; means for sending assistance data to the UE associated with a CP positioning method at least based on the received capabilities message, wherein the assistance data includes an expected trip time or expected integer cycle associated with at least one positioning signal from at least one transmitting entity; wherein a distance estimate from the at least one transmitting entity to the UE is determined based on CP measurements of the at least one positioning signal received by the UE from the at least one transmitting entity and the expected trip time or the expected integer cycle for the at least one positioning signal from the at least one transmitting entity.

In one implementation, a non-transitory storage medium including program code stored thereon, the program code is operable to configure at least one processor in a location server for supporting carrier phase positioning of a user equipment (UE) in a terrestrial wireless network, the program code comprising instructions to: receive a capabilities message from the UE indicating that the UE is capable of performing carrier phase (CP) positioning measurements; send assistance data to the UE associated with a CP positioning method at least based on the received capabilities message, wherein the assistance data includes an expected trip time or expected integer cycle associated with at least one positioning signal from at least one transmitting entity; wherein a distance estimate from the at least one transmitting entity to the UE is determined based on CP measurements of the at least one positioning signal received by the UE from the at least one transmitting entity and the expected trip time or the expected integer cycle for the at least one positioning signal from the at least one transmitting entity.

In one implementation, a method performed by a user equipment (UE) for supporting carrier phase positioning of the UE in a terrestrial wireless network, includes receiving positioning signals from transmission reception points (TRPs) in the terrestrial wireless network; performing a carrier phase (CP) measurement of each of the positioning signals received from the TRPs for determining a distance estimate from each TRP to the UE; detecting whether a cycle slip of a CP for a positioning signal occurred; and sending a report with an indication of whether the cycle slip of the CP for the positioning signal is detected.

In one implementation, a user equipment (UE) configured for supporting carrier phase positioning of the UE in a terrestrial wireless network, includes a wireless transceiver configured to wirelessly communicate with entities in a wireless network; at least one memory; at least one processor coupled to the wireless transceiver and the at least one memory, wherein the at least one processor is configured to: receive, via the wireless transceiver, positioning signals from transmission reception points (TRPs) in the terrestrial wireless network; perform a carrier phase (CP) measurement of each of the positioning signals received from the TRPs for determining a distance estimate from each TRP to the UE; detect whether a cycle slip of a CP for a positioning signal occurred; and send, via the wireless transceiver, a report with an indication of whether the cycle slip of the CP for the positioning signal is detected.

In one implementation, a user equipment (UE) configured for supporting carrier phase positioning of the UE in a terrestrial wireless network, includes means for receiving positioning signals from transmission reception points (TRPs) in the terrestrial wireless network; means for performing a carrier phase (CP) measurement of each of the positioning signals received from the TRPs for determining a distance estimate from each TRP to the UE; means for detecting whether a cycle slip of a CP for a positioning signal occurred; and means for sending a report with an indication of whether the cycle slip of the CP for the positioning signal is detected.

In one implementation, a non-transitory storage medium including program code stored thereon, the program code is operable to configure at least one processor in a user equipment (UE) for supporting carrier phase positioning of the UE in a terrestrial wireless network, the program code comprising instructions to: receive positioning signals from transmission reception points (TRPs) in the terrestrial wireless network; perform a carrier phase (CP) measurement of each of the positioning signals received from the TRPs for determining a distance estimate from each TRP to the UE;

detect whether a cycle slip of a CP for a positioning signal occurred; and send a report with an indication of whether the cycle slip of the CP for the positioning signal is detected.

In one implementation, a method performed by a location server for supporting carrier phase positioning of a user equipment (UE) in a terrestrial wireless network, includes sending a request for location to the UE; and receiving a report from an entity in the terrestrial wireless network with an indication of whether a cycle slip is detected in a carrier phase (CP) of positioning signals received by the entity for determining a distance estimate from the entity to another entity.

In one implementation, a location server configured for supporting carrier phase positioning of a user equipment (UE) in a terrestrial wireless network, includes an external interface configured to communicate with entities in a wireless network; at least one memory; at least one processor coupled to the external interface and the at least one memory, wherein the at least one processor is configured to: send, via the external interface, a request for location to the UE; and receive, via the external interface, a report from an entity in the terrestrial wireless network with an indication of whether a cycle slip is detected in a carrier phase (CP) of positioning signals received by the entity for determining a distance estimate from the entity to another entity.

In one implementation, a location server configured for supporting carrier phase positioning of a user equipment (UE) in a terrestrial wireless network, includes means for sending a request for location to the UE; and means for receiving a report from an entity in the terrestrial wireless network with an indication of whether a cycle slip is detected in a carrier phase (CP) of positioning signals received by the entity for determining a distance estimate from the entity to another entity.

In one implementation, a non-transitory storage medium including program code stored thereon, the program code is operable to configure at least one processor in a location server for supporting carrier phase positioning of a user equipment (UE) in a terrestrial wireless network, the program code comprising instructions to: send a request for location to the UE; and receive a report from an entity in the terrestrial wireless network with an indication of whether a cycle slip is detected in a carrier phase (CP) of positioning signals received by the entity for determining a distance estimate from the entity to another entity.

In one implementation, a method performed by a transmission reception point (TRP) for supporting carrier phase positioning of a user equipment (UE) in a terrestrial wireless network, includes receiving positioning signals from the UE; performing a carrier phase (CP) measurement of the positioning signals received from the UE for determining a distance estimate from the TRP to the UE; detecting whether a cycle slip of a CP for a positioning signal occurred; and sending a report to a location server with an indication of whether the cycle slip of the CP for the positioning signal is detected.

In one implementation, a transmission reception point (TRP) for supporting carrier phase positioning of a user equipment (UE) in a terrestrial wireless network, includes an external interface configured to communicate with entities in a wireless network; at least one memory; at least one processor coupled to the external interface and the at least one memory, wherein the at least one processor is configured to: receive, via the external interface, positioning signals from the UE; perform a carrier phase (CP) measurement of the positioning signals received from the UE for determining a distance estimate from the TRP to the UE; detect whether a cycle slip of a CP for a positioning signal occurred; and send, via the external interface, a report to a location server with an indication of whether the cycle slip of the CP for the positioning signal is detected.

In one implementation, a transmission reception point (TRP) configured for supporting carrier phase positioning of a user equipment (UE) in a terrestrial wireless network, includes means for receiving positioning signals from the UE; means for performing a carrier phase (CP) measurement of the positioning signals received from the UE for determining a distance estimate from the TRP to the UE; means for detecting whether a cycle slip of a CP for a positioning signal occurred; and means for sending a report to a location server with an indication of whether the cycle slip of the CP for the positioning signal is detected.

In one implementation, a non-transitory storage medium including program code stored thereon, the program code is operable to configure at least one processor in a transmission reception point (TRP) for supporting carrier phase positioning of a user equipment (UE) in a terrestrial wireless network, the program code comprising instructions to: receive positioning signals from the UE; perform a carrier phase (CP) measurement of the positioning signals received from the UE for determining a distance estimate from the TRP to the UE; detect whether a cycle slip of a CP for a positioning signal occurred; and send a report to a location server with an indication of whether the cycle slip of the CP for the positioning signal is detected.

In one implementation, a method performed by a location server for supporting carrier phase positioning of a user equipment (UE) in a terrestrial wireless network, includes receiving a report from the UE with an indication of whether a cycle slip is detected in a carrier phase (CP) of positioning reference signal (PRS) resources received by the UE from a plurality of transmission reception points (TRPs) for determining a distance estimate from the UE to the TRP; determining a likelihood of cycle slip of the CP occurring for PRS resources from the plurality of TRPs based on the report; and sending assistance data to one or more UEs comprising an indication of the likelihood of cycle slip of the CP occurring for the PRS resources from the plurality of TRPs based on the report.

In one implementation, a location server configured for supporting carrier phase positioning of a user equipment (UE) in a terrestrial wireless network, includes an external interface configured to communicate with entities in a wireless network; at least one memory; at least one processor coupled to the external interface and the at least one memory, wherein the at least one processor is configured to: receive, via the external report, a report from the UE with an indication of whether a cycle slip is detected in a carrier phase (CP) of positioning reference signal (PRS) resources received by the UE from a plurality of transmission reception points (TRPs) for determining a distance estimate from the UE to the TRP; determine a likelihood of cycle slip of the CP occurring for PRS resources from the plurality of TRPs based on the report; and send, via the external report, assistance data to one or more UEs comprising an indication of the likelihood of cycle slip of the CP occurring for the PRS resources from the plurality of TRPs based on the report.

In one implementation, a location server configured for supporting carrier phase positioning of a user equipment (UE) in a terrestrial wireless network, includes means for receiving a report from the UE with an indication of whether a cycle slip is detected in a carrier phase (CP) of positioning reference signal (PRS) resources received by the UE from a plurality of transmission reception points (TRPs) for determining a distance estimate from the UE to the TRP; means for determining a likelihood of cycle slip of the CP occurring for PRS resources from the plurality of TRPs based on the report; and means for sending assistance data to one or more UEs comprising an indication of the likelihood of cycle slip of the CP occurring for the PRS resources from the plurality of TRPs based on the report.

In one implementation, a non-transitory storage medium including program code stored thereon, the program code is operable to configure at least one processor in a location server for supporting carrier phase positioning of a user equipment (UE) in a terrestrial wireless network, the program code comprising instructions to: receive a report from the UE with an indication of whether a cycle slip is detected in a carrier phase (CP) of positioning reference signal (PRS) resources received by the UE from a plurality of transmission reception points (TRPs) for determining a distance estimate from the UE to the TRP; determine a likelihood of cycle slip of the CP occurring for PRS resources from the plurality of TRPs based on the report; and send assistance data to one or more UEs comprising an indication of the likelihood of cycle slip of the CP occurring for the PRS resources from the plurality of TRPs based on the report.

In one implementation, a method performed by a user equipment (UE) for supporting carrier phase positioning of the in a terrestrial wireless network, includes receiving assistance data from a location server comprising an indication of a likelihood of cycle slip in a carrier phase (CP) of positioning reference signal (PRS) resources from a plurality of transmission reception points (TRPs); performing CP measurements of PRS resources from the plurality of TRPs based on the likelihood of cycle slip in the CP the PRS resources from the plurality of TRPs; and determining a distance estimate from each of the plurality of TRPs to the UE using the CP measurements of PRS resources from the plurality of TRPs.

In one implementation, a user equipment (UE) configured for supporting carrier phase positioning of the in a terrestrial wireless network, includes a wireless transceiver configured to wirelessly communicate with entities in a wireless network; at least one memory; at least one processor coupled to the wireless transceiver and the at least one memory, wherein the at least one processor is configured to: receive, via the wireless transceiver, assistance data from a location server comprising an indication of a likelihood of cycle slip in a carrier phase (CP) of positioning reference signal (PRS) resources from a plurality of transmission reception points (TRPs); perform CP measurements of PRS resources from the plurality of TRPs based on the likelihood of cycle slip in the CP the PRS resources from the plurality of TRPs; and determine a distance estimate from each of the plurality of TRPs to the UE using the CP measurements of PRS resources from the plurality of TRPs.

In one implementation, a user equipment (UE) configured for supporting carrier phase positioning of the in a terrestrial wireless network, includes means for receiving assistance data from a location server comprising an indication of a likelihood of cycle slip in a carrier phase (CP) of positioning reference signal (PRS) resources from a plurality of transmission reception points (TRPs); means for performing CP measurements of PRS resources from the plurality of TRPs based on the likelihood of cycle slip in the CP the PRS resources from the plurality of TRPs; and means for determining a distance estimate from each of the plurality of TRPs to the UE using the CP measurements of PRS resources from the plurality of TRPs.

In one implementation, a non-transitory storage medium including program code stored thereon, the program code is operable to configure at least one processor in a user equipment (UE) for supporting carrier phase positioning of the in a terrestrial wireless network, the program code comprising instructions to: receive assistance data from a location server comprising an indication of a likelihood of cycle slip in a carrier phase (CP) of positioning reference signal (PRS) resources from a plurality of transmission reception points (TRPs); perform CP measurements of PRS resources from the plurality of TRPs based on the likelihood of cycle slip in the CP the PRS resources from the plurality of TRPs; and determine a distance estimate from each of the plurality of TRPs to the UE using the CP measurements of PRS resources from the plurality of TRPs.

## BRIEF DESCRIPTION OF THE DRAWINGS

Aspects of the disclosure are illustrated by way of example. In the accompanying figures, like reference numbers indicate similar elements.

FIG. 1 illustrates an exemplary terrestrial wireless communications system 100 that may be used for carrier phase base positioning.

FIG. 2 illustrates a structure of an exemplary subframe sequence for a positioning reference signal (PRS).

FIG. 3 illustrates carrier phase based ranging between a UE and a base station.

FIG. 4 is a graph illustrating lanes that may be determined using different combinations carrier phase measurements of positioning signals.

FIG. 5 shows a block diagram illustrating a sequential search of distance between a receiving entity and transmitting entity in which the results from a wide lane combination of the carrier phase measurements are used to resolve an integer ambiguity of one or more subsequent narrow lane combinations of the carrier phase measurements.

FIG. 6 shows a block diagram illustrating a sequential search of distance between a receiving entity and transmitting entity in which the results from a wide lane combination of the carrier phase measurements are used to reduce the number of subsequent combinations of the carrier phase measurements in the sequential search.

FIG. 7 shows a block diagram illustrating a sequential search of distance between a receiving entity and transmitting entity in which the results from a plurality of wide lane combinations of the carrier phase measurements is used to resolve the integer ambiguity of one or more subsequent narrow lane combinations of the carrier phase measurements.

FIG. 8 illustrates an example of a cycle slip in a double difference phase of a carrier signal measured by a receiver over time.

FIG. 9 shows a signal flow of a procedure that may be used to support carrier phase based positioning.

FIG. 10 shows a schematic block diagram illustrating certain exemplary features of a UE configured to support carrier phase positioning of the UE in a terrestrial wireless network.

FIG. 11 shows a schematic block diagram illustrating certain exemplary features of a location server configured to support carrier phase positioning of the UE in a terrestrial wireless network.

FIG. 12 shows a schematic block diagram illustrating certain exemplary features of a base station configured to support carrier phase positioning of the UE in a terrestrial wireless network.

FIGs. 13A, 13B, 14-21 are flow charts illustrating methods for supporting carrier phase positioning of the UE in a terrestrial wireless network, as described herein

## DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage, or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular Radio Access Technology (RAT), unless otherwise noted. In general, a UE may be any wireless communication device (e.g., a mobile phone, router, tablet computer, laptop computer, a consumer asset tracking device, a consumer wearable (e.g., smartwatch, glasses, augmented reality (AR) / virtual reality (VR) headset, etc.), a navigation device for a vehicle (e.g., automobile, motorcycle, bicycle, etc.), devices and appliances connected to the internet as a part of the Internet of Things (IoT) device, etc.) used by a user to communicate over a wireless communications network. A UE may be mobile or may (e.g., at certain times) be stationary, and may communicate with a Radio Access Network (RAN). As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," "mobile device," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on IEEE 802.11, etc.) and so on.

A base station may operate according to one of several RATs in communication with UEs depending on the network in which it is deployed, and may be alternatively referred to as a transmission-reception point (TRP), an access point (AP), a network node, a NodeB, an evolved NodeB (eNB), a New Radio (NR) Node B (also referred to as a gNB), etc. In addition, in some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an UL / reverse or DL / forward traffic channel.

The term "base station" may refer to a single physical transmission point or to multiple physical transmission points that may or may not be co-located. For example, where the term "base station" refers to a single physical transmission point, the physical transmission point may be an antenna of the base station corresponding to a cell of the base station. Where the term "base station" refers to multiple co-located physical transmission points, the physical transmission points may be an array of antennas (e.g., as in a multiple-input multiple-output (MIMO) system or where the base station employs beamforming) of the base station. Where the term "base station" refers to multiple non-co-located physical transmission points, the physical transmission points may be a distributed antenna system (DAS) (a network of spatially separated antennas connected to a common source via a transport medium) or a remote radio head (RRH) (a remote base station connected to a serving base station). Alternatively, the non-co-located physical transmission points may be the serving base station receiving the measurement report from the UE and a neighbor base station whose reference radio frequency (RF) signals the UE is measuring.

A location server may be used to support positioning of a UE. The location server may be part of or accessible from a serving network or a home network for a UE or may simply be accessible over the Internet or over a local Intranet. If positioning of a UE is needed, a location server may instigate a location session with the UE and coordinate location measurements by the UE and determination of an estimated location of the UE. During a location session, a location server may request positioning capabilities of the UE (or the UE may provide them without a request), may provide assistance data to the UE (e.g. if requested by the UE or in the absence of a request) and may request a location estimate or location measurements from a UE for various positioning techniques, e.g. for the Global Navigation Satellite System (GNSS), Time Difference of Arrival (TDOA), Angle of Departure (AoD), Round Trip Time (RTT) or multi cell RTT (Multi-RTT), and/or Enhanced Cell ID (ECID) position methods. Assistance data may be used by a UE to acquire and measure GNSS and/or PRS signals (e.g. by providing expected characteristics of these signals such as frequency, expected time of arrival, signal coding, signal Doppler). In some implementations, some or all of the positioning assistance data may be provided by other network entities, such as a serving base station, or another UE (e.g., when sidelink positioning is being employed).

In a UE based mode of operation, assistance data may also or instead be used by a UE to help determine a location estimate from the resulting location measurements. For example, the assistance data may provide satellite ephemeris data in the case of GNSS positioning or base station locations and other base station characteristics such as PRS timing in the case of terrestrial positioning using, e.g., TDOA, AoD, Multi-RTT, etc.).

In another standalone mode of operation, a UE may make location related measurements without any positioning assistance data from a location server and may further compute a location or a change in location without any positioning assistance data from a location server. Position methods that may be used in a standalone mode include GPS and GNSS (e.g. if a UE obtains satellite orbital data from data broadcast by GPS and GNSS satellites themselves) as well as sensors.

During a positioning session to determine an estimated position of a UE, a UE may make positioning related measurements for downlink positioning signals transmitted by one or more base stations, such as PRS or other reference signals, such as Channel Status Information-Reference Signal (CSI-RS), Tracking Reference Signal (TRS), Demodulation Reference Signal (DMRS). In some implementations, one or more base stations may make positioning related measurements for uplink positioning signals transmitted by the UE, UL-PRS or Sounding Reference Signals (SRS) sometimes refereed to UL-SRS or SRS for positioning. In some implementations, a UE may make positioning related measurements for sidelink positioning signals transmitted by one or more other UEs, such as PRS or other reference signals, such as SRS for sidelink, sometimes referred to as SL-SRS. One or more combinations of the foregoing may be used together to determine an estimated position of the UE. It should be understood that while the present description sometimes refers to a UE measuring DL positioning signals from one or more base stations, it should be understood that the principles of the present disclosure may be used for any entity (e.g., UE, or base station) receiving positioning signals for another entity (e.g., base station, UE, or sidelink UE).

A location server, for example, may be an enhanced serving mobile location center (E-SMLC) in the case of LTE (4G) access, a standalone SMLC (SAS) in the case of Universal Mobile Telecommunications System (UMTS) (3G) access, a serving mobile location center (SMLC) in the case of Global System for Mobile communications GSM (2G) access, or a Location Management Function (LMF) in the case of New Radio (NR) for Fifth Generation (5G) access. In the case of Open Mobile Alliance (OMA) Secure User Plane Location (SUPL) location, a location server may be a SUPL Location Platform (SLP) which may act as any of: (i) a home SLP (H-SLP) if in or associated with the home network of a UE or if providing a permanent subscription to a UE for location services; (ii) a discovered SLP (D-SLP) if in or associated with some other (non-home) network or if not associated with any network; (iii) an Emergency SLP (E-SLP) if supporting location for an emergency call instigated by the UE; or (iv) a visited SLP (V-SLP) if in or associated with a serving network or a current local area for a UE. During a location session, a location server and UE may exchange messages defined according to some positioning protocol in order to coordinate the determination of an estimated location.

Possible positioning protocols may include, for example, the LTE Positioning Protocol (LPP) defined by 3GPP in 3GPP Technical Specification (TS) 36.355 and the LPP Extensions (LPPe) protocol defined by OMA in OMA TSs OMA-TS-LPPe-V1_0, OMA-TS-LPPe-V1_1 and OMA-TS-LPPe-V2_0. The LPP and LPPe protocols may be used in combination where an LPP message contains one embedded LPPe message. The combined LPP and LPPe protocols may be referred to as LPP/LPPe. LPP and LPP/LPPe may be used to help support the 3GPP control plane solution for LTE or NR access, in which case LPP or LPP/LPPe messages are exchanged between a UE and E-SMLC or between a UE and LMF. LPP or LPPe messages may be exchanged between a UE and E-SMLC via a serving Mobility Management Entity (MME) and a serving eNodeB for the UE. LPP or LPPe messages may also be exchanged between a UE and LMF via a serving Access and Mobility Management Function (AMF) and a serving NR Node B (gNB) for the UE. LPP and LPP/LPPe may also be used to help support the OMA SUPL solution for many types of wireless access that support IP messaging (such as LTE, NR and WiFi), where LPP or LPP/LPPe messages are exchanged between a SUPL Enabled Terminal (SET), which is the term used for a UE with SUPL, and an SLP, and may be transported within SUPL messages such as a SUPL POS or SUPL POS INIT message.

Carrier phase measurement is a common positioning method used in satellite positioning systems (SPS). It is desirable to use carrier phase based positioning in a terrestrial wireless network, as it may enable high ranging accuracy.

Carrier phase based positioning is a positioning method that uses a timing or distance measurement from a receiver to a transmitter that is based on the wavelength of the carrier or subcarrier signal. In contrast to "code-phase" or "Reference Signal Time Difference" (RSTD) measurement methods, commonly used in SPS systems and terrestrial positioning systems, respectively, the carrier phase measurement method uses frequency domain signal phase estimation. Carrier phase based positioning, for example, as used in SPS systems and Bluetooth, provides centimeter level high accuracy positioning service. The 3GPP Technical Specification (TS) 22.261 and others require submeter-level positioning performance. The use of carrier phase measurement-based technology, compared to RSTD timing measurement, AoD/ZoD method defined in Release-17, may provide better accuracy and resource utilization when it is applied to 3GPP system.

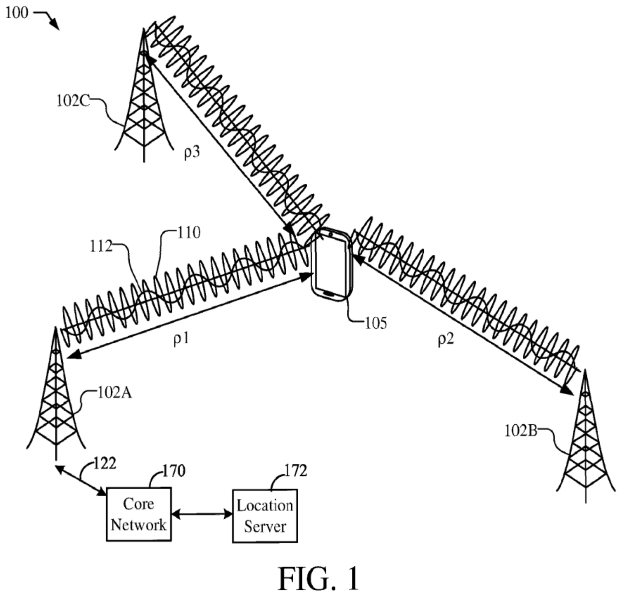

**FIG. 1** illustrates an exemplary terrestrial wireless communications system 100 that may be used for carrier phase base positioning, as discussed herein. The wireless communications system 100 (which may also be referred to as a wireless wide area network (WWAN)) includes a number of base stations 102A, 102B, and 102C (sometimes collectively referred to herein as base stations 102), and a UE 105. In an aspect, the macro cell base station may include eNBs where the wireless communications system 100 corresponds to an LTE network, or gNBs where the wireless communications system 100 corresponds to a 5G network, or a combination of both, and the small cell base stations may include femtocells, picocells, microcells, etc.

The base stations 102 may collectively form a RAN and interface with a core network 170 (e.g., an evolved packet core (EPC) or next generation core (NGC)) through backhaul link 122, and through the core network 170 to one or more location servers 172, which may be in the core network 170 or external to the core network 170. In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / NGC) over backhaul links, which may be wired or wireless.

The communication links between the base stations 102 and the UE 105 may include uplink (UL) (also referred to as reverse link) transmissions from a UE 105 to a base station 102 and/or downlink (DL) (also referred to as forward link) transmissions from a base station 102 to the UE 105. The communication links may use MIMO antenna technology, including spatial multiplexing, beamforming, and/or transmit diversity. The communication links may be through one or more carrier frequencies. Allocation of carriers may be asymmetric with respect to DL and UL (e.g., more or less carriers may be allocated for DL than for UL). It should be understood that in some implementations, one or more sidelink UEs may be used in addition to or in place of base stations 102 and sidelink (SL) communication links between the UE 105 and the sidelink UEs may be used for positioning in the same or similar manner as the UL or DL communication links.

The wireless communications system 100 may further include one or more millimeter wave (mmW) base stations 102 that may operate in mmW frequencies and/or near mmW frequencies in communication with the UE 105. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. A mmW base station 102 and the UE 105 may utilize beamforming (transmit and/or receive) over a mmW communication link to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

In 5G, the frequency spectrum in which wireless nodes (e.g., base stations 102, UEs 105) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 105 and the cell in which the UE 105 either performs the initial radio resource control (RRC) connection establishment procedure or initiates the RRC connection reestablishment procedure. The primary carrier carries all common and UE-specific control channels. A secondary carrier is a carrier operating on a second frequency (e.g., FR2) that may be configured once the RRC connection is established between the UE 104 and the anchor carrier and that may be used to provide additional radio resources. The secondary carrier may contain only necessary signaling information and signals, for example, those that are UE-specific may not be present in the secondary carrier, since both primary uplink and downlink carriers are typically UE-specific. This means that different UEs in a cell may have different downlink primary carriers. The same is true for the uplink primary carriers. The network is able to change the primary carrier of any UE 105 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

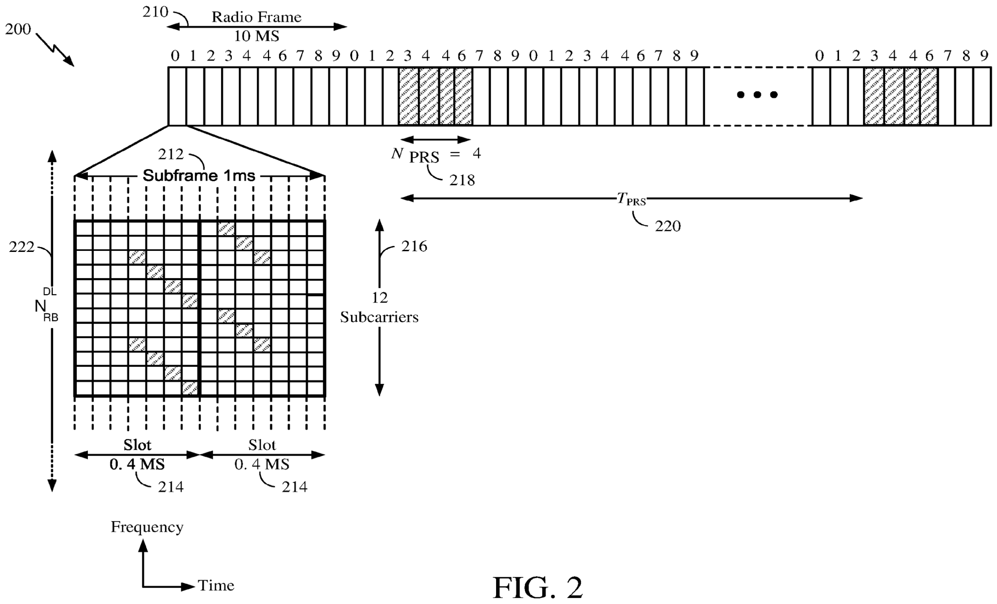

**FIG. 2,** by way of example, illustrates the structure of an exemplary subframe sequence 200 for a positioning signal, e.g., a positioning reference signal (PRS). Subframe sequence 200 may be applicable to the broadcast of PRS signals from a base station 102 (e.g., any of the base stations described herein) or other network node, including the UE 105. The subframe sequence 200 may be used in LTE systems, and the same or similar subframe sequence may be used in other communication technologies / protocols, such as 5G NR. In FIG. 2, time is represented horizontally (e.g., on the X axis) with time increasing from left to right, while frequency is represented vertically (e.g., on the Y axis) with frequency increasing (or decreasing) from bottom to top. As shown in FIG. 2, downlink and uplink radio frames 210 may be of 10 millisecond (ms) duration each. For downlink frequency division duplex (FDD) mode, radio frames 210 are organized, in the illustrated example, into ten subframes 212 of 1 ms duration each. Each subframe 212 comprises two slots 214, each of, for example, 0.5 ms duration.

In the frequency domain, the available bandwidth may be divided into uniformly spaced orthogonal subcarriers 216 (also referred to as "tones" or "bins"). For example, for a normal length cyclic prefix (CP) using, for example, 15 kHz spacing, subcarriers 216 may be grouped into a group of twelve (12) subcarriers. A resource of one OFDM symbol length in the time domain and one subcarrier in the frequency domain (represented as a block of subframe 212) is referred to as a resource element (RE). Each grouping of the 12 subcarriers 216 and the 14 OFDM symbols is termed a resource block (RB) and, in the example above, the number of subcarriers in the resource block may be written as $N_{SC}^{RB} = 12$. For a given channel bandwidth, the number of available resource blocks on each channel 222, which is also called the transmission bandwidth configuration 222, is indicated as $N_{RB}^{DL}$. For example, for a 3 MHz channel bandwidth in the above example, the number of available resource blocks on each channel 222 is given by $N_{RB}^{DL} = 15$. Note that the frequency component of a resource block (e.g., the 12 subcarriers) is referred to as a physical resource block (PRB).

A base station may transmit radio frames (e.g., radio frames 210), or other physical layer signaling sequences, supporting PRS signals (i.e. a downlink (DL) PRS) according to frame configurations either similar to, or the same as that, shown in FIG. 2, which may be measured and used for a UE (e.g., any of the UEs described herein) position estimation. Other types of wireless nodes (e.g., a distributed antenna system (DAS), remote radio head (RRH), UE, AP, etc.) in a wireless communications network may also be configured to transmit PRS signals configured in a manner similar to (or the same as) that depicted in FIG. 2.

A collection of resource elements that are used for transmission of PRS signals may be referred to as a "PRS resource." The collection of resource elements can span multiple PRBs in the frequency domain and N (e.g., 1 or more) consecutive symbol(s) within a slot 214 in the time domain. For example, the cross-hatched resource elements in the slots 214 may be examples of two PRS resources. A "PRS resource set" is a set of PRS resources used for the transmission of PRS signals, where each PRS resource has a PRS resource identifier (ID). In addition, the PRS resources in a PRS resource set are associated with the same transmission-reception point (TRP). A PRS resource ID in a PRS resource set is associated with a single beam transmitted from a single TRP (where a TRP may transmit one or more beams). Note that this does not have any implications on whether the TRPs and beams from which signals are transmitted are known to the UE.

PRS may be transmitted in special positioning subframes that are grouped into positioning occasions. A PRS occasion is one instance of a periodically repeated time window (e.g., consecutive slot(s)) where PRS are expected to be transmitted. Each periodically repeated time window can include a group of one or more consecutive PRS occasions. Each PRS occasion can comprise a number $N_{PRS}$ of consecutive positioning subframes. The PRS positioning occasions for a cell supported by a base station may occur periodically at intervals, denoted by a number $T_{PRS}$ of milliseconds or subframes. As an example, FIG. 2 illustrates a periodicity of positioning occasions where $N_{PRS}$ equals 4 218 and $T_{PRS}$ is greater than or equal to 20 220. In some aspects, $T_{PRS}$ may be measured in terms of the number of subframes between the start of consecutive positioning occasions. Multiple PRS occasions may be associated with the same PRS resource configuration, in which case, each such occasion is referred to as an "occasion of the PRS resource" or the like.

A PRS may be transmitted with a constant power. A PRS can also be transmitted with zero power (i.e., muted). Muting, which turns off a regularly scheduled PRS transmission, may be useful when PRS signals between different cells overlap by occurring at the same or almost the same time. In this case, the PRS signals from some cells may be muted while PRS signals from other cells are transmitted (e.g., at a constant power). Muting may aid signal acquisition and time of arrival (TOA) and reference signal time difference (RSTD) measurement, by UEs, of PRS signals that are not muted (by avoiding interference from PRS signals that have been muted). Muting may be viewed as the non-transmission of a PRS for a given positioning occasion for a particular cell. Muting patterns (also referred to as muting sequences) may be signaled (e.g., using the LTE positioning protocol (LPP)) to a UE using bit strings. For example, in a bit string signaled to indicate a muting pattern, if a bit at position *j* is set to '0', then the UE may infer that the PRS is muted for a *j*th positioning occasion.

To further improve hearability of PRS, positioning subframes may be low-interference subframes that are transmitted without user data channels. As a result, in ideally synchronized networks, PRS may be interfered with by other cells' PRS with the same PRS pattern index (i.e., with the same frequency shift), but not from data transmissions. The frequency shift may be defined as a function of a PRS ID for a cell or other transmission point (TP) (denoted as $N_{ID}^{PRS}$) or as a function of a physical cell identifier (PCI) (denoted as $N_{ID}^{cell}$) if no PRS ID is assigned, which results in an effective frequency re-use factor of six (6).

To also improve hearability of a PRS (e.g., when PRS bandwidth is limited, such as with only six resource blocks corresponding to 1.4 MHz bandwidth), the frequency band for consecutive PRS positioning occasions (or consecutive PRS subframes) may be changed in a known and predictable manner via frequency hopping. In addition, a cell supported by a base station may support more than one PRS configuration, where each PRS configuration may comprise a distinct frequency offset (*vshift*), a distinct carrier frequency, a distinct bandwidth, a distinct code sequence, and/or a distinct sequence of PRS positioning occasions with a particular number of subframes ($N_{PRS}$) per positioning occasion and a particular periodicity ($T_{PRS}$). In some implementation, one or more of the PRS configurations supported in a cell may be for a directional PRS and may then have additional distinct characteristics, such as a distinct direction of transmission, a distinct range of horizontal angles, and/or a distinct range of vertical angles.

A PRS configuration, as described above, including the PRS transmission/muting schedule, is signaled to the UE to enable the UE to perform PRS positioning measurements. The UE is not expected to blindly perform detection of PRS configurations.

Note that the term positioning signal, as used herein, may refer to PRS, such as illustrated in FIG. 2. Positioning signal may also refer to other reference signals that may be used for positioning herein, including but not limited to Channel Status Information-Reference Signal (CSI-RS), Tracking Reference Signal (TRS), Demodulation Reference Signal (DMRS), as well as SRS for uplink positioning signal from the UE 105 to the base station 102 or SL-SRS between the UE 105 and a SL UE (which may be used in place of base station 102).

Referring back to FIG. 1, the positioning signals transmitted between each base station 102 and the UE 105 includes a carrier (or subcarrier) signal 110, e.g., a continuous radio-frequency sinusoidal waveform, that is modulated with an information-bearing signal 112 for the purpose of conveying information. The carrier signal 110 typically has a higher frequency than the input signal 112. The carrier signal 110, by way of example, enables several carriers at different frequencies to share a common physical transmission medium by frequency division multiplexing.

The range ρ between the UE 105 and each base station 102 is a function of the carrier signal wavelength and the integer number of carrier phase cycles and fractional carrier phase cycle between the UE 105 and each base station 102. Thus, by accurately measuring the carrier phase, the range ρ between the UE 105 and each base station 102 can be determined. Using known positions of the base stations 102, along with the range ρ to each base station 102, the position of the UE 105 may be determined using multilateration. The determination of the position of the UE 105, for example, may be determined by the UE 105, if the positions of the base stations 102 is provided to the UE 105, e.g., by the location server 172 in assistance data, or may be determined by the location server 172 if the carrier phase measurements determined by the UE 105 are provided to the location server 172, e.g., in a location information message.

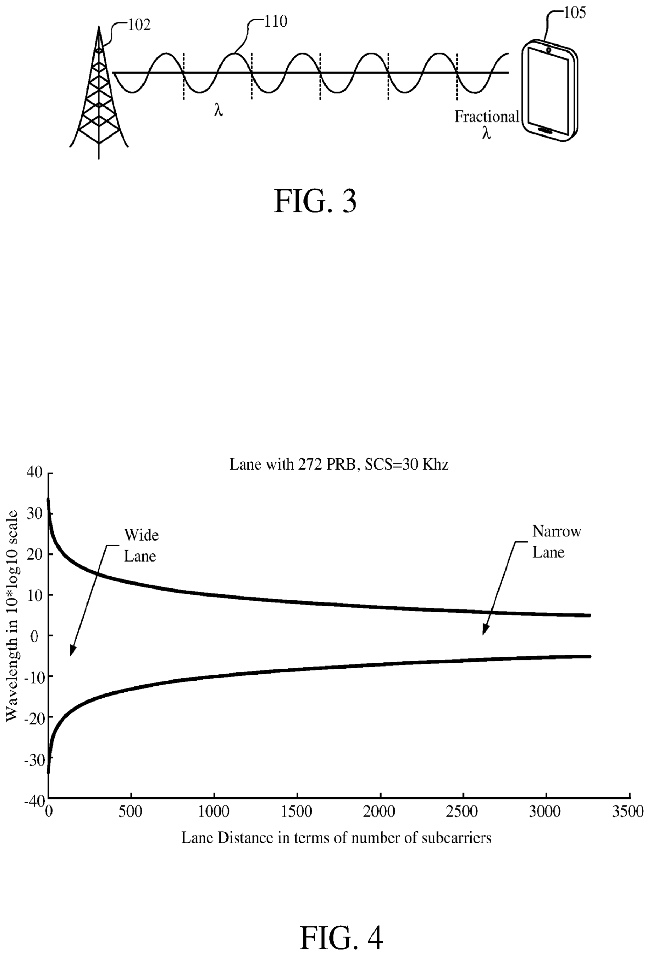

**FIG. 3** illustrates carrier phase based ranging between the UE 105 and a base station 102. As illustrated, a signal transmitted by the base station 102 includes the carrier signal 110 in the form of a continuous radio-frequency sinusoidal waveform. In some implementations, the UE 105 may transmit an UL positioning signal that is received by the base station 102 and may likewise include a carrier signal, or a SL UE (in place of base station 102) may transmit an UL positioning signal that is received by the UE 105.

Any distance ρ between the transmitting and receiving entities (discussed herein as base station 102 and the UE 105, respectively, for ease of reference, but may be the UE 105 and base station 102, respectively, or a SL UE and the UE 105, respectively, or the UE 105 and a SL UE, respectively) may be represented in terms of N full wavelengths λ of the carrier signal 110 and the residual fractional wavelength of the carrier signal 110. In mathematical terms, the basic principle of estimating the range ρ using the carrier phase may be given as follows:

$$\rho = N\lambda + \frac{\phi}{2\pi}\lambda \quad \text{eq. 1}$$

A measurement of the phase $\phi$ of the carrier signal by the UE 105, provides only the fraction part of the wavelength λ as it is modulo-2π. The integer number N of full wavelengths λ of the carrier signal 110 is ambiguous, and requires a form of estimation using one or more of a variety of different cycle count techniques.

In carrier phase measurement of a PRS channel, which uses orthogonal frequency domain multiplexing (OFDM), with a simple delay, the received frequency domain resource elements (Freq-Domain REs) may be modelled by the following:

$$R_k = D_k e^{-\frac{j2\pi k \Delta \rho}{c}} + W_k, k = -\frac{N_{RB}}{2}, \ldots, -1, 0, 1, \ldots, \frac{N_{RB}}{2} \qquad \text{eq. 2}$$

$$R_k = D_k e^{-\frac{j2\pi k \rho}{\lambda_\Delta}} + W_k, where \lambda_\Delta = \frac{c}{\Delta f} \qquad \text{eq. 3}$$

where $R_k$ is the kth Freq-Domain RE, $D_k$ is the pilot modulated symbol associated with the kth Freq-Domain RE, $W_k$ is the additive noise in the kth Freq-Domain RE, and $\Delta f$ is the difference in frequency.

After a descrambling operation, the Freq-Domain PRS REs can be represented as the following:

$$R'_k = \left\| D_k \right\|^2 e^{-\frac{j2\pi k \rho}{\lambda_\Delta}} + D_k^* W_k \qquad \text{eq. 4}$$

$$R'_k = e^{-\frac{j2\pi k \rho}{\lambda_\Delta}} + W'_k. \text{ eq. 5}$$

The carrier phase observation on the descrambled REs will then be given as:

$$\phi_k = -tan^{-1}\left(\frac{Im\{R'_k\}}{Re\{R'_k\}}\right) = \frac{2\pi k \rho}{\lambda_\Delta} - 2\pi N_k \qquad \text{eq. 6}$$

where $N_k \in \mathbb{Z}$ is an ambiguous number of full wavelength cycles that cannot be measured, and $\phi_k \in (-\pi, \pi)$ is the phase observation for $k^{th}$ sub-carrier.

In SPS based positioning using carrier phase measurements, two carrier-phase measurements may be combined in a way to increase the equivalent wavelength, in a process known as wide-laning. Wide lane phase observation helps to resolve the number of ambiguous cycles. Wide-lane phase observation may be used to help resolve the number of ambiguous cycles.

As discussed herein, wide laning may be used in an OFDM system, because OFDM systems use multiple sub-carriers that can be combined to provide several wide-lanes of different equivalent wavelengths. In mathematical terms, the basic principle of wide-laning may be performed in the following manner.

$$\phi_k - \phi_{k-m} = 2\pi\rho\frac{k}{\lambda_\Delta} - 2\pi N_k - 2\pi\rho\frac{k-m}{\lambda_\Delta} + 2\pi N_{k-m} \qquad \text{eq. 7}$$

$$\phi_k - \phi_{k-m} = \Delta\phi_m = \frac{2\pi\rho}{\frac{\lambda_\Delta}{m}} + 2\pi(N_{k-m} - N_k) = \frac{2\pi\rho}{\lambda_\Delta^m} + 2\pi\Delta N_m \qquad \text{eq. 8}$$

$$\rho = \lambda_\Delta^m \frac{\Delta\phi_m}{2\pi} + \lambda_\Delta^m \Delta N_m. \qquad \text{eq. 9}$$

The function $\lambda_\Delta^m = \frac{c}{m\Delta f}$ is the equivalent wavelength of a lane combination with sub-carrier separation of $m\Delta f$, e.g., where $\Delta f$ is the separation in frequency between adjacent sub-carriers (e.g., sub-carrier spacing (SCS)) and c is the speed of signal propagation (e.g., speed of light). Thus, the value of $m=1$ provides the widest lane or wavelength, which narrower lanes or wavelength are generated as m increases.

The maximum number of resource blocks (RBs) that can be used in PRS in NR is 272 RB. Assuming a comb 1 and symbol 1 structure (where the number of sub-carriers per RB is 12), there is a potential for 272*12 = 3264 carriers used in PRS for positioning. For the phase difference $\Delta\phi_m$ any two sub-carriers may be selected to define the lane, and the lane width is defined as the frequency distance between the selected sub-carriers.

The widest lane is produced by selecting consecutive sub-carriers, i.e., *m=1,* so that the minimum distance in frequency domain is 1*SCS. If SCS (i.e., *Δf*) is 30 KHz, the widest lane (*m=*1) may be given by

$$\Delta f = 30KHz \Rightarrow \lambda_\Delta^1 = \frac{c}{1*\Delta f} \cong 10Km$$

. Thus, the widest lane covers approximately ±10Km.

The narrowest lane may be produced using the extreme carrier index, i.e., the first and last sub-carriers, e.g., 1 and 3264, so that *m=*3263. The distance in frequency domain is 3263*SCS. If SCS (i.e., *Δf*) is 30 KHz, the narrowest lane

$$\Delta f = 30KHz \Rightarrow \lambda_\Delta^{3263} = \frac{c}{3263*\Delta f} \cong 3m$$

(*m=*3263) may be given by . Thus, the narrowest lane covers approximately ±3m.

Additionally, for each value of *m* (except the narrowest lane) multiple different lanes may be calculated. A wide lane may have a larger number of observations (calculated), while a narrow lane will have a smaller number of observations. For example, with 272 RBs with 12 sub-carriers per RB, the widest lane (*m=*1) may be calculated for sub-carriers 1 and 2, 2 and 3, 3 and 4, etc., whereas the narrowest lane (*m=*3263) may be calculated only for sub-carriers 1 and 3264.

FIG. 4 is a graph illustrating lanes that may be determined using different combinations carrier phase measurements of OFDM positioning signals with 272 RB and SCS = 30Khz. The X-axis illustrates the lane distance represented in the number of SCS spacing, and the Y axis illustrates wavelengths represented in 10*log10 scale. With 272 RB and SCS = 30Khz, the widest lane of 10 km and narrow lane of 3 meter are possible for a carrier phase positioning method.

In a PRS processing chain, e.g., used in 5GNR or LTE, the receiver subsystems calculate the descrambled frequency duplex (FD) resource elements (Res) before performing an Inverse Fast Fourier Transform (IFFT) on it to obtain the Channel Impulse Response (CIR) vector. Thus, the phase of each descrambled sub-carrier $\phi_k$, can be measured and then used to compute a phase difference $\Delta\phi_m$ for different *m=*1, 2, *3, ..., N$_{RB}$*.

In a simple single path scenario, with a high signal-to-noise ratio (SNR) reception, the widest lane, e.g., *m=*1, may be used to make an initial estimate of the delay, since the widest lane is approximately 10Km wide (assuming *Δf* = 30 KHz). The estimate may be used to count the integral number of full wavelength cycles for *m>*1 in subsequent narrower lanes.

In one implementation, during carrier phase positioning in a terrestrial wireless system, such as illustrated in FIG. 1, a distance estimate from each base station to the UE may be determined using a sequential search of combinations of the carrier phase measurements from a wide lane to a narrower lane, e.g., from the widest lane (e.g., *m=*1) to the narrowest lane, where the results from a wide lane combination of the carrier phase measurements is used in the sequential search. The sequential search may be performed by the UE 105 or in some implementations, the UE 105 may provide the carrier phase measurements to a location server 172 and the location server 172 may perform the sequential search.

By way of example, initially the UE 105 (or location server 172) will not have any knowledge about the distance between the UE 105 and a base station 102. The sequential search may start with a lane (*m*) that is approximately equal to or greater than a maximum distance between the UE 105 and the base station 102 (which may be known from the cell size). For example, if the distance between the UE 105 and the base station 102 is less than 10Km, the sequential search performed by the UE 105 (or location server 172) may start with the widest lane (*m=*1) to obtain a rough estimate of the distance between the UE 105 and base station 102. In subsequent searches, the previous wide lane estimate may be used by the UE 105 (or location server 172) to resolve the integer ambiguity of the narrow lane.

The sequential search may be based on multiple lanes, i.e., carrier phase combinations (values of *m*) and each lane (e.g., each value of *m*) may have multiple observations that are available.

The estimated distance between the UE 105 and the base station 102 may be determined from one or more of the distance estimates obtained in the sequential search. For example, a distance measurement that minimizes the mean square error (MSE) of all of the observations may be used. In some implementations, an outlier rejection process may be used to reject distance measurements that are outliers before selecting a distance measurement that minimizes the MSE. In other implementations, a median distance estimate or an average distance estimate may be determined from a plurality of observations to select the estimated distance between the UE 105 and the base station 102.

In some implementations, the PRS measurement period or reporting time used in a location session may depend on the number of lanes that are being measured, e.g., the number of lane combinations used in the sequential search of combinations of the carrier phase measurements.

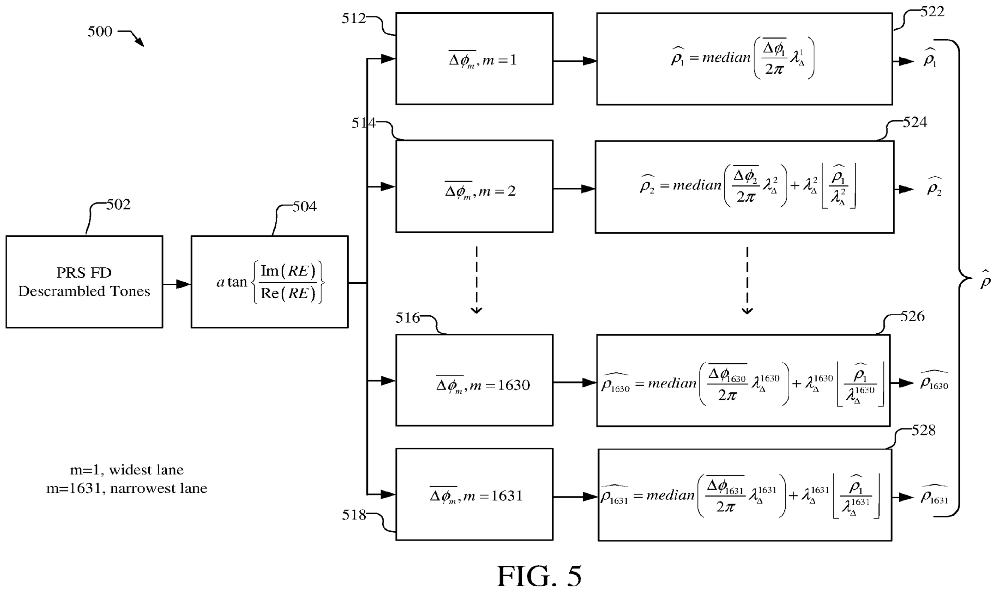

FIG. 5, by way of example, is a block diagram 500 illustrating a sequential search of distance between a receiving entity and transmitting entity in which the results from a wide lane combination of the carrier phase measurements are used in one or more subsequent searches. In block diagram 500, the range estimate from the wide lane combination of the carrier phase measurements (e.g., *m=*1 in this example) is used to resolve an integer ambiguity of one or more subsequent narrow lane combinations of the carrier phase measurements. The sequential search is performed for a plurality of positioning signals, e.g., from each base station 102, received by the UE 105. The positioning signals may be PRS, as illustrated in FIG. 2, or other reference signals used for positioning, such as CSI-RS, TRS, DMRS, etc. In the example illustrated in FIG. 5 there is assumed to 1632 carriers used in positioning signals so that for the widest lane $m=1$, and for the narrowest lane m=1631. It should be understood that while the widest lane is illustrated as $m=1$, if desired, the widest lane in the sequential search may be a different combination carrier phase measurements, e.g., $m>1$, which may be dependent on an initial approximation of the distance between the UE 105 and the base station 102.

In block 502, the positioning signal (PRS) FD descrambled tones are determined for each resource element (RE), e.g., as described by equations 2-5. At block 504, the carrier phase measurement of the descrambled REs may be determined, e.g., as described in equation 6.

As illustrated by blocks 512, 514, 516, and 518, and blocks 522, 524, 526, and 528, a distance estimate $\widehat{\rho_m}$ from each base station 102 to the UE 105 is determined using a sequential search of combinations of the carrier phase measurements from a wide lane to a narrow lane, where results from the wide lane combination of the carrier phase measurements is used in the sequential search.

For example, as illustrated by blocks 512, 514, 516, and 518, a phase difference $\Delta\phi_m$ may be determined each value of m ($m=1, 2, ... 1631$). In some implementations, a selected subset of carrier phase combinations, e.g., a subset of the values of $m$, may be used. Each carrier phase combination (value of m) may have multiple observations, and the determined phase difference may be an average phase difference $\overline{\Delta\phi_m}$ for all (or a subset of) observations for each carrier phase combination.

As illustrated by block 522, for the widest lane (e.g., $m=1$ in this example), an estimated range $\widehat{\rho_1}$ between the UE 105 and the base station 102 may be determined based on the phase differences $\overline{\Delta\phi_1}$. In some implementations, the estimated range may be determined as a median distance estimate from a plurality of the wide lane combinations, as follows:

$$\widehat{\rho_1} = median\left(\frac{\overline{\Delta\phi_1}}{2\pi}\lambda_\Delta^1\right). \qquad \text{eq. 10}$$

As illustrated by blocks 524, 526, and 528, each subsequent estimated range $\widehat{\rho_m}$ may be determined based on the phase difference $\Delta\phi_m$ and the estimated range for the wide lane, e.g., the estimated range $\widehat{\rho_1}$ may be used to resolve the integer ambiguity. For example, the integer ambiguity in subsequent estimated ranges may be resolved based on the widest lane (m=1), e.g., using a floor function, so that the subsequent estimated ranges (e.g., m>1) may be determined, as follows:

$$\widehat{\rho_m} = median\left(\frac{\overline{\Delta\phi_m}}{2\pi}\lambda_\Delta^m\right) + \lambda_\Delta^m \left\lfloor \frac{\widehat{\rho_1}}{\lambda_\Delta^m} \right\rfloor. \quad \text{eq. 11}$$

The final estimated range $\hat{\rho}$ may then be determined based on all of the phase differences $\widehat{\rho_m}$ where m=1, 2, ... 1631. There may be multiple ways that the final estimated range $\hat{\rho}$ may be determined. For example, the final estimated range $\hat{\rho}$ may be determined as the range that minimizes the mean square error (MSE) of all of the observations, e.g., $\hat{\rho} = MSE(\widehat{\rho_m})$. In another implementation, a median range estimate or an average range estimate may be determined from the observations, e.g., $\hat{\rho} = median(\widehat{\rho_m})$. In some implementations, an outlier rejection process may be used to reject range estimates that are outliers before selecting a range measurement that minimizes the MSE or determining the median or average range estimate.

Additionally, for multi-path, the phase measurement may include going from frequency domain into time domain and windowing around the interested path, before coming back to frequency domain to perform the phase calculations. As the number of multi-paths increase, it will be necessary to perform more frequency domain to time domain (with windowing) to frequency domain to perform the phase calculations, and hence requiring more processing capabilities.

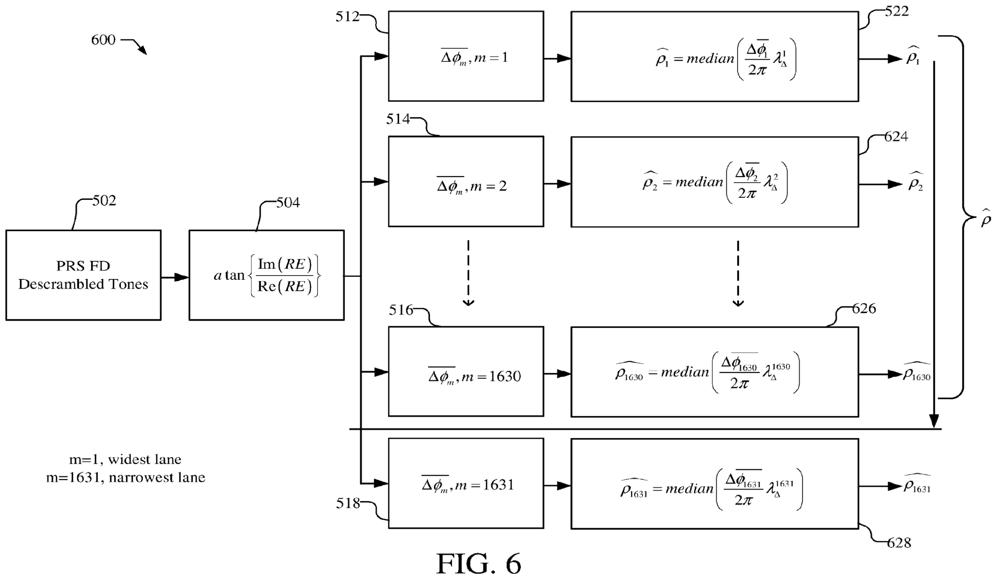

FIG. 6 is a block diagram 600 illustrating another example of a sequential search of distance between the receiving entity and transmitting entity in which the results from a wide lane combination of the carrier phase measurements are used in one or more subsequent searches. Block diagram 600 is similar to block diagram 500 shown in FIG. 5, but illustrates that the range estimate from the wide lane combination of the carrier phase measurements (e.g., $m=1$ in this example) is used to reduce the number of subsequent combinations of the carrier phase measurements in the sequential search.

As illustrated by blocks 512, 514, 516, and 518, and blocks 522, 624, 626, and 628, a distance estimate $\widehat{\rho_m}$ from each base station 102 to the UE 105 is determined using a sequential search of combinations of the carrier phase measurements from a wide lane to a narrow lane, where results from the wide lane combination of the carrier phase measurements is used in the sequential search. Blocks 512, 514, 516, and 518, are used to determine a phase difference $\Delta\phi_m$ (e.g., an average phase difference $\overline{\Delta\phi_m}$ for all (or a subset of) observations) for each carrier phase combination ($m$=1, 2, ... 1631), as discussed in FIG. 5.

As discussed in block diagram 500, block 522 in FIG. 6 may be used for the widest lane (e.g., $m$=1 in this example) to determine an estimated range $\widehat{\rho_1}$ (e.g., median distance estimate from a plurality of the wide lane combinations) between the UE 105 and the base station 102 based on the phase differences $\overline{\Delta\phi_1}$. The estimated range $\widehat{\rho_1}$ is used to reduce a number of subsequent combinations of the carrier phase measurements in the sequential search to combinations of the carrier phase measurements that are not affected by an integer ambiguity. For example, as illustrated in block 600, based on the estimated range $\widehat{\rho_1}$ it may be determined that integer ambiguity will not affect combination of carrier phase measurements until $m$=1631. Accordingly, as illustrated by line 602, the number of subsequent combinations of the carrier phase measurements in the sequential search may be restricted to combinations of the carrier phase measurements before line 602, i.e., combinations of the carrier phase measurements that are not affected by an integer ambiguity.

Thus, as illustrated by blocks 624, 626, and 628, because the sequential search is restricted to combinations of the carrier phase measurements that are not affected by an integer ambiguity, there is no need to formally resolve the integer ambiguity for each phase difference $\Delta\phi_m$. Thus, the subsequent estimated ranges (e.g., m>1) may be determined, as follows:

$$\widehat{\rho_m} = median\left(\frac{\overline{\Delta\phi_m}}{2\pi}\lambda_\Delta^m\right). \quad \text{eq. 12}$$

The final estimated range $\hat{\rho}$ may be determined based on, e.g., the MSE, mean, or average, of all of the observations that are not affected by an integer ambiguity. In some implementations, an outlier rejection process may be used to reject range estimates that are outliers before selecting a range measurement that minimizes the MSE or determining the median or average range estimate. It should be understood that phase differences $\Delta\phi_m$ and estimated ranges range $\widehat{\rho_m}$ in the sequential search for lanes below line 602, i.e., that are affected by an integer ambiguity, (illustrated as blocks 518 and 628) may not need to be calculated because they are not used to determine the final estimated range $\hat{\rho}$.

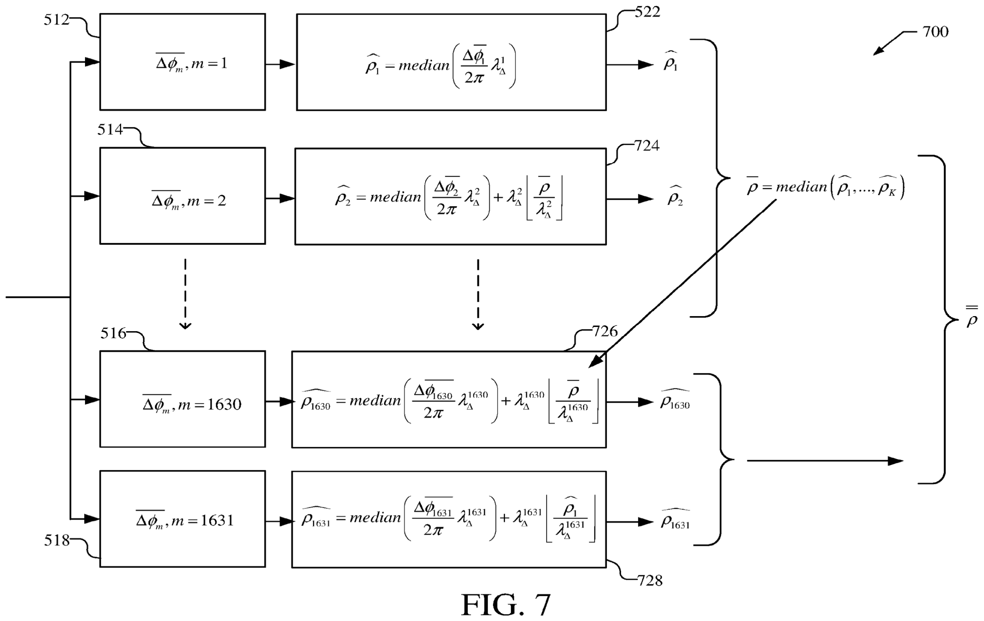

**FIG. 7** is a block diagram 700 illustrating another example of a sequential search of distance between the receiving entity and transmitting entity in which the results from a wide lane combination of the carrier phase measurements are used in one or more subsequent searches. Block diagram 700 is similar to block diagram 500 shown in FIG. 5 (with blocks 502 and 504 not shown in FIG. 7), but illustrates that the range estimate from a plurality of wide lane combinations of the carrier phase measurements is used to resolve the integer ambiguity of one or more subsequent narrow lane combinations of the carrier phase measurements.

As illustrated by blocks 512, 514, 516, and 518, and blocks 522, 724, 726, and 728, a distance estimate $\widehat{\rho_m}$ from each base station 102 to the UE 105 is determined using a sequential search of combinations of the carrier phase measurements from a wide lane to a narrow lane, where a plurality of wide lane combinations of the carrier phase measurements are used in each subsequent narrow lane combination of the carrier phase measurements is used to resolve the integer ambiguity.

Block 522 in FIG. 7 may be used for the widest lane (e.g., $m$=1 in this example) to determine an estimated range $\widehat{\rho_1}$ (e.g., median distance estimate from a plurality of the wide lane combinations) between the UE 105 and the base station 102 based on the phase differences $\overline{\Delta\phi_1}$. As illustrated by blocks 724, 726, and 728, each subsequent estimated range $\widehat{\rho_m}$ may be determined based on the phase difference $\Delta\phi_m$ and a combination (e.g., median, average, etc.) of the preceding wide lane combinations of estimated ranges ($\overline{\rho} = median(\widehat{\rho_1}, \ldots, \widehat{\rho_K})$, where K = m-1) to resolve the integer ambiguity. For example, the integer ambiguity in subsequent estimated ranges may be resolved based on the median estimated range for preceding wide lane combinations, e.g., using a floor function, so that the subsequent estimated ranges (e.g., m>1) may be determined, as follows:

$$\widehat{\rho_m} = median\left(\overline{\frac{\Delta\phi_m}{2\pi}}\lambda_\Delta^m\right) + \lambda_\Delta^m \left\lfloor \frac{\overline{\rho}}{\lambda_\Delta^m} \right\rfloor. \text{ eq. 11}$$

The final estimated range $\overline{\rho}$ may then be determined based on all of the phase differences $\widehat{\rho_m}$ where m=1, 2, ... 1631. As discussed in FIG. 5, there may be multiple ways that the final estimated range $\overline{\rho}$ may be determined, including minimizing the MSE, median, or average, of all of the observations $\widehat{\rho_m}$. In some implementations, an outlier rejection process may be used to reject range estimates that are outliers before selecting a range measurement that minimizes the MSE or determining the median or average range estimate.

During a conventional positioning session, positioning assistance data is provided to the UE, e.g., by the location server, base station, or a SL UE, that is used to assist the UE in detecting and decoding positioning signals. For example, in an RSTD positioning method, a UE may be provided with an expected RSTD and expected uncertainty in the positioning assistance data. For example, as defined in the LPP specification, the nr-DL-PRS-ExpectedRSTD field provided in NR PRS assistance data indicates the RSTD value that the UE is expected to measure between a serving TRP and the reference TRP. The expected RSTD provided to the UE takes into account the expected propagation time difference as well as transmit time difference of PRS positioning occasions between the two TRPs. The expected RSTD uncertainty provided to a UE in nr-DL-PRS-ExpectedRSTD-Uncertainty field in the positioning assistance data indicates the uncertainty in nr-DL-PRS-ExpectedRSTD value. The uncertainty is related to the location server's a-priori estimate of the UE location. Together the nr-DL-PRS-ExpectedRSTD and nr-DL-PRS-ExpectedRSTD-Uncertainty define the search window for the UE.

The expected RSTD and expected uncertainty defined the LPP specification are not useful for directly estimating the distance between a UE and the serving TRP or the neighboring TRP. It would be useful for carrier phase based positioning, however, for the UE 105 to receive information that may be used to assist in defining the search space to determine the distance between the UE 105 and a transmitting entity, e.g., TRP (base station 102) or a sidelink UE.

Accordingly, in some implementations, the UE 105 may receive assistance data from location server 172 or other network entity (e.g., base station or sidelink UE) that includes an estimated trip time (or equivalently, the expected cycle integer value) between the UE 105 and a transmitting entity, e.g., TRP (base station 102) or a sidelink UE. The assistance data may further include the expected trip time uncertainty. The assistance data may further include integrity information to characterize errors in the expected trip time (or expected integer cycle) and expected trip time uncertainty, such as at least one of a variance of the expected trip time, a variance of the expected trip time uncertainty, or a combination thereof, that is related to the expected trip time may be useful for carrier phase based positioning. The assistance data including the expected trip time (or expected integer cycle), expected trip time uncertainty, and (optional) integrity information may be provided on demand in response to a request for assistance data, using unicast assistance data delivery or broadcast delivery.

The estimated trip time is equivalent to an estimated integer cycle value and thus may be provided by a location server 172 (or base station or sidelink UE) to the UE 105 as a distance value or a cycle value. A cycle value provided to the UE 105 may be based on an expected lane combination, an expected subcarrier spacing, an expected wavelength, or any combination thereof.

The estimated trip time (or integer cycle value) may be used to assist in resolving the integer ambiguity. For example, the estimated trip time (or integer cycle value) may be used to assist in defining the search space to find the distance between the UE 105 and the transmitting entity, e.g., TRP (base station 102) or a sidelink UE. The estimated trip time, for example, may be used in the sequential search of distance between the UE 105 and the base station 102 discussed above. For example, the estimated trip time may be used as a seed value to determine the initial wide lane combination of the carrier phase measurements (e.g., initial $m$ value) for the sequential search of distance between the UE 105 and the base station 102. The UE may further use the estimated trip time (or integer cycle) and the expected uncertainty to determine an uncertainty for the integer ambiguity.

In some implementations, the expected trip time (or expected integer cycle) may be provided to the UE 105 for each transmitting entity, e.g., TRP (base station 102) or a sidelink UE. In other implementations, the expected trip time (or expected integer cycle) may be provided to the UE 105 for only a single transmitting entity, e.g., TRP (base station 102) or a sidelink UE, if the UE 105 also receives or has already received the expected RSTD and expected RSTD uncertainty for that transmitting entity with respect to other transmitting entity, e.g., TRP (base station 102) or a sidelink UE. For example, if the UE 105 has the expected trip time (or expected integer cycle) and expected trip time uncertainty for only the serving TRP, the expected RSTD and expected RSTD uncertainty may be used to define the carrier phase based positioning search space for the neighbor TRPs. Additionally or alternatively, if the UE 105 has the expected trip time (or expected integer cycle) and expected trip time uncertainty for only a single transmitting entity, the UE 105 may use a RRC Time Advance (TA) to define the carrier phase based positioning search space for other transmitting entities.

The UE 105 may further receive integrity information to characterize errors in the expected trip time (or expected integer cycle) and expected trip time uncertainty, such as the variance in the expected trip time (or expected integer cycle) and variance in the expected trip time uncertainty.

By way of example, Table 1 illustrates an example of positioning assistance data in ASN.1 format, that includes the nr-DL-PRS-ExpectedRSTD and nr-DL-PRS-ExpectedRSTD-Uncertainty and an expected trip time (or expected integer cycle) (ExpectedTripTime) and expected trip time uncertainty (ExpectedTrpTimeUncertainty), for a TRP and expected trip time integrity information (ExpectedTripTime-Variance and ExpectedTrpTimeUncertainty-Variance).

```
NR-DL-PRS-ASSISTANCEDATAPERTRP-r16      : : = SEQUENCE {

        dl-PRS-ID-r16                   INTEGER (0 . . 255),

        nr-PhysCellID-r16               NR-PhysCellID-r16      OPTIONAL,      Need ON,

        nr-CellGlobalID-r16             NCGI-r15               OPTIONAL,      Need ON,

        nr-ARFCN-r16                    ARFCN-ValueNR-15       OPTIONAL,      Cond
NotSameasRefServ,

        nr-DL-PRS-SFNO-Offset-r16       NR-DL-PRS-SFNO-Offset- r16

        nr-DL-PRS-ExpectedRSTD-r16      INTEGER (-3841 . . 3841),

        nr-DL-PRS-ExpectedRSTD-Uncertainty-r16

                                        INTEGER (0 . . 246),

        ExpectedTripTime                INTEGER (-3841 . . 3841),

        ExpectedTripTimeUncertainty     INTEGER (0 . . 246),

        ExpectedTripTime-Variance       INTEGER (0 . . 246),

        ExpectedTripTimeUncertainty-Variance

                                        INTEGER (0 . . 246),

        nr-DL-PRS-Info-r16              NR-DL-PRS-Info-r16,

        . . .

    }
```

TABLE 1

During the sequential search of distance between the UE 105 and a TRP (base station 102) from a wide lane to narrow lane, the UE 105 may detect a cycle slip (jump) in the carrier phase from the TRP. A cycle slip is a discontinuity in a receiver's phase lock on the TRP signal. A cycle slip may be caused, for example, by a power loss, a very low signal-to-noise ratio, a failure of the receiver software, a malfunctioning TRP oscillator, etc. Cycle slips may be further caused by environmental conditions, such as obstructions, such as buildings, trees, etc., that blocks the signal from being tracked by the receiver. The UE 105 may move into and out of blockage conditions causing the signal from the TRP may be temporarily blocked causing a cycle slip.

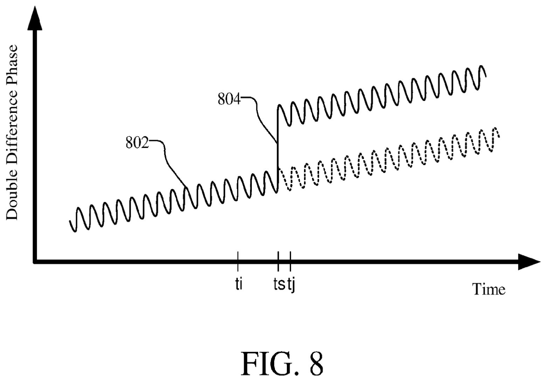

FIG. 8A, by way of example, illustrates an example of a cycle slip 804 (jump) in a double difference phase 802 of a carrier signal measured by a receiver (e.g., the UE 105 or base station 102) over time. As illustrated, in FIG. 8A, during a first time e.g., up to and including time ti, the carrier phase is tracked. At a time ts, the phase 802 of the carrier signal suffers a cycle slip 804, which may be caused by power loss, blockage conditions, etc. After the cycle slip 804 occurs, the tracking of the carrier phase may resume, e.g. at time tj, but with a discontinuity with respect to the carrier phase prior to the cycle slip 804. A cycle slip 804 may be detected, e.g., based on the detection of a power cycle of the carrier phase tracking loop or based on the detection of a loss of tracking of the carrier phase due to blocked positioning signals, etc.

Coded pseudorange measurements do not suffer from integer cycle ambiguity and accordingly are not as affected by cycle slips as carrier phase measurements. Carrier phase positioning accuracy suffers if cycle slips are not detected and repaired to resolve the integer cycle ambiguity. A cycle slip, for example, causes the critical component for successful carrier phase positioning, a resolved integer cycle ambiguity (e.g., N in equation 1), to become instantly unknown again, i.e., lock on the carrier phase is lost. Accordingly, for carrier phase based positioning, when a cycle slip occurs, it is necessary to resolve the integer cycle ambiguity for proper positioning.

A receiving entity (e.g., the UE 105 or base station 102) may include the capability to detect a cycle slip (jump) during carrier phase based positioning. When a cycle slip is detected by the receiving entity, it may be useful to report the cycle slip to a location server 172 (or the sidelink UE). For example, by identifying positioning signals (e.g., PRS) that suffer cycle slips, the location server 172 (or sidelink UE) may filter out and not schedule those positioning signals (e.g., PRS) for carrier phase based positioning. Further, if the receiving entity (e.g., UE 105) reports its location when the cycle slip is detected for a positioning signal, the location server 172 (or the sidelink UE) may filter out and not schedule the positioning signal when UEs are at that location.

Thus, in some implementations, after a cycle slip is detected, the receiving entity (e.g., UE 105 or base station 102) may send a message to a network entity (e.g., the location server 172, base station 102, or sidelink UE) with an indication of the cycle slip in the DL positioning signal received by the UE 105, UL positioning signal received by the base station 102, or SL positioning signal received by the UE 105. In some implementations, the receiving entity (e.g., the UE 105 or base station 102) may receive a request, e.g., from the location server 172, to report an indication of cycle slip, and the report of a cycle slip is sent in response. An indication of whether a cycle slip occurred may be associated with each positioning signal, such as for each PRS resource, each PRS resource set, each TRP (base station 102), or a combination thereof. The cycle slip indication, for example, may be provided in a field in a report (e.g., location information report) to the network entity. The indication of the cycle slip may be provided using Boolean logic (e.g., 0 or 1) to indicate whether a cycle slip was detected. In some implementations, the indication of the cycle slip may be provided using a "soft report" ([0,0.1, ..., 1]) to indicate the magnitude or "amount" of the cycle slip, the probability or likelihood that a cycle slip has occurred, or a combination thereof (e.g., 5 cyclic shifts with a probability 80%).

Once a cycle slip has been detected and reported to the location server 172 (or sidelink UE), the location server 172 (or sidelink UE) may filter out and not schedule those positioning signals (e.g., PRS) for carrier phase based positioning. Additionally, the location server 172 determining a likelihood of cycle slip of the carrier phase occurring for positioning signals (e.g., for each PRS resource, each PRS resource set, each TRP, or a combination thereof) based on the report received from the UE. The location server 172 may send assistance data to one or more UEs that include an indication of the likelihood of cycle slip of the carrier phase occurring for the positioning signals (e.g., for each PRS resource, each PRS resource set, each TRP, or a combination thereof). By way of example, the assistance data may provide an indication of cycle slip is likely using Boolean logic (e.g., 0 or 1) has occurred or is likely to occur for the positioning signals. In some implementations, the indication of the likelihood cycle slip may be provided using a "soft report" ([0,0.1, ..., 1]) to indicate the magnitude or "amount" of the cycle slip, the probability or likelihood that a cycle slip has occurred, or a combination thereof (e.g., 5 cyclic shifts with a probability 80%). The assistance data may provide an indication of cycle slip for each positioning signal (for each PRS resource, each PRS resource set, each TRP, or a combination thereof). The UEs that receive assistance data with an indication of the likelihood of a cycle slip for the positioning signals may perform carrier phase measurements of positioning signals, e.g., PRS resources from the plurality of TRPs, based on the likelihood of cycle slip in the carrier phases of the positioning signals. For example, the UEs may not perform carrier phase measurements for positioning signals with a likelihood of cycle slip or with a probability or likelihood that exceeds a predetermined threshold.

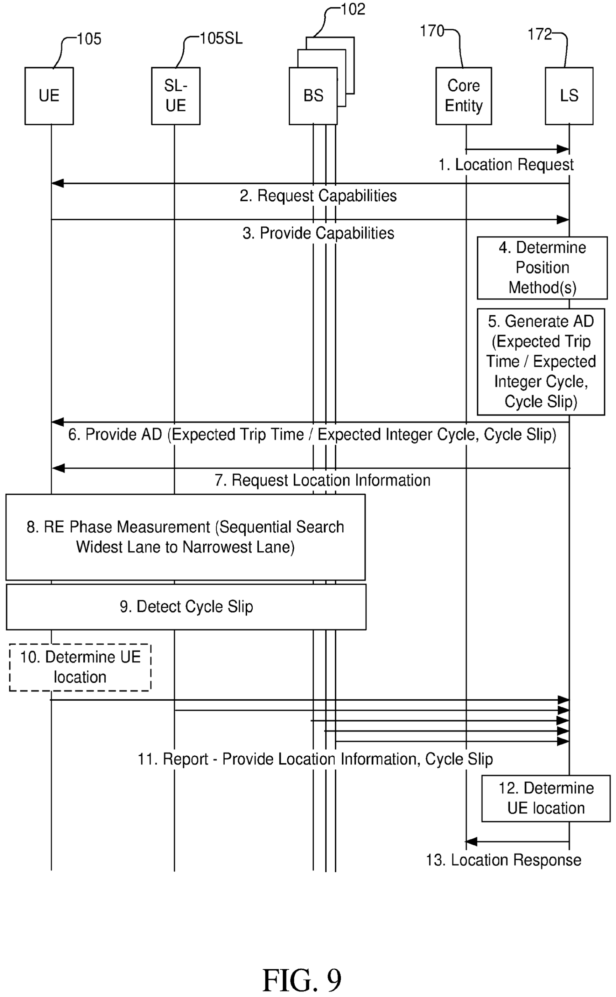

**FIG. 9** shows a signal flow 900 of a procedure that may be used to support carrier phase based positioning as discussed herein. The signal flow 900 is illustrated as including UE 105, a sidelink UE (SL-UE) 105SL, base stations 102, a location server 172 as well a core entity 170. In some implementations, for example, the location server 172 may be an LMF, while the core network entity 170 may be an AMF, and the base stations 102 may be gNBs, or in another implementation, the location server 172 may be an E-SMLC, the core network entity 170 may be an MME, and the base stations 102 may be eNBs. In some implementations, the SL-UE 105SL may not be present, while in other implementations, multiple SL-UEs may be used. In some implementations, carrier phase based positioning may be performed using DL positioning signals from base stations 102 that are measured by the UE 105, or using UL positioning signals from the UE 105 that are measured by the base stations 102, or using SL positioning signals from the SL-UE 105SL that are measured by the UE 105 and/or SL positioning signals from the UE 105 that are measured by the SL-UE 105SL, or any combination thereof. It should be understood that signal flow 900 may include additional signals/messages and actions or may include fewer signals/messages.

At stage 1 in FIG. 9, location server 172 may receive a location request for UE 105 from core network entity 170. For example, a client may send a location request for UE 105 that is forward to core network entity 170 via one or more intermediary entities (not shown in FIG. 9), which in turn sends the request to location server 172 at stage 1.

At stage 2 in FIG. 9, location server 172 sends an LPP Request Capabilities message to UE 105 via the serving core network entity 170 and serving base station 102 to request the positioning capabilities of UE 105. The Request Capabilities message may indicate the type of capabilities requested, such as capabilities to perform carrier phase based positioning.

At stage 3, the UE 105 returns an LPP Provide Capabilities message to location server 172 comprising the positioning capabilities of UE 105. UE 105, for example, may include its capability to support carrier phase based positioning and may identify supporting capabilities, such as the capability of the UE 105 to perform sequential searches of combinations of carrier phase measurements from a wide lane to a narrow lane, ability to detect cycle slips, etc.

At stage 4, location server 172 determines one or more position methods with which to obtain a location estimate for UE 105. The position methods may be determined based on the positioning capabilities of UE 105 received at stage 3, for example, carrier phase based positioning using DL positioning signals, UL positioning signals, SL positioning signals or a combination thereof, and UE based positioning or UE assisted positioning.

At stage 5, the location server 172 may generate positioning assistance data (AD) for carrier phase based positioning. As discussed previously, the AD may be generated based on previously acquired information from one or more base stations 102, SL-UE 105SL, and UE 105. The AD may include expected trip time (expected integer cycles) between the UE and each base station 102, expected trip time uncertainty, integrity information (e.g., variance of the expected trip time, variance of the expected trip time uncertainty, or a combination thereof), the likelihood of cycle slips for any positioning signals (e.g., for each PRS resource, PRS resource set, base station or a combination thereof) based on previously received cycle slip reports from the UE 105 or other UEs, locations of base stations, etc. The expected integer cycle, if provided, may be based on at least one of an expected lane combinations of the carrier phase measurements, expected subcarrier spacing, expected wavelength, or a combination thereof. The AD may further include information relative to non-carrier phase based positioning methods, such as an expected RSTD, expected RSTD uncertainty, TA, etc. The location server 172 may provide a measurement period or reporting time for determining the distance estimate from each base station to the UE, e.g., based on an expected number of lane combinations used in a sequential search of combinations of the CP measurements. In some implementations, the AD may be generated (and sent in stage 6) in response to an on-demand AD request, or may be unicast or broadcast. In some implementations, the SL-UE 105SL may also or alternatively generate similar assistance data, e.g., for SL positioning signals. In some implementations, one or more aspects of the AD may be generated by the base stations 102.

At stage 6, the location server 172 provides the AD to the UE 105, e.g., by sending the AD as part of an LPP Provide Assistance Data message to UE 105. The AD may be provided in response to an AD request (not shown), or may be unicast or broadcast. In some implementations, the AD generated by the SL-UE 105SL may also or alternatively be sent to the UE 105, e.g., for SL positioning signals. In some implementations, AD generated by the base stations 102 may also be sent to the UE 105.

At stage 7, the location server 172 may send an LPP Request Location Information message to the UE 105 to request the UE 105 location. The message may indicate that the UE 105 is to generate and provide the location server 172 with an estimated location determined using carrier phase based positioning, and/or to provide the carrier phase based positioning measurements of DL positioning signals and/or SL positioning signals to the location server. In a different message (or the same message), the location server 172 may instruct the UE 105 to send UL positioning signals to the base stations 102 and may instruct the base stations to perform carrier phase based positioning measurements on the UL positioning signals.

At stage 8, one or more of the receiving entities, e.g., UE 105, SL-UE 105SL, and base stations 102, performs the requested carrier phase measurements of each positioning signal, e.g., DL positioning signals, SL positioning signals, or UL positioning signals, from a transmitting entity, e.g. base stations 102, SL-UE 105SL, or UE 105, respectively. For example, the carrier phase observation on descrambled REs, e.g., as discussed in reference to equations 2-6 may be generated. In some implementations, the receiving entity may disregard carrier phase based observations for positioning signals where a cycle slip was indicated as being likely in the assistance data. In some implementations, the receiving entity, e.g., the UE 105, SL-UE 105SL, or base stations 102, may determine a distance estimate between the transmitting entity and the receiving entity based on at least one of the expected trip time or the expected integer cycle, expected trip time uncertainty, and integrity information, for the carrier phase of each positioning signal, e.g., received in assistance data in stage 5. In some implementations, the non-carrier phase information, such as an expected RSTD and/or TA may be used along with the expected trip time or the expected integer cycle for a single transmitting entity to determine the expected trip time or the expected integer cycle for the carrier phase of the positioning signal for one or more other transmitting entities. The expected trip time or the expected integer cycle for the carrier phase of the positioning signal may define a search space to determine the distance estimate from each transmitting entity to the receiving entity. The distance estimate may then be used to determine an uncertainty for an integer ambiguity in the carrier phase of the positioning signal.

In some implementations, the receiving entity, e.g., the UE 105, SL-UE 105SL, or base stations 102, may determine a distance estimate between the transmitting entity and the receiving entity using a sequential search of combinations of the carrier phase measurements from a wide lane to a narrow lane, using the result from the wide lane combination in the sequential search, as discussed in reference to FIGs. 5-7. For example, the distance estimate from the wide lane may be used to resolve an integer ambiguity of one or more subsequent narrow lane combinations of carrier phase measurements, e.g., as discussed in FIG. 5. In another example, the distance estimate from the wide lane combination of the carrier phase measurements may be used to reduce the number of subsequent combinations of carrier phase measurements in the sequential search to combinations of carrier phase measurements that are not affected by an integer ambiguity, e.g., as discussed in FIG. 6. In another example, a median distance estimate is generated from a plurality of wide lane combinations, which is used to resolve the integer ambiguity of one or more subsequent narrow lane combinations of the carrier phase measurements, and the final distance estimate may be determined based on a combination of the median distance estimate from the plurality of wide lane combinations of the carrier phase measurements and one or more additional median distance estimate from the one or more subsequent narrow lane combinations of the carrier phase measurements, e.g., as discussed in FIG. 7. Each lane combination of the carrier phase measurements (e.g., $m$ value) may include a plurality of combinations of the carrier phase measurements. The distance estimate to each transmitting entity may be determined based on at least one of a minimization of MSE of distance estimates from a plurality of lane combinations of the carrier phase measurements, a median distance estimate determined from the distance estimates from the plurality of lane combinations of the carrier phase measurements, an average distance estimate determined from the distance estimates from a plurality of lane combinations of the carrier phase measurements, or any combination thereof. In some implementations, outlier distance estimates from one or more lane combinations of the carrier phase measurements may be rejected prior to determining the distance estimate.

In stage 9, the one or more of the receiving entities, e.g., UE 105, SL-UE 105SL, and base stations 102, may detect the presence of a cycle slip in the carrier phase for one or more positioning signals. For example, the receiving entity may determine whether a cycle slip occurs in each positioning signal, e.g., each PRS resource from each base station 102.

At stage 10, which is optional, UE 105 may determine a location estimate for UE 105 using the distance estimates to each transmitting entity (e.g., base stations 102 and/or SL-UE 105SL) obtained using carrier phase based positioning in stage 8. The location estimate of the UE 105, for example, may be generated based on the locations of the transmitting entities, received by UE 105 in assistance data at stage 6, and the distance estimates to each transmitting entity, using multilateration.

At stage 11, the one or more of the receiving entities, e.g., UE 105, SL-UE 105SL, and base stations 102, may provide location information to the location server 172, e.g., via the core network entity 170. The UE 105, for example, may send a provide location information message that includes the determined location from stage 10, if determined. The receiving entities may send one or more measurements used for determining the location of the UE 105, e.g., determined distances between the transmitting entity and receiving entity, one or more combinations of the carrier phase measurements, or the carrier phase measurements. Additionally, the one or more of the receiving entities may provide an indication of any detected cycle slips in the carrier phase of the positioning signals, e.g., detected in stage 9. The indication of whether a cycle slip occurred may be sent for each positioning signal from each transmitting entity, e.g., each PRS resource from each base station 102. The indication of the cycle slip may be provided in a field that indicates whether a cycle slip occurred or not or in a field that indicates the amount and/or the probability (likelihood) that a cycle slip has occurred, or both. When the location server 172 receives a report of a cycle slip for a positioning signal (PRS resource from a base station), the location server 172 may avoid scheduling that positioning signal for positioning in positioning sessions. Alternatively, the location server 172 may provide an indication of the likelihood of cycle slip of a carrier phase for positioning signals in assistance data, e.g., as discussed in stage 5. In implementations where the UE 105 receives SL positioning signals from the SL UE 105SL, the UE 105 may provide the indication of the cycle slip to the SL UE 105SL. When the SL UE 105SL receives a report of a cycle slip for a positioning signal (SL PRS), the SL UE 105SL may avoid scheduling that positioning signal for positioning in positioning sessions or may provide an indication of the likelihood of cycle slip of a carrier phase for positioning signals in assistance data, e.g., as discussed in stage 5.

At stage 12, the location server 172 may determine (or verify) the UE location using the received location information from the one or more of the receiving entities, e.g., UE 105, SL-UE 105SL, and base stations 102 using distance estimates between each transmitting and each receiving entity using carrier phase based positioning and the locations of the transmitting entities using multilateration. In implementations, where the location server receives carrier phase measurements in stage 11, such as one or more combinations of the carrier phase measurements or the carrier phase measurements, the location server 172 may determine a distance estimate between the transmitting entity and the receiving entity in a manner such as discussed in stage 8. For example, the location server 172 may use a sequential search of combinations of the carrier phase measurements from a wide lane to a narrow lane, using the result from the wide lane combination in the sequential search, as discussed in reference to FIGs. 5-7. For example, the distance estimate from the wide lane may be used to resolve an integer ambiguity of one or more subsequent narrow lane combinations of carrier phase measurements, e.g., as discussed in FIG. 5. In another example, the distance estimate from the wide lane combination of the carrier phase measurements may be used to reduce the number of subsequent combinations of carrier phase measurements in the sequential search to combinations of carrier phase measurements that are not affected by an integer ambiguity, e.g., as discussed in FIG. 6. In another example, a median distance estimate is generated from a plurality of wide lane combinations, which is used to resolve the integer ambiguity of one or more subsequent narrow lane combinations of the carrier phase measurements, and the final distance estimate may be determined based on a combination of the median distance estimate from the plurality of wide lane combinations of the carrier phase measurements and one or more additional median distance estimate from the one or more subsequent narrow lane combinations of the carrier phase measurements, e.g., as discussed in FIG. 7. Each lane combination of the carrier phase measurements (e.g., $m$ value) may include a plurality of combinations of the carrier phase measurements. The distance estimate to each transmitting entity may be determined based on at least one of a minimization of MSE of distance estimates from a plurality of lane combinations of the carrier phase measurements, a median distance estimate determined from the distance estimates from the plurality of lane combinations of the carrier phase measurements, an average distance estimate determined from the distance estimates from a plurality of lane combinations of the carrier phase measurements, or any combination thereof. In some implementations, outlier distance estimates from one or more lane combinations of the carrier phase measurements may be rejected prior to determining the distance estimate.

At stage 13, location server 172 returns the UE location to core network entity 170 which may in turn return the location to the external client via one or more intermediary entities (not shown in FIG. 9).

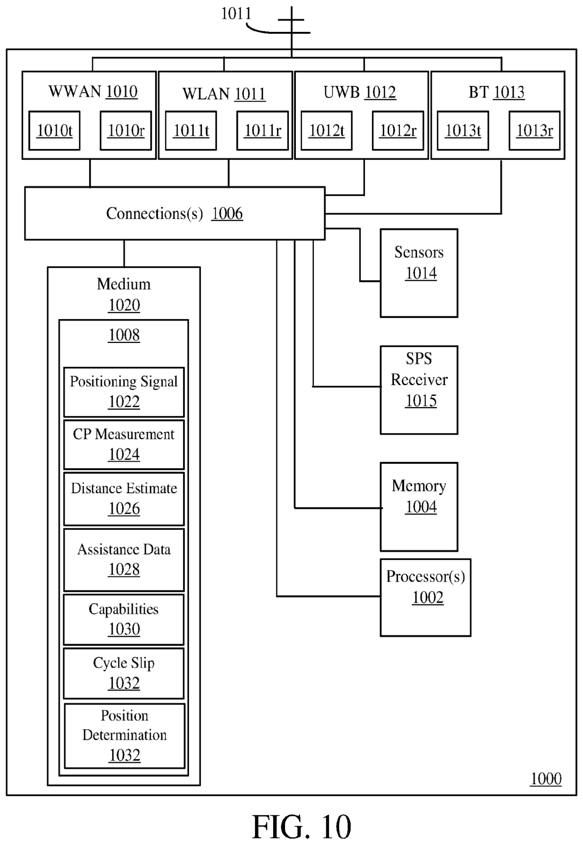

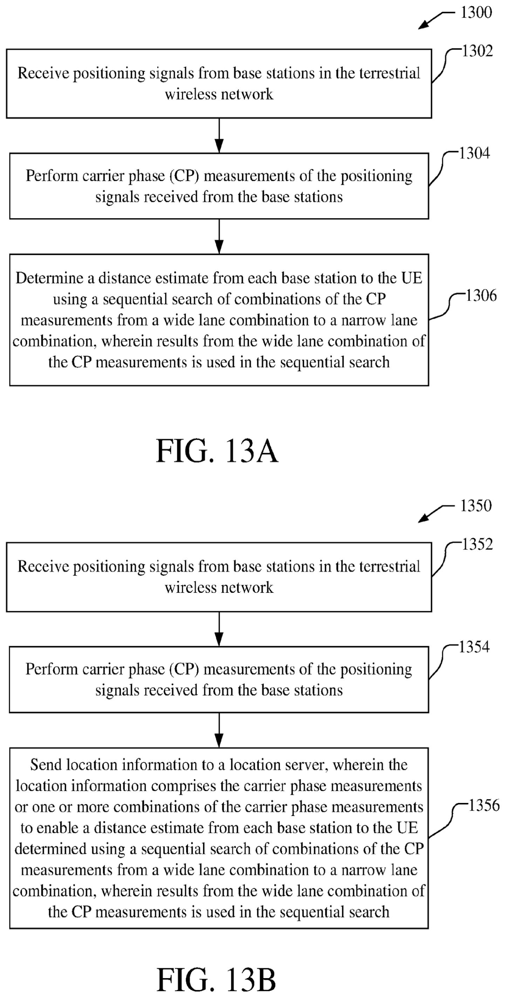

**FIG. 10** shows a schematic block diagram illustrating certain exemplary features of a UE 1000, e.g., which may be UE 105 shown in FIGs. 1, 3, and 9, and supports carrier phase positioning of the UE in a terrestrial wireless network, as described herein. The UE 1000, for example, may perform the signal flow 900 shown in FIG. 9 and the process flows 1300, 1500, 1700, and 2100 shown in respective FIGs. 13, 15, 17, and 21, and accompanying techniques as discussed herein. The UE 1000 may include, for example, one or more processors 1002, memory 1004, an external interface such as at least one wireless transceivers (e.g., wireless network interface) illustrated as WWAN transceiver 1010, WLAN transceiver 1011, an Ultra-Wideband (UWB) transceiver 1012 and a Bluetooth (BT) transceiver 1013, SPS receiver 1015, and one or more sensors 1014, which may be operatively coupled with one or more connections 1006 (e.g., buses, lines, fibers, links, etc.) to non-transitory computer readable medium 1020 and memory 1004. The SPS receiver 1015, for example, may receive and process SPS signals from satellite vehicles. The one or more sensors 1014, for example, may be an inertial measurement unit (IMU) that may include one or more accelerometers, one or more gyroscopes, a magnetometer, etc. The UE 1000 may further include additional items, which are not shown, such as a user interface that may include e.g., a display, a keypad or other input device, such as virtual keypad on the display, through which a user may interface with the UE. In certain example implementations, all or part of UE 1000 may take the form of a chipset, and/or the like.

The UE 1000 may include at least one wireless transceiver, such as wireless transceiver 1010 for a WWAN communication system and wireless transceiver 1011 for a WLAN communication system, UWB transceiver 1012 for a UWB communication system, BT transceiver 1013 for a Bluetooth communication system, or a combined transceiver for any of WWAN, WLAN, UWB, and BT. The WWAN transceiver 1010 may include a transmitter 1010t and receiver 1010r coupled to one or more antennas 1009 for transmitting (e.g., on one or more uplink channels and/or one or more sidelink channels) and/or receiving (e.g., on one or more downlink channels and/or one or more sidelink channels) wireless signals and transducing signals from the wireless signals to wired (e.g., electrical and/or optical) signals and from wired (e.g., electrical and/or optical) signals to the wireless signals. The WLAN transceiver 1011 may include a transmitter 1011t and receiver 1011r coupled to one or more antennas 1009 or to separate antennas, for transmitting (e.g., on one or more uplink channels and/or one or more sidelink channels) and/or receiving (e.g., on one or more downlink channels and/or one or more sidelink channels) wireless signals and transducing signals from the wireless signals to wired (e.g., electrical and/or optical) signals and from wired (e.g., electrical and/or optical) signals to the wireless signals. The UWB transceiver 1012 may include a transmitter 1012t and receiver 1012r coupled to one or more antennas 1009 or to separate antennas, for transmitting (e.g., on one or more uplink channels and/or one or more sidelink channels) and/or receiving (e.g., on one or more downlink channels and/or one or more sidelink channels) wireless signals and transducing signals from the wireless signals to wired (e.g., electrical and/or optical) signals and from wired (e.g., electrical and/or optical) signals to the wireless signals. The BT transceiver 1013 may include a transmitter 1013t and receiver 1013r coupled to one or more antennas 1009 or to separate antennas, for transmitting (e.g., on one or more uplink channels and/or one or more sidelink channels) and/or receiving (e.g., on one or more downlink channels and/or one or more sidelink channels) wireless signals and transducing signals from the wireless signals to wired (e.g., electrical and/or optical) signals and from wired (e.g., electrical and/or optical) signals to the wireless signals. The transmitters 1010t, 1011t, 1012t, and 1013t may include multiple transmitters that may be discrete components or combined/integrated components, and/or the receivers 1010r, 1011r, 1012r, and 1013r may include multiple receivers that may be discrete components or combined/integrated components. The WWAN transceiver 1010 may be configured to communicate signals (e.g., with base stations and/or one or more other devices) according to a variety of radio access technologies (RATs) such as 10G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 3GPP LTE-V2X (PC5), etc. New Radio may use mm-wave frequencies and/or sub-6GHz frequencies. The WLAN transceiver 1011 may be configured to communicate signals (e.g., with access points and/or one or more other devices) according to a variety of radio access technologies (RATs) such as 3GPP LTE-V2X (PC5), IEEE 1002.11 (including IEEE 1002.11p), WiFi, WiFi Direct (WiFi-D), Zigbee etc. The UWB transceiver 1012 may be configured to communicate signals (e.g., with access points and/or one or more other devices) according to a variety of radio access technologies (RATs) such as personal area network (PAN) including IEEE 802.15.3, IEEE 802.15.4, etc. The BT transceiver 1013 may be configured to communicate signals (e.g., with access points and/or one or more other devices) according to a variety of radio access technologies (RATs) such as a Bluetooth® network. The transceivers 1010 1011, 1012, and 1013 may be communicatively coupled to a transceiver interface, e.g., by optical and/or electrical connection, which may be at least partially integrated with the transceivers 1010, 1011, 1012, 1013.

In some embodiments, UE 1000 may include antenna 1009, which may be internal or external. UE antenna 1009 may be used to transmit and/or receive signals processed by wireless transceivers 1010, 1011, 1012, 1013. In some embodiments, UE antenna 1009 may be coupled to wireless transceivers 1010, 1011, 1012, 1013. In some embodiments, measurements of signals received (transmitted) by UE 1000 may be performed at the point of connection of the UE antenna 1009 and wireless transceivers 1010, 1011, 1012, 1013. For example, the measurement point of reference for received (transmitted) RF signal measurements may be an input (output) UE of the receiver 1010r (transmitter 1010t) and an output (input) UE of the UE antenna 1009. In a UE 1000 with multiple UE antennas 1009 or antenna arrays, the antenna connector may be viewed as a virtual point representing the aggregate output (input) of multiple UE antennas.

The one or more processors 1002 may be implemented using a combination of hardware, firmware, and software. For example, the one or more processors 1002 may be configured to perform the functions discussed herein by implementing one or more instructions or program code 1008 on a non-transitory computer readable medium, such as medium 1020 and/or memory 1004. In some embodiments, the one or more processors 1002 may represent one or more circuits configurable to perform at least a portion of a data signal computing procedure or process related to the operation of UE 1000.

The medium 1020 and/or memory 1004 may store instructions or program code 1008 that contain executable code or software instructions that when executed by the one or more processors 1002 cause the one or more processors 1002 to operate as a special purpose computer programmed to perform the techniques disclosed herein. As illustrated in UE 1000, the medium 1020 and/or memory 1004 may include one or more components or modules that may be implemented by the one or more processors 1002 to perform the methodologies described herein. While the components or modules are illustrated as software in medium 1020 that is executable by the one or more processors 1002, it should be understood that the components or modules may be stored in memory 1004 or may be dedicated hardware either in the one or more processors 1002 or off the processors.

A number of software modules and data tables may reside in the medium 1020 and/or memory 1004 and be utilized by the one or more processors 1002 in order to manage both communications and the functionality described herein. It should be appreciated that the organization of the contents of the medium 1020 and/or memory 1004 as shown in UE 1000 is merely exemplary, and as such the functionality of the modules and/or data structures may be combined, separated, and/or be structured in different ways depending upon the implementation of the UE 1000.

The medium 1020 and/or memory 1004 may include a positioning signal module 1022 that when implemented by the one or more processors 1002 configures the one or more processors 1002 to receive positioning signals from transmitting entities, via the external interface including one or more of wireless transceivers 1010, 1011, 1012, and 1013. The transmitting entities, for example, may be base stations, sidelink UEs, or a combination thereof, and the positioning signals may be DL positioning signals or SL positioning signals, or a combination thereof. The positioning signals, for example, may be DL PRS or SL PRS, including PRS resources and PRS resource sets from one or more TRPs. The one or more processors 1002, for example, may be configured to determine the positioning signal (PRS) FD descrambled tones for each resource element (RE), e.g., as described by equations 2-5.

The medium 1020 and/or memory 1004 may include a CP measurement module 1024 that when implemented by the one or more processors 1002 configures the one or more processors 1002 to perform carrier phase measurements of received positioning signals. The one or more processors 1002, for example, may be configured to measure the carrier phase of the descrambled REs, e.g., as described in equation 6. In some implementations, the one or more processors 1002 may be configured to measure carrier phase of positioning signals based on a received likelihood of cycle slip in the positioning signals, e.g., received in assistance data. For example, the one or more processors 1002 may be configured to not measure the carrier phase of positioning signals that are likely to suffer a cycle slip, e.g., based on an indication of the likelihood being greater than a predetermined threshold.

The medium 1020 and/or memory 1004 may include a distance estimate module 1026 that when implemented by the one or more processors 1002 configures the one or more processors 1002 to determine a distance estimate between a transmitting entity to the UE. The one or more processors 1002, for example, may be configured to use a sequential search of combinations of the CP measurements from a wide lane combination to a narrow lane combination, wherein results from the wide lane combination of the CP measurements is used in the sequential search, e.g., as discussed in reference to FIGs. 5-7. The one or more processors 1002, for example, may be configured to perform the sequential search from a widest lane combination of the CP measurements to a narrowest lane of combination of the CP measurements. For example, the one or more processors 1002 may be configured to use a distance estimate from the wide lane combination of the CP measurements to resolve an integer ambiguity of one or more subsequent narrow lane combinations of the CP measurements in the sequential search. In another example, the one or more processors 1002 may be configured to use a distance estimate from the wide lane combination of the CP measurements to reduce a number of subsequent combinations of the CP measurements in the sequential search to combinations of the CP measurements that are not affected by an integer ambiguity. In another example, the one or more processors 1002 may be configured to determine and use a median distance estimate from a plurality of wide lane combinations of the CP measurements to resolve an integer ambiguity of one or more subsequent narrow lane combinations of the CP measurements in the sequential search. The one or more processors 1002 may be configured to include a plurality of combinations of the CP measurements in each lane combination of the CP measurements. The one or more processors 1002 may be configured to determine the distance estimate based on at least one of a minimization of the MSE of distance estimates from a plurality of lane combinations of the CP measurements, or based on a median or average distance estimate determined from the distance estimates from the plurality of lane combinations of the CP measurements. The one or more processors 1002 may be configured to reject outlier distance estimates from one or more lane combinations of the CP measurements in determining the distance estimate. The one or more processors 1002 may be configured to determine a distance estimate from a transmitting based on the CP measurements and an expected trip time or expected integer cycle associated with a positioning signal from transmitting entity, e.g., received in assistance data. The one or more processors 1002 may be configured to determine the expected trip time or the expected integer cycle for transmitting entities based on a received RSTD or TA, or combination thereof, for the transmitting entities and the expected trip time or the expected integer cycle associated with a positioning signal from one transmitting entity. The one or more processors 1002, for example, may be configured to define a search space to determine the distance estimate from a transmitting entity based on the expected trip time or the expected integer cycle associated with a positioning signal from the transmitting entity. The one or more processors 1002 may be configured to determine an uncertainty for an integer ambiguity in the CP measurements of the at least one positioning signal based on the distance estimate. The one or more processors 1002 may be further configured to send, via the external interface including one or more of wireless transceivers 1010, 1011, 1012, and 1013, a location information report to the location server, e.g., including one or more of the determined distances between each transmitting entity and the UE 1000, one or more combinations of the carrier phase measurements, or the carrier phase measurements.

The medium 1020 and/or memory 1004 may include an assistance data module 1028 that when implemented by the one or more processors 1002 configures the one or more processors 1002 to receive, via the external interface including one or more of wireless transceivers 1010, 1011, 1012, and 1013, an expected trip time or an expected integer cycle associated with at least one positioning signal from at least one transmitting entity. The expected trip time or the expected integer cycle, for example, may be associated to one of a PRS resource, a PRS resource set, a transmission reception point, or a combination thereof. The at least one transmitting entity, for example, may be a base station or a sidelink UE, and the expected trip time or expected integer cycle may be received from, e.g., a location server or a sidelink UE. The expected integer cycle may be based on at least one of an expected lane combinations of the CP measurements, expected subcarrier spacing, expected wavelength, or a combination thereof. The expected trip time or expected integer cycle may be received, for example, I n assistance data message. The expected trip time or the expected integer cycle may be received for only one transmitting entity, and the one or more processors 1002 may be configured to receive RSTD, TA, or a combination thereof for a plurality of transmitting entities, which may be used along with the expected trip time or expected integer cycle for the one transmitting entity to determine the expected trip time or the expected integer cycle for other transmitting entities. The one or more processors 1002 may be further configured to receive expected trip time uncertainty with the expected trip time. The one or more processors 1002 may be further configured to receive integrity information that includes at least one of a variance of the expected trip time, a variance of the expected trip time uncertainty, or a combination thereof. The one or more processors 1002 may be configured to receive a likelihood of cycle slip in a carrier phase of positioning signals, e.g., PRS resources, from one or more TRPs. The indication of the likelihood of cycle slip may be provided as a Boolean indication or a range of likelihoods.

The medium 1020 and/or memory 1004 may include a capabilities module 1030 that when implemented by the one or more processors 1002 configures the one or more processors 1002 to send, via the external interface including one or more of wireless transceivers 1010, 1011, 1012, and 1013, a capabilities message to a location server indicating that the UE is capable of performing CP positioning measurements.

The medium 1020 and/or memory 1004 may include a cycle slip module 1032 that when implemented by the one or more processors 1002 configures the one or more processors 1002 to detects whether a cycle slip of a CP for a positioning signal occurred. The one or more processors 1002 may be configured to send, via the external interface including one or more of wireless transceivers 1010, 1011, 1012, and 1013, a report with an indication of whether the cycle slip of the CP for the positioning signal is detected. The report may be sent to a location server or a sidelink UE. The indication of whether the cycle slip of the CP for the positioning signal is detected may include a field with a Boolean indication or an indication of an amount of the cycle slip or a likelihood that the cycle slip occurred, or a combination thereof.

The medium 1020 and/or memory 1004 may include a position determination module 1034 that when implemented by the one or more processors 1002 configures the one or more processors 1002 to determine an estimated position of the UE 1000 using the distance estimate from each base station to the UE and known positions of the base stations e.g., received, e.g., in assistance data. The one or more processors 1002, for example, may be configured to determine the estimated position using, e.g., multilateration. The one or more processors 1002 may be further configured to send, via the external interface including one or more of wireless transceivers 1010, 1011, 1012, and 1013, a location information report to the location server, e.g., including the determined estimated position of the UE 1000.

The methodologies described herein may be implemented by various means depending upon the application. For example, these methodologies may be implemented in hardware, firmware, software, or any combination thereof. For a hardware implementation, the one or more processors 1002 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1020 or memory 1004 that is connected to and executed by the one or more processors 1002. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1008 on a non-transitory computer readable medium, such as medium 1020 and/or memory 1004. Examples include computer readable media encoded with a data structure and computer readable media encoded with a computer program code 1008. For example, the non-transitory computer readable medium including program code 1008 stored thereon may include program code 1008 to support carrier phase positioning of the UE in a terrestrial wireless network in a manner consistent with disclosed embodiments. Non-transitory computer readable medium 1020 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1008 in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer readable media.

In addition to storage on computer readable medium 1020, instructions and/or data may be provided as signals on transmission media included in a communication apparatus. For example, a communication apparatus may include a external interface including one or more of wireless transceivers 1010, 1011, 1012, and 1013 having signals indicative of instructions and data. The instructions and data are configured to cause one or more processors to implement the functions outlined in the claims. That is, the communication apparatus includes transmission media with signals indicative of information to perform disclosed functions.

Memory 1004 may represent any data storage mechanism. Memory 1004 may include, for example, a primary memory and/or a secondary memory. Primary memory may include, for example, a random access memory, read only memory, etc. While illustrated in this example as being separate from one or more processors 1002, it should be understood that all or part of a primary memory may be provided within or otherwise co-located/coupled with the one or more processors 1002. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 1020. As such, in certain example implementations, the methods and/or apparatuses presented herein may take the form in whole or part of a computer readable medium 1020 that may include computer implementable program code 1008 stored thereon, which if executed by one or more processors 1002 may be operatively enabled to perform all or portions of the example operations as described herein. Computer readable medium 1020 may be a part of memory 1004.

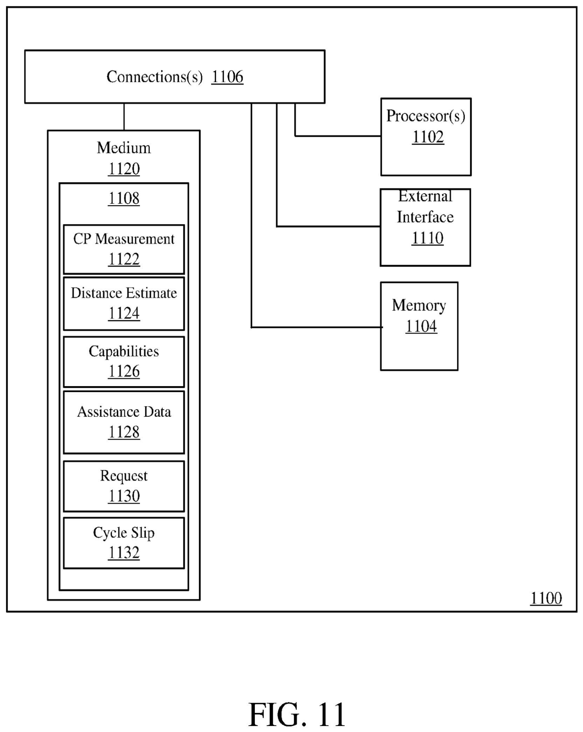

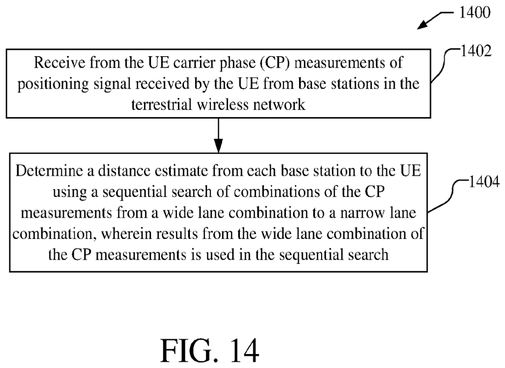

**FIG. 11** shows a schematic block diagram illustrating certain exemplary features of a location server 1100, e.g.,

which may be location server 172 shown in FIGs. 1 and 9, and supports carrier phase positioning of the UE in a terrestrial wireless network, as described herein. The location server 1100, for example, may be an LMF or an E-SMLC. The location server 1100, for example, may perform the signal flow 900 shown in FIG. 9 and the process flows 1400, 1600, 1800, and 2000 shown in respective FIGs. 14, 16, 18, and 20, and accompanying techniques as discussed herein. The location server 1100 may include, for example, one or more processors 1102 and memory 1104, an external interface 1110, which may be operatively coupled with one or more connections 1006 (e.g., buses, lines, fibers, links, etc.) to non-transitory computer readable medium 1020 and memory 1004. The external interface 1110 may be a wired and/or wireless interface capable of connecting to network entities in the core network 170, such as an AMF or MME, through which the location server 1100 may communicate with RAN nodes and UEs. The location server 1100 may further include additional items, which are not shown, such as a user interface that may include e.g., a display, a keypad or other input device, such as virtual keypad on the display, through which a user may interface with the location server. In certain example implementations, all or part of location server 1100 may take the form of a chipset, and/or the like.

The one or more processors 1102 may be implemented using a combination of hardware, firmware, and software. For example, the one or more processors 1102 may be configured to perform the functions discussed herein by implementing one or more instructions or program code 1108 on a non-transitory computer readable medium, such as medium 1120 and/or memory 1104. In some embodiments, the one or more processors 1102 may represent one or more circuits configurable to perform at least a portion of a data signal computing procedure or process related to the operation of location server 1100.

The medium 1120 and/or memory 1104 may store instructions or program code 1108 that contain executable code or software instructions that when executed by the one or more processors 1102 cause the one or more processors 1102 to operate as a special purpose computer programmed to perform the techniques disclosed herein. As illustrated in location server 1100, the medium 1120 and/or memory 1104 may include one or more components or modules that may be implemented by the one or more processors 1102 to perform the methodologies described herein. While the components or modules are illustrated as software in medium 1120 that is executable by the one or more processors 1102, it should be understood that the components or modules may be stored in memory 1104 or may be dedicated hardware either in the one or more processors 1102 or off the processors.

A number of software modules and data tables may reside in the medium 1120 and/or memory 1104 and be utilized by the one or more processors 1102 in order to manage both communications and the functionality described herein. It should be appreciated that the organization of the contents of the medium 1120 and/or memory 1104 as shown in location server 1100 is merely exemplary, and as such the functionality of the modules and/or data structures may be combined, separated, and/or be structured in different ways depending upon the implementation of the location server 1100.

The medium 1120 and/or memory 1104 may include a CP measurement module 1122 that when implemented by the one or more processors 1102 configures the one or more processors 1102 to receive, via the external interface 1110, carrier phase measurements of positioning signal received by a receiving entity, e.g., the UE or base stations.

The medium 1120 and/or memory 1104 may include a distance estimate module 1124 that when implemented by the one or more processors 1102 configures the one or more processors 1102 to determine a distance estimate between a receiving entity and the transmitting entity. The one or more processors 1102, for example, may be configured to determine a distance estimate between the receiving entity and the transmitting entity using a sequential search of combinations of the CP measurements from a wide lane combination to a narrow lane combination, wherein results from the wide lane combination of the CP measurements are used in the sequential search, e.g., as discussed in reference to FIGs. 5-7. The one or more processors 1102, for example, may be configured to perform the sequential search from a widest lane combination of the CP measurements to a narrowest lane of combination of the CP measurements. For example, the one or more processors 1102 may be configured to use a distance estimate from the wide lane combination of the CP measurements to resolve an integer ambiguity of one or more subsequent narrow lane combinations of the CP measurements in the sequential search. In another example, the one or more processors 1102 may be configured to use a distance estimate from the wide lane combination of the CP measurements to reduce a number of subsequent combinations of the CP measurements in the sequential search to combinations of the CP measurements that are not affected by an integer ambiguity. In another example, the one or more processors 1102 may be configured to determine and use a median distance estimate from a plurality of wide lane combinations of the CP measurements to resolve an integer ambiguity of one or more subsequent narrow lane combinations of the CP measurements in the sequential search. The one or more processors 1102 may be configured to include a plurality of combinations of the CP measurements in each lane combination of the CP measurements. The one or more processors 1102 may be configured to determine the distance estimate based on at least one of a minimization of the MSE of distance estimates from a plurality of lane combinations of the CP measurements, or based on a median or average distance estimate determined from the distance estimates from the plurality of lane combinations of the CP measurements. The one or more processors 1102 may be configured to reject outlier distance estimates from one or more lane combinations of the CP measurements in determining the distance estimate. The one or more processors 1102 may be configured to determine a distance estimate from a transmitting based on the CP measurements and an expected trip time or expected integer cycle associated with a positioning signal from transmitting entity. The one or more processors 1102, for example, may be configured to define a search space to determine the distance estimate between the receiving entity and the transmitting entity based on the expected trip time or the expected integer cycle associated with a positioning signal from the transmitting entity. The one or more processors 1102 may be configured to determine an uncertainty for an integer ambiguity in the CP measurements of the at least one positioning signal based on the distance estimate.

The medium 1120 and/or memory 1104 may include a capabilities module 1126 that when implemented by the one or more processors 1102 configures the one or more processors 1102 to receive, via the external interface, a capabilities message from the UE indicating that the UE is capable of performing CP positioning measurements.

The medium 1120 and/or memory 1104 may include an assistance data module 1128 that when implemented by the one or more processors 1102 configures the one or more processors 1102 to prepare and send, via the external interface 1110, assistance data to the UE associated with a CP positioning method at least based on a received capabilities message. The one or more processors 1102 may be configured to prepare and send assistance data that includes an expected trip time or an expected integer cycle associated with at least one positioning signal from at least one transmitting entity. The expected trip time or the expected integer cycle, for example, may be associated to one of a PRS resource, a PRS resource set, a transmission reception point, or a combination thereof. The expected integer cycle may be based on at least one of an expected lane combinations of the CP measurements, expected subcarrier spacing, expected wavelength, or a combination thereof. The expected trip time or expected integer cycle may be sent, for example, in an assistance data message. The expected trip time or the expected integer cycle may be received for only one transmitting entity, and the one or more processors 1102 may be configured to prepare and send in assistance data RSTD, TA, or a combination thereof for a plurality of transmitting entities, which may be used along with the expected trip time or expected integer cycle for the one transmitting entity to determine the expected trip time or the expected integer cycle for other transmitting entities. The one or more processors 1102 may be further configured to prepare and send an expected trip time uncertainty with the expected trip time. The one or more processors 1102 may be further configured to prepare and send integrity information that includes at least one of a variance of the expected trip time, a variance of the expected trip time uncertainty, or a combination thereof. The one or more processors 1102 may be configured to determine a likelihood of a cycle slip of the carrier phase occurring for positioning signals, e.g., PRS resources from the plurality of TRPs, based on a reported cycle slips received from a receiving entity. The one or more processors 1102 may be configured to prepare and send in assistance data an indication of the likelihood of cycle slip of the carrier phase occurring for the positioning signals. The indication of the likelihood of cycle slip may be provided as a Boolean indication or a range of likelihoods.

The medium 1120 and/or memory 1104 may include a request module 1130 that when implemented by the one or more processors 1102 configures the one or more processors 1102 to send, via the external interface 1110, a request for location to the UE.

The medium 1120 and/or memory 1104 may include a cycle slip module 1132 that when implemented by the one or more processors 1102 configures the one or more processors 1102 to receive, via the external interface 1110, a report from an entity in the terrestrial wireless network with an indication of whether a cycle slip is detected in a carrier phase of positioning signals received by the entity.

The methodologies described herein may be implemented by various means depending upon the application. For example, these methodologies may be implemented in hardware, firmware, software, or any combination thereof. For a hardware implementation, the one or more processors 1102 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1120 or memory 1104 that is connected to and executed by the one or more processors 1102. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1108 on a non-transitory computer readable medium, such as medium 1120 and/or memory 1104. Examples include computer readable media encoded with a data structure and computer readable media encoded with a computer program code 1108. For example, the non-transitory computer readable medium including program code 1108 stored thereon may include program code 1108 to support carrier phase positioning of the UE in a terrestrial wireless network in a manner consistent with disclosed embodiments. Non-transitory computer readable medium 1120 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1108 in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer readable media.

In addition to storage on computer readable medium 1120, instructions and/or data may be provided as signals on transmission media included in a communication apparatus. For example, a communication apparatus may include a wireless transceiver 1110 or wireless transceiver 1112 having signals indicative of instructions and data. The instructions and data are configured to cause one or more processors to implement the functions outlined in the claims. That is, the communication apparatus includes transmission media with signals indicative of information to perform disclosed functions.

Memory 1104 may represent any data storage mechanism. Memory 1104 may include, for example, a primary memory and/or a secondary memory. Primary memory may include, for example, a random access memory, read only memory, etc. While illustrated in this example as being separate from one or more processors 1102, it should be understood that all or part of a primary memory may be provided within or otherwise co-located/coupled with the one or more processors 1102. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 1120. As such, in certain example implementations, the methods and/or apparatuses presented herein may take the form in whole or part of a computer readable medium 1120 that may include computer implementable program code 1108 stored thereon, which if executed by one or more processors 1102 may be operatively enabled to perform all or portions of the example operations as described herein. Computer readable medium 1120 may be a part of memory 1104.

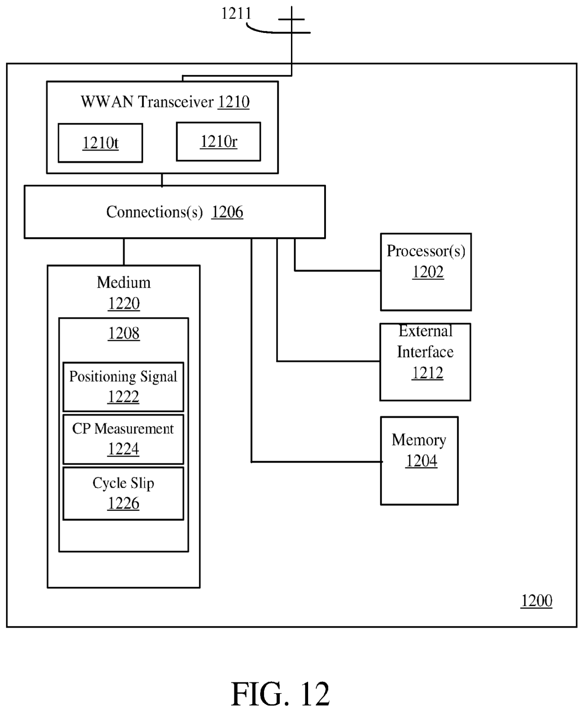

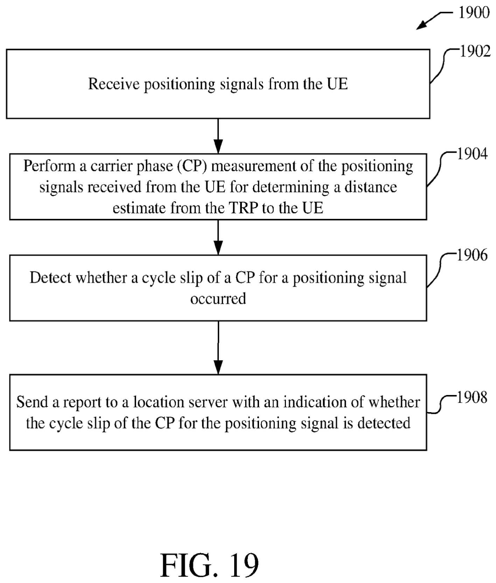

**FIG.** 12 shows a schematic block diagram illustrating certain exemplary features of a base station 1200, such as base station 102 shown in FIGs. 1, 3, and 9. The base station 102, for example, may be a gNB or an eNB. The base station 1200, for example, may perform the signal flow 900 shown in FIG. 9 and the process flow 1900 shown in FIG. 19, and accompanying techniques as discussed herein. The base station 1200 may include, for example, one or more processors 1202, memory 1004, a wireless (WWAN) transceiver 1210, external interface 1212, which may be operatively coupled with one or more connections 1206 (e.g., buses, lines, fibers, links, etc.) to non-transitory computer readable medium 1220 and memory 1204. The base station 1200 may further include additional items, which are not shown, such as a user interface that may include e.g., a display, a keypad or other input device, such as virtual keypad on the display, through which a user may interface with the base station. In certain example implementations, all or part of base station 1200 may take the form of a chipset, and/or the like.

The base station 1200 may include at least one wireless transceiver, such as wireless transceiver 1210 for a WWAN communication system. The WWAN transceiver 1210 may include a transmitter 1210t and receiver 1210r coupled to one or more antennas 1211 for transmitting (e.g., on one or more downlink channels) and/or receiving (e.g., on one or more uplink channels) wireless signals and transducing signals from the wireless signals to wired (e.g., electrical and/or optical) signals and from wired (e.g., electrical and/or optical) signals to the wireless signals. The transmitter 1210t may include multiple transmitters that may be discrete components or combined/integrated components, and/or the receiver 1210r may include multiple receivers that may be discrete components or combined/integrated components. The WWAN transceiver 1210 may be configured to communicate signals (e.g., with base stations and/or one or more other devices) according to a variety of radio access technologies (RATs) such as 12G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 3GPP LTE-V2X (PC5), etc. New Radio may use mm-wave frequencies and/or sub-6GHz frequencies. The transceiver 1210 may be communicatively coupled to a transceiver interface, e.g., by optical and/or electrical connection, which may be at least partially integrated with the transceiver 1210.

In some embodiments, base station 1200 may include antenna 1211, which may be internal or external. Base station antenna 1211 may be used to transmit and/or receive signals processed by wireless transceiver 1210. In some embodiments, base station antenna 1211 may be coupled to wireless transceiver 1210. In some embodiments, measurements of signals transmitted (received) by base station 1200 may be performed at the point of connection of the base station antenna 1211 and wireless transceiver 1210. In a base station 1200 with multiple base station antennas 1211 or antenna arrays, the antenna connector may be viewed as a virtual point representing the aggregate output (input) of multiple base station antennas.

The one or more processors 1202 may be implemented using a combination of hardware, firmware, and software. For example, the one or more processors 1202 may be configured to perform the functions discussed herein by implementing one or more instructions or program code 1208 on a non-transitory computer readable medium, such as medium 1220 and/or memory 1204. In some embodiments, the one or more processors 1202 may represent one or more circuits configurable to perform at least a portion of a data signal computing procedure or process related to the operation of base station 1200.

The medium 1220 and/or memory 1204 may store instructions or program code 1208 that contain executable code or software instructions that when executed by the one or more processors 1202 cause the one or more processors 1202 to operate as a special purpose computer programmed to perform the techniques disclosed herein. As illustrated in base station 1200, the medium 1220 and/or memory 1204 may include one or more components or modules that may be implemented by the one or more processors 1202 to perform the methodologies described herein. While the components or modules are illustrated as software in medium 1220 that is executable by the one or more processors 1202, it should be understood that the components or modules may be stored in memory 1204 or may be dedicated hardware either in the one or more processors 1202 or off the processors.

A number of software modules and data tables may reside in the medium 1220 and/or memory 1204 and be utilized by the one or more processors 1202 in order to manage both communications and the functionality described herein. It should be appreciated that the organization of the contents of the medium 1220 and/or memory 1204 as shown in base station 1200 is merely exemplary, and as such the functionality of the modules and/or data structures may be combined, separated, and/or be structured in different ways depending upon the implementation of the base station 1200.

The medium 1220 and/or memory 1204 may include a positioning signal module 1222 that when implemented by the one or more processors 1202 configures the one or more processors 1202 to receive positioning signals from a UE, via the wireless transceiver 1210. The one or more processors 1202, for example, may be configured to determine the positioning signal (PRS) FD descrambled tones for each resource element (RE), e.g., as described by equations 2-5.

The medium 1220 and/or memory 1204 may include a CP measurement module 1224 that when implemented by the one or more processors 1202 configures the one or more processors 1202 to perform carrier phase measurements of received positioning signals. The one or more processors 1202, for example, may be configured to measure the carrier phase of the descrambled REs, e.g., as described in equation 6.

The medium 1220 and/or memory 1204 may include a cycle slip module 1226 that when implemented by the one or more processors 1202 configures the one or more processors 1202 to detects whether a cycle slip of a CP for a positioning signal occurred. The one or more processors 1202 may be configured to send, via the external interface 1212, a report with an indication of whether the cycle slip of the CP for the positioning signal is detected. The indication of whether the cycle slip of the CP for the positioning signal is detected may include a field with a Boolean indication or an indication of an amount of the cycle slip or a likelihood that the cycle slip occurred, or a combination thereof.

The methodologies described herein may be implemented by various means depending upon the application. For example, these methodologies may be implemented in hardware, firmware, software, or any combination thereof. For a hardware implementation, the one or more processors 1202 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1220 or memory 1204 that is connected to and executed by the one or more processors 1202. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1208 on a non-transitory computer readable medium, such as medium 1220 and/or memory 1204. Examples include computer readable media encoded with a data structure and computer readable media encoded with a computer program code 1208. For example, the non-transitory computer readable medium including program code 1208 stored thereon may include program code 1208 to support carrier phase positioning of the base station in a terrestrial wireless network in a manner consistent with disclosed embodiments. Non-transitory computer readable medium 1220 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1208 in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer readable media.

In addition to storage on computer readable medium 1220, instructions and/or data may be provided as signals on transmission media included in a communication apparatus. For example, a communication apparatus may include a wireless transceiver 1210 or wireless transceiver 1212 having signals indicative of instructions and data. The instructions and data are configured to cause one or more processors to implement the functions outlined in the claims. That is, the communication apparatus includes transmission media with signals indicative of information to perform disclosed functions.

Memory 1204 may represent any data storage mechanism. Memory 1204 may include, for example, a primary memory and/or a secondary memory. Primary memory may include, for example, a random access memory, read only memory, etc. While illustrated in this example as being separate from one or more processors 1202, it should be understood that all or part of a primary memory may be provided within or otherwise co-located/coupled with the one or more processors 1202. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 1220. As such, in certain example implementations, the methods and/or apparatuses presented herein may take the form in whole or part of a computer readable medium 1220 that may include computer implementable program code 1208 stored thereon, which if executed by one or more processors 1202 may be operatively enabled to perform all or portions of the example operations as described herein. Computer readable medium 1220 may be a part of memory 1204.

**FIG. 13A** is a flow chart illustrating a method 1300 for supporting carrier phase positioning of the UE in a terrestrial wireless network, performed by a UE, such as UE 105 or UE 1000, as described herein.

At block 1302, the UE receives positioning signals from base stations in the terrestrial wireless network, e.g., as described in reference to FIGs. 5-7, and stage 8 of FIG. 9. A means for receiving positioning signals from base stations in the terrestrial wireless network may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the positioning signal module 1022, shown in FIG. 10.

At block 1304, the UE performs carrier phase (CP) measurements of the positioning signals received from the base stations, e.g., as described in reference to FIGs. 5-7, and stage 8 of FIG. 9. A means for performing carrier phase (CP) measurements of the positioning signals received from the base stations may include the one or more processors 1002 with dedicated hardware or implementing executable code or software instructions in memory 1004 and/or medium 1020 in UE 1000, such as the CP measurement module 1024, shown in FIG. 10.

At block 1306, the UE determines a distance estimate from each base station to the UE using a sequential search of combinations of the CP measurements from a wide lane combination to a narrow lane combination, wherein results from the wide lane combination of the CP measurements is used in the sequential search, e.g., as described in reference to FIGs. 5-7, and stage 8 of FIG. 9. In one implementation, the sequential search may be performed from a widest lane combination of the CP measurements to a narrowest lane of combination of the CP measurements, e.g., as described in reference to FIGs. 5-7, and stage 8 of FIG. 9. A means for determining a distance estimate from each base station to the UE using a sequential search of combinations of the CP measurements from a wide lane combination to a narrow lane combination, wherein results from the wide lane combination of the CP measurements is used in the sequential search may include the one or more processors 1002 with dedicated hardware or implementing executable code or software instructions in memory 1004 and/or medium 1020 in UE 1000, such as the distance estimate module 1026, shown in FIG. 10.

For example, in one implementation, a distance estimate from the wide lane combination of the CP measurements is used in the sequential search of combinations of the CP measurements to resolve an integer ambiguity of one or more subsequent narrow lane combinations of the CP measurements, e.g., as described in reference to FIG. 5, and stage 8 of FIG. 9.

For example, in one implementation, a distance estimate from the wide lane combination of the CP measurements is used in the sequential search of combinations of the CP measurements to reduce a number of subsequent combinations of the CP measurements in the sequential search to combinations of the CP measurements that are not affected by an integer ambiguity, e.g., as described in reference to FIG. 6, and stage 8 of FIG. 9.

For example, in one implementation, a median distance estimate from a plurality of wide lane combinations of the CP measurements is used in the sequential search of combinations of the CP measurements to resolve an integer ambiguity of one or more subsequent narrow lane combinations of the CP measurements, e.g., as described in reference to FIG. 6, and stage 8 of FIG. 9. For example, the distance estimate may be determined based on at least a combination of the median distance estimate from the plurality of wide lane combinations of the CP measurements and a second median distance estimate from the one or more subsequent narrow lane combinations of the CP measurements, e.g., as described in reference to FIG. 6, and stage 8 of FIG. 9.

Each lane combination of the CP measurements, for example, may include a plurality of combinations of the CP measurements, e.g., as described in reference to FIGs. 5-7, and stage 8 of FIG. 9.

In some implementations, the UE may determine the distance estimate from each base station to the UE using the sequential search of combinations of the CP measurements from the wide lane to the narrow lane by determining the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof, e.g., as described in reference to FIGs. 5-7, and stage 8 of FIG. 9. A means for determining the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof may include the one or more processors 1002 with dedicated hardware or implementing executable code or software instructions in memory 1004 and/or medium 1020 in UE 1000, such as the distance estimate module 1026, shown in FIG. 10. The UE may reject outlier distance estimates from one or more lane combinations of the CP measurements in determining the distance estimate from each base station to the UE, e.g., as described in reference to FIGs. 5-7, and stage 8 of FIG. 9. A means for rejecting outlier distance estimates from one or more lane combinations of the CP measurements in determining the distance estimate from each base station to the UE may include the one or more processors 1002 with dedicated hardware or implementing executable code or software instructions in memory 1004 and/or medium 1020 in UE 1000, such as the distance estimate module 1026, shown in FIG. 10.

In some implementations, a measurement period or reporting time for determining the distance estimate from each base station to the UE is based on a number of lane combinations used in the sequential search of combinations of the CP measurements, e.g., as described in reference to FIGs. 5-7, and stage 8 of FIG. 9.

In some implementations, the UE may send location information to a location server, wherein the location information comprises at least one of the distance estimate from each base station to the UE and a location estimated determined based on the distance estimate from each base station to the UE, e.g., as described in reference to stage 11 of FIG. 9. A means for sending location information to a location server, wherein the location information comprises at least one of the distance estimate from each base station to the UE and a location estimated determined based on the distance estimate from each base station to the UE may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the distance estimate module 1026 or the position determination module 134, shown in FIG. 10.

**FIG. 13B** is a flow chart illustrating a method 1350 for supporting carrier phase positioning of the UE in a terrestrial wireless network, performed by a UE, such as UE 105 or UE 1000, as described herein.

At block 1352, the UE receives positioning signals from base stations in the terrestrial wireless network, e.g., as described in reference to FIGs. 5-7, and stage 8 of FIG. 9. A means for receiving positioning signals from base stations in the terrestrial wireless network may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the positioning signal module 1022, shown in FIG. 10.

At block 1354, the UE performs carrier phase (CP) measurements of the positioning signals received from the base stations, e.g., as described in reference to FIGs. 5-7, and stage 8 of FIG. 9. A means for performing carrier phase (CP) measurements of the positioning signals received from the base stations may include the one or more processors 1002 with dedicated hardware or implementing executable code or software instructions in memory 1004 and/or medium 1020 in UE 1000, such as the CP measurement module 1024, shown in FIG. 10.

At block 1356, the UE sends location information to a location server, wherein the location information comprises the carrier phase measurements or one or more combinations of the carrier phase measurements to enable a distance estimate from each base station to the UE determined using a sequential search of combinations of the CP measurements from a wide lane combination to a narrow lane combination, wherein results from the wide lane combination of the CP measurements is used in the sequential search, e.g., as described in reference to FIGs. 5-7, and stages 11 and 12 of FIG. 9. A means for sending location information to a location server, wherein the location information comprises the carrier phase measurements or one or more combinations of the carrier phase measurements to enable a distance estimate from each base station to the UE determined using a sequential search of combinations of the CP measurements from a wide lane combination to a narrow lane combination, wherein results from the wide lane combination of the CP measurements is used in the sequential search may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the distance estimate module 1026, shown in FIG. 10.

In one implementation, the sequential search may be performed from a widest lane combination of the CP measurements to a narrowest lane of combination of the CP measurements, e.g., as described in reference to FIGs. 5-7, and stage 8 and 12 of FIG. 9.

For example, in one implementation, a distance estimate from the wide lane combination of the CP measurements is used in the sequential search of combinations of the CP measurements to resolve an integer ambiguity of one or more subsequent narrow lane combinations of the CP measurements, e.g., as described in reference to FIG. 5, and stages 8 and 12 of FIG. 9.

For example, in one implementation, a distance estimate from the wide lane combination of the CP measurements is used in the sequential search of combinations of the CP measurements to reduce a number of subsequent combinations of the CP measurements in the sequential search to combinations of the CP measurements that are not affected by an integer ambiguity, e.g., as described in reference to FIG. 6, and stages 8 and 12 of FIG. 9.

For example, in one implementation, a median distance estimate from a plurality of wide lane combinations of the CP measurements is used in the sequential search of combinations of the CP measurements to resolve an integer ambiguity of one or more subsequent narrow lane combinations of the CP measurements, e.g., as described in reference to FIG. 6, and stages 8 and 12 of FIG. 9. For example, the distance estimate may be determined based on at least a combination of the median distance estimate from the plurality of wide lane combinations of the CP measurements and a second median distance estimate from the one or more subsequent narrow lane combinations of the CP measurements, e.g., as described in reference to FIG. 6, and stages 8 and 12 of FIG. 9.

Each lane combination of the CP measurements, for example, may include a plurality of combinations of the CP measurements, e.g., as described in reference to FIGs. 5-7, and stages 8 and 12 of FIG. 9.

In some implementations, the distance estimate from each base station to the UE determined using the sequential search of combinations of the CP measurements from the wide lane to the narrow lane is based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof, e.g., as described in reference to FIGs. 5-7, and stages 8 and 12 of FIG. 9.

In some implementations, a measurement period or reporting time for sending the location information is based on a number of lane combinations used in the sequential search of combinations of the CP measurements, e.g., as described in reference to FIGs. 5-7, and stages 8 and 12 of FIG. 9.

**FIG. 14** is a flow chart illustrating a method 1400 for supporting carrier phase positioning of the UE in a terrestrial wireless network, performed by a location server, such as location server 172 or location server 1100, as described herein.

At block 1402, the location server receives from the UE carrier phase (CP) measurements of positioning signal received by the UE from base stations in the terrestrial wireless network, e.g. as described in stage 11 of FIG. 9. A means for receiving from the UE carrier phase (CP) measurements of positioning signal received by the UE from base stations in the terrestrial wireless network may include the external interface 1110, along with one or more processors 1102 with dedicated hardware or implementing executable code or software instructions in memory 1104 and/or medium 1120 in location server 1100, such as the CP measurements module 1122, shown in FIG. 11.

At block 1404, the location server determines a distance estimate from each base station to the UE using a sequential search of combinations of the CP measurements from a wide lane combination to a narrow lane combination, wherein results from the wide lane combination of the CP measurements is used in the sequential search, e.g., as described in reference to FIGs. 5-7, and stage 12 of FIG. 9. In one implementation, for example, the sequential search may be performed from a widest lane combination of the CP measurements to a narrowest lane of combination of the CP measurements, e.g., as described in reference to FIGs. 5-7, and stage 12 of FIG. 9. A means for determining a distance estimate from each base station to the UE using a sequential search of combinations of the CP measurements from a wide lane combination to a narrow lane combination, wherein results from the wide lane combination of the CP measurements is used in the sequential search may include the one or more processors 1102 with dedicated hardware or implementing executable code or software instructions in memory 1104 and/or medium 1120 in location server 1100, such as the distance estimate module 1124, shown in FIG. 11.

In one implementation, a distance estimate from the wide lane combination of the CP measurements is used in the sequential search of combinations of the CP measurements to resolve an integer ambiguity of one or more subsequent narrow lane combinations of the CP measurements, e.g., as described in reference to FIG. 5, and stage 12 of FIG. 9.

In one implementation, a distance estimate from the wide lane combination of the CP measurements is used in the sequential search of combinations of the CP measurements to reduce a number of subsequent combinations of the CP measurements in the sequential search to combinations of the CP measurements that are not affected by an integer ambiguity, e.g., as described in reference to FIG. 6, and stage 12 of FIG. 9.

In one implementation, a median distance estimate from a plurality of wide lane combinations of the CP measurements is used in the sequential search of combinations of the CP measurements to resolve an integer ambiguity of one or more subsequent narrow lane combinations of the CP measurements, e.g., as described in reference to FIG. 7, and stage 12 of FIG. 9. For example, the distance estimate may be determined based on at least a combination of the median distance estimate from the plurality of wide lane combinations of the CP measurements and a second median distance estimate from the one or more subsequent narrow lane combinations of the CP measurements, e.g., as described in reference to FIG. 7, and stage 12 of FIG. 9.

Each lane combination of the CP measurements, for example, may include a plurality of combinations of the CP measurements, e.g., as described in reference to FIGs. 5-7, and stage 12 of FIG. 9.

In some implementations, the location server may determine the distance estimate from each base station to the UE using the sequential search of combinations of the CP measurements from the wide lane to the narrow lane comprises determining the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof, e.g., as described in reference to FIGs. 5-7, and stage 12 of FIG. 9. A means for determining the distance estimate from each base station to the UE using the sequential search of combinations of the CP measurements from the wide lane to the narrow lane comprises determining the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof may include the one or more processors 1102 with dedicated hardware or implementing executable code or software instructions in memory 1104 and/or medium 1120 in location server 1100, such as the distance estimate module 1124, shown in FIG. 11. The location server may reject outlier distance estimates from one or more lane combinations of the CP measurements in determining the distance estimate from each base station to the UE, e.g., as described in reference to FIGs. 5-7, and stage 12 of FIG. 9. A means for rejecting outlier distance estimates from one or more lane combinations of the CP measurements in determining the distance estimate from each base station to the UE may include the one or more processors 1102 with dedicated hardware or implementing executable code or software instructions in memory 1104 and/or medium 1120 in location server 1100, such as the distance estimate module 1124, shown in FIG. 11.

In some implementations, a measurement period or reporting time for determining the distance estimate from each base station to the UE is based on a number of lane combinations used in the sequential search of combinations of the CP measurements, e.g., as described in reference to FIGs. 5-7, and stage 12 of FIG. 9.

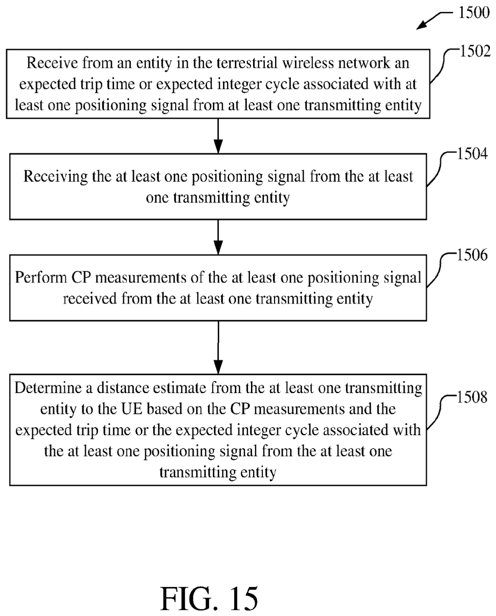

**FIG. 15** is a flow chart illustrating a method 1500 for supporting carrier phase positioning of the UE in a terrestrial wireless network, performed by a UE, such as UE 105 or UE 1000, as described herein.

At block 1502, the UE receives from an entity in the terrestrial wireless network an expected trip time or expected integer cycle associated with at least one positioning signal from at least one transmitting entity, e.g., as discussed in reference to Table 1, and stages 5 and 6 of FIG. 9. The expected trip time or the expected integer cycle, for example, may be associated to one of a PRS resource, a PRS resource set, a transmission reception point, or a combination thereof, e.g., as discussed in reference to Table 1, and stages 5 and 6 of FIG. 9. In some implementations, the at least one transmitting entity may include a base station or a sidelink UE. In some implementations, the entity in the terrestrial wireless network may include a location server or a sidelink UE. In some implementations, the expected integer cycle may be based on at least one of an expected lane combinations of the CP measurements, expected subcarrier spacing, expected wavelength, or a combination thereof. A means for receiving from an entity in the terrestrial wireless network an expected trip time or expected integer cycle associated with at least one positioning signal from at least one transmitting entity may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the assistance data module 1028, shown in FIG. 10.

At block 1504, the UE receives the at least one positioning signal from the at least one transmitting entity, e.g., as described in reference to FIGs. 5-7, and stage 8 of FIG. 9. A means for receiving the at least one positioning signal from the at least one transmitting entity may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the positioning signal module 1022, shown in FIG. 10.

At block 1506, the UE performs CP measurements of the at least one positioning signal received from the at least one transmitting entity, e.g., as described in reference to FIGs. 5-7, and stage 8 of FIG. 9. A means for performing CP measurements of the at least one positioning signal received from the at least one transmitting entity may include the one or more processors 1002 with dedicated hardware or implementing executable code or software instructions in memory 1004 and/or medium 1020 in UE 1000, such as the CP measurement module 1024, shown in FIG. 10.

At block 1508, the UE determines a distance estimate from the at least one transmitting entity to the UE based on the CP measurements and the expected trip time or the expected integer cycle associated with the at least one positioning signal from the at least one transmitting entity, e.g., as described in reference to FIGs. 5-7, and stage 8 of FIG. 9. A means for determining a distance estimate from the at least one transmitting entity to the UE based on the CP measurements and the expected trip time or the expected integer cycle associated with the at least one positioning signal from the at least one transmitting entity may include the one or more processors 1002 with dedicated hardware or implementing executable code or software instructions in memory 1004 and/or medium 1020 in UE 1000, such as the distance estimate module 1026, shown in FIG. 10. [see comments above with respect to UE-assisted mode - if the UE is not going to do the distance estimate, then there is no need for the UE to receive the expected trip time or expected integer cycle.]

In some implementations, the UE may send a capabilities message to a location server indicating that the UE is capable of performing CP positioning measurements, e.g., as discussed in stage 3 of FIG. 9. The UE may receive assistance data from the location server associated with a CP positioning method at least based on the received capabilities message, wherein the expected trip time or the expected integer cycle associated with the at least one positioning signal from the at least one transmitting entity is received in positioning assistance data, e.g., as discussed in stages 5 and 6 of FIG. 9. A means for sending a capabilities message to a location server indicating that the UE is capable of performing CP positioning measurements may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the capabilities module 1030, shown in FIG. 10. The positioning assistance data, for example, may be received via on-demand, unicast, or broadcast, e.g., as discussed in stages 5 and 6 of FIG. 9. A means for receiving assistance data from the location server associated with a CP positioning method at least based on the received capabilities message, wherein the expected trip time or the expected integer cycle associated with the at least one positioning signal from the at least one transmitting entity is received in positioning assistance data may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the assistance data module 1028, shown in FIG. 10.

In some implementations, the expected trip time or the expected integer cycle associated with the at least one positioning signal from the at least one transmitting entity may be for only one transmitting entity. The UE may receive at least one of a Reference Signal Time Difference (RSTD), Timing Advance (TA), or a combination thereof for the one transmitting entity and one or more other transmitting entities, e.g., as discussed in reference to Table 1, and stages 5 and 6 of FIG. 9. The UE may determine an expected trip time or an expected integer cycle associated with at least one positioning signal from the one or more other transmitting entities based on the at least one of the RSTD, TA, or the combination thereof and the expected trip time or the expected integer cycle associated with the at least one positioning signal from the one transmitting entity, e.g., as discussed in reference to Table 1, and stages 5, 6 and 8 of FIG. 9. A means for receiving at least one of a Reference Signal Time Difference (RSTD), Timing Advance (TA), or a combination thereof for the one transmitting entity and one or more other transmitting entities may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the assistance data module 1028, shown in FIG. 10. A means for determining an expected trip time or an expected integer cycle associated with at least one positioning signal from the one or more other transmitting entities based on the at least one of the RSTD, TA, or the combination thereof and the expected trip time or the expected integer cycle associated with the at least one positioning signal from the one transmitting entity may include the one or more processors 1002 with dedicated hardware or implementing executable code or software instructions in memory 1004 and/or medium 1020 in UE 1000, such as the distance estimate module 1026, shown in FIG. 10.

In some implementations, the UE may further receive an expected trip time uncertainty with the expected trip time, e.g., as discussed in reference to Table 1, and stages 5 and 6 of FIG. 9. A means for receiving an expected trip time uncertainty with the expected trip time may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the assistance data module 1028, shown in FIG. 10. The UE may further receive integrity information comprising at least one of a variance of the expected trip time, a variance of the expected trip time uncertainty, or a combination thereof, e.g., as discussed in reference to Table 1, and stages 5 and 6 of FIG. 9. A means for receiving integrity information comprising at least one of a variance of the expected trip time, a variance of the expected trip time uncertainty, or a combination thereof may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the assistance data module 1028, shown in FIG. 10.

The UE may determine the distance estimate from the at least one transmitting entity to the UE by defining a search space to determine the distance estimate from the at least one transmitting entity to the UE using the expected trip time or the expected integer cycle associated with at least one the positioning signal from the at least one transmitting entity, e.g., as discussed in reference to Table 1, and stage 8 of FIG. 9. A means for defining a search space to determine the distance estimate from the at least one transmitting entity to the UE using the expected trip time or the expected integer cycle associated with at least one the positioning signal from the at least one transmitting entity may include the one or more processors 1002 with dedicated hardware or implementing executable code or software instructions in memory 1004 and/or medium 1020 in UE 1000, such as the distance estimate module 1026, shown in FIG. 10. The UE may further determine an uncertainty for an integer ambiguity in the CP measurements of the at least one positioning signal based on the distance estimate, e.g., as discussed in reference to Table 1, and stage 8 of FIG. 9. A means for determining an uncertainty for an integer ambiguity in the CP measurements of the at least one positioning signal based on the distance estimate may include the one or more processors 1002 with dedicated hardware or implementing executable code or software instructions in memory 1004 and/or medium 1020 in UE 1000, such as the distance estimate module 1026.

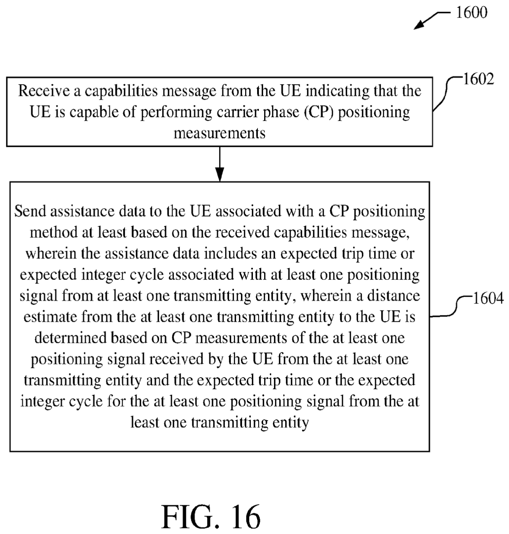

FIG. 16 is a flow chart illustrating a method 1600 for supporting carrier phase positioning of the UE in a terrestrial wireless network, performed by a location server, such as location server 172 or location server 1100, as described herein.

At block 1602, the location server receives a capabilities message from the UE indicating that the UE is capable of performing carrier phase (CP) positioning measurements, e.g. as described in stage 3 of FIG. 9. A means for receiving a capabilities message from the UE indicating that the UE is capable of performing carrier phase (CP) positioning measurements may include the external interface 1110, along with one or more processors 1102 with dedicated hardware or implementing executable code or software instructions in memory 1104 and/or medium 1120 in location server 1100, such as the capabilities module 1126, shown in FIG. 11.

At block 1604, the location server sends assistance data to the UE associated with a CP positioning method at least based on the received capabilities message, wherein the assistance data includes an expected trip time or expected integer cycle associated with at least one positioning signal from at least one transmitting entity, wherein a distance estimate from the at least one transmitting entity to the UE is determined based on CP measurements of the at least one positioning signal received by the UE from the at least one transmitting entity and the expected trip time or the expected integer cycle for the at least one positioning signal from the at least one transmitting entity, e.g., as discussed in reference to Table 1, and stages 5, 6, and 8 of FIG. 9. The expected trip time or the expected integer cycle, for example, may be associated to one of a PRS resource, a PRS resource set, a transmission reception point, or a combination thereof, e.g., as discussed in reference to Table 1, and stages 5 and 6 of FIG. 9. In some implementations, the at least one transmitting entity may include a base station or a sidelink UE. In some implementations, the expected integer cycle may be based on at least one of an expected lane combinations of the CP measurements, expected subcarrier spacing, expected wavelength, or a combination thereof. A means for sending assistance data to the UE associated with a CP positioning method at least based on the received capabilities message, wherein the assistance data includes an expected trip time or expected integer cycle associated with at least one positioning signal from at least one transmitting entity may include the external interface 1110, along with one or more processors 1102 with dedicated hardware or implementing executable code or software instructions in memory 1104 and/or medium 1120 in location server 1100, such as the assistance data module 1128, shown in FIG. 11.

In some implementations, the expected trip time or the expected integer cycle for the at least one positioning signal from the at least one transmitting entity may be for only one transmitting entity. The location server may send at least one of a Reference Signal Time Difference (RSTD), Timing Advance (TA), or a combination thereof for the one transmitting entity and one or more other transmitting entities, wherein an expected trip time or an expected integer cycle for at least one positioning signal from the one or more other transmitting entities is determined based on the at least one of the RSTD, TA, or the combination thereof and the expected trip time or the expected integer cycle for the at least one positioning signal from the one transmitting entity, e.g., as discussed in reference to Table 1, and stages 5, 6, and 8 of FIG. 9. A means for sending at least one of a Reference Signal Time Difference (RSTD), Timing Advance (TA), or a combination thereof for the one transmitting entity and one or more other transmitting entities, wherein an expected trip time or an expected integer cycle for at least one positioning signal from the one or more other transmitting entities is determined based on the at least one of the RSTD, TA, or the combination thereof and the expected trip time or the expected integer cycle for the at least one positioning signal from the one transmitting entity may include the external interface 1110, along with one or more processors 1102 with dedicated hardware or implementing executable code or software instructions in memory 1104 and/or medium 1120 in location server 1100, such as the assistance data module 1128, shown in FIG. 11.

In some implementations, the location server may send to the UE an expected trip time uncertainty with the expected trip time, e.g., as discussed in reference to Table 1, and stages 5 and 6 of FIG. 9. A means for sending to the UE an expected trip time uncertainty with the expected trip time may include the external interface 1110, along with one or more processors 1102 with dedicated hardware or implementing executable code or software instructions in memory 1104 and/or medium 1120 in location server 1100, such as the assistance data module 1128, shown in FIG. 11. The location server may further send to the UE integrity information comprising at least one of a variance of the expected trip time, a variance of the expected trip time uncertainty, or a combination thereof, e.g., as discussed in reference to Table 1, and stages 5 and 6 of FIG. 9. A means for sending to the UE integrity information comprising at least one of a variance of the expected trip time, a variance of the expected trip time uncertainty, or a combination thereof may include the external interface 1110, along with one or more processors 1102 with dedicated hardware or implementing executable code or software instructions in memory 1104 and/or medium 1120 in location server 1100, such as the assistance data module 1128, shown in FIG. 11.

In some implementations, a search space to determine the distance estimate from each transmitting entity to the UE may be determined using the expected trip time or the expected integer cycle associated with the at least one positioning signal from the at least one transmitting entity, e.g., as discussed in reference to Table 1, and stage 8 of FIG. 9. Additionally, an uncertainty for an integer ambiguity in the CP measurements of the at least one positioning signal may be determined based on the distance estimate, e.g., as discussed in reference to Table 1, and stage 8 of FIG. 9.

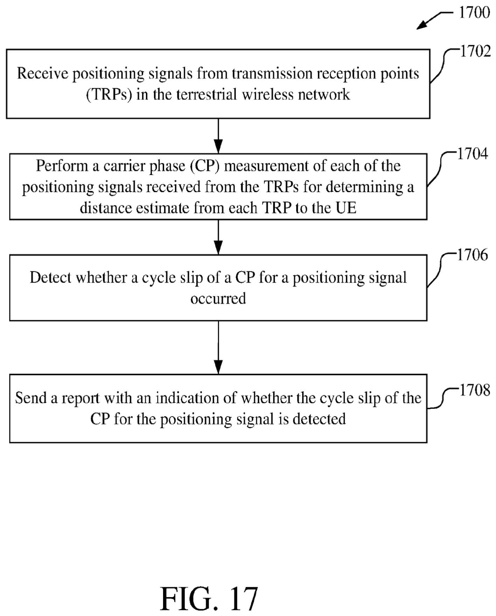

FIG. 17 is a flow chart illustrating a method 1700 for supporting carrier phase positioning of the UE in a terrestrial wireless network, performed by a UE, such as UE 105 or UE 1000, as described herein.

At block 1702, the UE receives positioning signals from transmission reception points (TRPs) in the terrestrial wireless network, e.g., as discussed in reference to FIG. 8, and stage 8 of FIG. 9. A means for receiving positioning signals from transmission reception points (TRPs) in the terrestrial wireless network may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the positioning signal module 1022, shown in FIG. 10.

At block 1704, the UE performs a carrier phase (CP) measurement of each of the positioning signals received from the TRPs for determining a distance estimate from each TRP to the UE, e.g., as described in reference to FIG. 8 and stage 8 of FIG. 9. A means for performing a carrier phase (CP) measurement of each of the positioning signals received from the TRPs for determining a distance estimate from each TRP to the UE may include the one or more processors 1002 with dedicated hardware or implementing executable code or software instructions in memory 1004 and/or medium 1020 in UE 1000, such as the CP measurement module 1024, shown in FIG. 10.

At block 1706, the UE detects whether a cycle slip of a CP for a positioning signal occurred, e.g., as described in reference to FIG. 8 and stage 9 of FIG. 9. A means for detecting whether a cycle slip of a CP for a positioning signal occurred may include the one or more processors 1002 with dedicated hardware or implementing executable code or software instructions in memory 1004 and/or medium 1020 in UE 1000, such as the cycle slip module 1032, shown in FIG. 10.

At block 1708, the UE sends a report with an indication of whether the cycle slip of the CP for the positioning signal is detected, e.g., as described in reference to FIG. 8 and stage 11 of FIG. 9. In some implementations, the positioning signals are positioning reference signal (PRS) resources, wherein the indication of whether a cycle slip occurred is sent for each TRP and PRS resource, e.g., as described in reference to FIG. 8 and stage 11 of FIG. 9. The report may be sent to one of a location server or a sidelink UE. A means for sending a report with an indication of whether the cycle slip of the CP for the positioning signal is detected may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the cycle slip module 1032, shown in FIG. 10.

In some implementations, the indication of whether the cycle slip of the CP for the positioning signal is detected may include a field with a Boolean indication of whether the cycle slip is detected, e.g., as described in reference to FIG. 8 and stage 11 of FIG. 9. In some implementations, the indication of whether the cycle slip of the CP for the positioning signal is detected may include a field that indicates an amount of the cycle slip or a likelihood that the cycle slip occurred, or a combination thereof, e.g., as described in reference to FIG. 8 and stage 11 of FIG. 9.

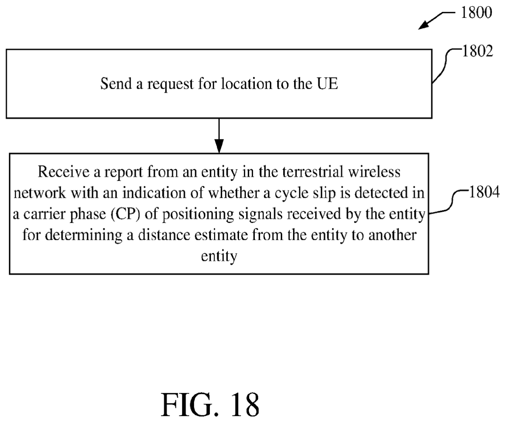

FIG. 18 is a flow chart illustrating a method 1800 for supporting carrier phase positioning of the UE in a terrestrial wireless network, performed by a location server, such as location server 172 or location server 1100, as described herein.

At block 1802, the location server sends a request for location to the UE, e.g., as discussed in stage 7 of FIG. 9. A means for sending a request for location to the UE may include the external interface 1110, along with one or more processors 1102 with dedicated hardware or implementing executable code or software instructions in memory 1104 and/or medium 1120 in location server 1100, such as the request module 1130, shown in FIG. 11.

At block 1804, the location server receives a report from an entity in the terrestrial wireless network with an indication of whether a cycle slip is detected in a carrier phase (CP) of positioning signals received by the entity for determining a distance estimate from the entity to another entity, e.g., as described in reference to FIG. 8 and stage 11 of FIG. 9. The entity, for example, may be one of the UE that receives the positioning signals from a transmission reception point (TRP) or the TRP that receives the positioning signals from the UE. In some implementations, the positioning signals are positioning reference signal (PRS) resources from a transmission reception point (TRP), wherein the indication of whether the cycle slip is detected is for the TRP and PRS resource, e.g., as described in reference to FIG. 8 and stage 11 of FIG. 9. A means for receiving a report from an entity in the terrestrial wireless network with an indication of whether a cycle slip is detected in a carrier phase (CP) of positioning signals received by the entity for determining a distance estimate from the entity to another entity may include the external interface 1110, along with one or more processors 1102 with dedicated hardware or implementing executable code or software instructions in memory 1104 and/or medium 1120 in location server 1100, such as the cycle slip module 1132, shown in FIG. 11.

In some implementations, the indication of whether the cycle slip of the CP for the positioning signal is detected may include a field with a Boolean indication of whether the cycle slip is detected, e.g., as described in reference to FIG. 8 and stage 11 of FIG. 9. In some implementations, the indication of whether the cycle slip of the CP for the positioning signal is detected may include a field that indicates an amount of the cycle slip or a likelihood that the cycle slip occurred, or a combination thereof, e.g., as described in reference to FIG. 8 and stage 11 of FIG. 9.

FIG. 19 is a flow chart illustrating a method 1900 for supporting carrier phase positioning of the UE in a terrestrial wireless network, performed by a base station, such as base station 102 or base station 1200, as described herein.

At block 1902, the base station receives positioning signals from the UE, e.g., as discussed in reference to FIG. 8, and stage 8 of FIG. 9. A means for receiving positioning signals from the UE may include the wireless transceiver 1210, along with one or more processors 1202 with dedicated hardware or implementing executable code or software instructions in memory 1204 and/or medium 1220 in base station 1200, such as the positioning signal module 1222, shown in FIG. 12.

At block 1904, the base station performs a carrier phase (CP) measurement of the positioning signals received from the UE for determining a distance estimate from the TRP to the UE, e.g., as described in reference to FIG. 8 and stage 8 of FIG. 9. A means for performing a carrier phase (CP) measurement of the positioning signals received from the UE for determining a distance estimate from the TRP to the UE may include the one or more processors 1202 with dedicated hardware or implementing executable code or software instructions in memory 1204 and/or medium 1220 in base station 1200, such as the CP measurement module 1224, shown in FIG. 12.

At block 1906, the base station detects whether a cycle slip of a CP for a positioning signal occurred, e.g., as described in reference to FIG. 8 and stage 9 of FIG. 9. A means for detecting whether a cycle slip of a CP for a positioning signal occurred may include the one or more processors 1202 with dedicated hardware or implementing executable code or software instructions in memory 1204 and/or medium 1220 in base station 1200, such as the cycle slip module 1226, shown in FIG. 12.

At block 1708, the base station sends a report to a location server with an indication of whether the cycle slip of the CP for the positioning signal is detected, e.g., as described in reference to FIG. 8 and stage 11 of FIG. 9. A means for sending a report to a location server with an indication of whether the cycle slip of the CP for the positioning signal is detected may include the external interface 1212, along with one or more processors 1202 with dedicated hardware or implementing executable code or software instructions in memory 1204 and/or medium 1220 in base station 1200, such as the cycle slip module 1226, shown in FIG. 12.

In some implementations, the indication of whether the cycle slip of the CP for the positioning signal is detected may include a field with a Boolean indication of whether the cycle slip is detected, e.g., as described in reference to FIG. 8 and stage 11 of FIG. 9. In some implementations, the indication of whether the cycle slip of the CP for the positioning signal is detected may include a field that indicates an amount of the cycle slip or a likelihood that the cycle slip occurred, or a combination thereof, e.g., as described in reference to FIG. 8 and stage 11 of FIG. 9.

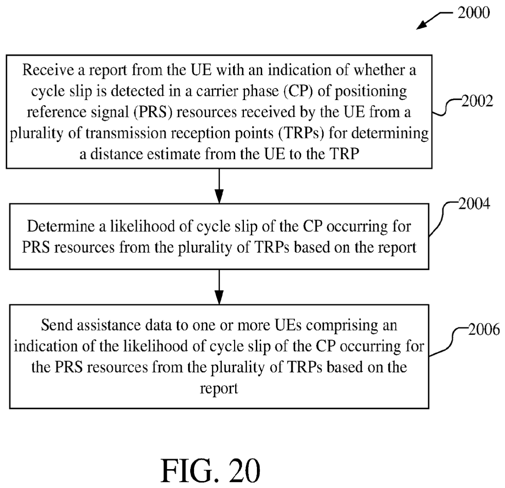

FIG. 20 is a flow chart illustrating a method 2000 for supporting carrier phase positioning of the UE in a terrestrial wireless network, performed by a location server, such as location server 172 or location server 1100, as described herein.

At block 2002, the location server receives a report from the UE with an indication of whether a cycle slip is detected in a carrier phase (CP) of positioning reference signal (PRS) resources received by the UE from a plurality of transmission reception points (TRPs) for determining a distance estimate from the UE to the TRP, e.g., as described in reference to FIG. 8 and stage 11 of FIG. 9. A means for receiving a report from the UE with an indication of whether a cycle slip is detected in a carrier phase (CP) of positioning reference signal (PRS) resources received by the UE from a plurality of transmission reception points (TRPs) for determining a distance estimate from the UE to the TRP may include the external interface 1110, along with one or more processors 1102 with dedicated hardware or implementing executable code or software instructions in memory 1104 and/or medium 1120 in location server 1100, such as the cycle slip module 1132, shown in FIG. 11.

At block 2004, the location server determines a likelihood of cycle slip of the CP occurring for PRS resources from the plurality of TRPs based on the report, e.g., as described in reference to FIG. 8 and stage 5 of FIG. 9. A means for determining a likelihood of cycle slip of the CP occurring for PRS resources from the plurality of TRPs based on the report may include the one or more processors 1102 with dedicated hardware or implementing executable code or software instructions in memory 1104 and/or medium 1120 in location server 1100, such as the assistance data module 1128, shown in FIG. 11.

At block 2006, the location server sends assistance data to one or more UEs comprising an indication of the likelihood of cycle slip of the CP occurring for the PRS resources from the plurality of TRPs based on the report, e.g., as described in reference to FIG. 8 and stages 5 and 6 of FIG. 9. A means for sending assistance data to one or more UEs comprising an indication of the likelihood of cycle slip of the CP occurring for the PRS resources from the plurality of TRPs based on the report may include the external interface 1110, along with one or more processors 1102 with dedicated hardware or implementing executable code or software instructions in memory 1104 and/or medium 1120 in location server 1100, such as the assistance data module 1128, shown in FIG. 11.

In some implementations, the indication of the likelihood of cycle slip of the CP occurring may be a Boolean indication, e.g., as described in reference to FIG. 8 and stage 11 of FIG. 9. In some implementations, the indication of the likelihood of cycle slip of the CP occurring comprises a range of likelihoods, e.g., as described in reference to FIG. 8 and stage 11 of FIG. 9.

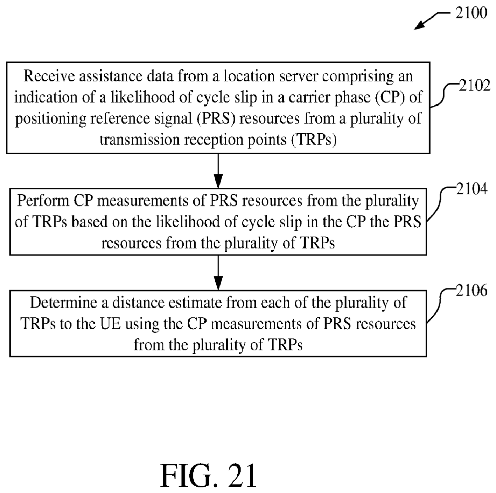

**FIG. 21** is a flow chart illustrating a method 2100 for supporting carrier phase positioning of the UE in a terrestrial wireless network, performed by a UE, such as UE 105 or UE 1000, as described herein.

At block 2102, the UE receives assistance data from a location server comprising an indication of a likelihood of cycle slip in a carrier phase (CP) of positioning reference signal (PRS) resources from a plurality of transmission reception points (TRPs), e.g., as described in reference to FIG. 8 and stages 5 and 6 of FIG. 9. A means for receiving assistance data from a location server comprising an indication of a likelihood of cycle slip in a carrier phase (CP) of positioning reference signal (PRS) resources from a plurality of transmission reception points (TRPs) may include the external interface including one or more of wireless transceivers 1010, 1011, 1012, and 1013, along with one or more processors 1002 with dedicated hardware or implementing executable code or software instructions in memory 1004 and/or medium 1020 in UE 1000, such as the assistance data module 1028, shown in FIG. 10.

At block 2104, the UE performs CP measurements of PRS resources from the plurality of TRPs based on the likelihood of cycle slip in the CP the PRS resources from the plurality of TRPs, e.g., as described in reference to FIGs. 5-7, and stage 8 of FIG. 9. A means for performing CP measurements of PRS resources from the plurality of TRPs based on the likelihood of cycle slip in the CP the PRS resources from the plurality of TRPs may include the one or more processors 1002 with dedicated hardware or implementing executable code or software instructions in memory 1004 and/or medium 1020 in UE 1000, such as the CP measurement module 1024, shown in FIG. 10.

At block 2106, the UE determines a distance estimate from each of the plurality of TRPs to the UE using the CP measurements of PRS resources from the plurality of TRPs, e.g., as described in reference to FIGs. 5-7, and stage 8 of FIG. 9. A means for determining a distance estimate from each of the plurality of TRPs to the UE using the CP measurements of PRS resources from the plurality of TRPs may include the one or more processors 1002 with dedicated hardware or implementing executable code or software instructions in memory 1004 and/or medium 1020 in UE 1000, such as the distance estimate module 1026, shown in FIG. 10.

In some implementations, the indication of the likelihood of cycle slip of the CP occurring may be a Boolean indication, e.g., as described in reference to FIG. 8 and stage 11 of FIG. 9. In some implementations, the indication of the likelihood of cycle slip of the CP occurring comprises a range of likelihoods, e.g., as described in reference to FIG. 8 and stage 11 of FIG. 9.

It will be apparent to those skilled in the art that substantial variations may be made in accordance with specific requirements. For example, customized hardware might also be used and/or particular elements might be implemented in hardware, software (including portable software, such as applets, etc.), or both. Further, connection to other computing devices such as network input/output devices may be employed.

With reference to the appended figures, components that can include memory can include non-transitory machine-readable media. The term "machine-readable medium" and "computer-readable medium" as used herein, refer to any storage medium that participates in providing data that causes a machine to operate in a specific fashion. In embodiments provided hereinabove, various machine-readable media might be involved in providing instructions/code to processing units and/or other device(s) for execution. Additionally or alternatively, the machine-readable media might be used to store and/or carry such instructions/code. In many implementations, a computer-readable medium is a physical and/or tangible storage medium. Such a medium may take many forms, including but not limited to, non-volatile media and volatile media. Common forms of computer-readable media include, for example, magnetic and/or optical media, any other physical medium with patterns of holes, a RAM, a programmable ROM (PROM), erasable PROM (EPROM), a FLASH-EPROM, any other memory chip or cartridge, or any other medium from which a computer can read instructions and/or code.

The methods, systems, and devices discussed herein are examples. Various embodiments may omit, substitute, or add various procedures or components as appropriate. For instance, features described with respect to certain embodiments may be combined in various other embodiments. Different aspects and elements of the embodiments may be combined in a similar manner. The various components of the figures provided herein can be embodied in hardware and/or software. Also, technology evolves and, thus many of the elements are examples that do not limit the scope of the disclosure to those specific examples.

It has proven convenient at times, principally for reasons of common usage, to refer to such signals as bits, information, values, elements, symbols, characters, variables, terms, numbers, numerals, or the like. It should be understood, however, that all of these or similar terms are to be associated with appropriate physical quantities and are merely convenient labels. Unless specifically stated otherwise, as is apparent from the discussion above, it is appreciated that throughout this Specification discussion utilizing terms such as "processing," "computing," "calculating," "determining," "ascertaining," "identifying," "associating," "measuring," "performing," or the like refer to actions or processes of a specific apparatus, such as a special purpose computer or a similar special purpose electronic computing device. In the context of this Specification, therefore, a special purpose computer or a similar special purpose electronic computing device is capable of manipulating or transforming signals, typically represented as physical electronic, electrical, or magnetic quantities within memories, registers, or other information storage devices, transmission devices, or display devices of the special purpose computer or similar special purpose electronic computing device.

Terms, "and" and "or" as used herein, may include a variety of meanings that also is expected to depend, at least in part, upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of" if used to associate a list, such as A, B, or C, can be interpreted to mean any combination of A, B, and/or C, such as A, AB, AA, AAB, AABBCCC, etc.

Having described several embodiments, various modifications, alternative constructions, and equivalents may be used without departing from the spirit of the disclosure. For example, the above elements may merely be a component of a larger system, wherein other rules may take precedence over or otherwise modify the application of the various embodiments. Also, a number of steps may be undertaken before, during, or after the above elements are considered. Accordingly, the above description does not limit the scope of the disclosure.

In view of this description embodiments may include different combinations of features. Implementation examples are described in the following numbered clauses:

Clause 1. A method performed by a user equipment (UE) for supporting carrier phase positioning of the UE in a terrestrial wireless network, comprising: receiving positioning signals from base stations in the terrestrial wireless network; performing carrier phase (CP) measurements of the positioning signals received from the base stations; and determining a distance estimate from each base station to the UE using a sequential search of combinations of the CP measurements from a wide lane combination to a narrow lane combination, wherein results from the wide lane combination of the CP measurements is used in the sequential search.

Clause 2. The method of clause 1, wherein the sequential search is performed from a widest lane combination of the CP measurements to a narrowest lane of combination of the CP measurements.

Clause 3. The method of any of clauses 1-2, wherein, in the sequential search of combinations of the CP measurements, a distance estimate from the wide lane combination of the CP measurements is used to resolve an integer ambiguity of one or more subsequent narrow lane combinations of the CP measurements.

Clause 4. The method of any of clauses 1-2, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 5. The method of any of clauses 1-2, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 6. The method of clause 5, wherein the distance estimate is determined based on at least a combination of the median distance estimate from the plurality of wide lane combinations of the CP measurements and a second median distance estimate from the one or more subsequent narrow lane combinations of the CP measurements.

Clause 7. The method of any of clauses 1-6, wherein each lane combination of the CP measurements comprises a plurality of combinations of the CP measurements.

Clause 8. The method of any of clauses 1-7, wherein determining the distance estimate from each base station to the UE using the sequential search of combinations of the CP measurements from the wide lane to the narrow lane comprises determining the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 9. The method of clause 8, further comprising rejecting outlier distance estimates from one or more lane combinations of the CP measurements in determining the distance estimate from each base station to the UE.

Clause 10. The method of any of clauses 1-9, wherein a measurement period or reporting time for determining the distance estimate from each base station to the UE is based on a number of lane combinations used in the sequential search of combinations of the CP measurements.

Clause 11. The method of clause 1, further comprising sending location information to a location server, wherein the location information comprises at least one of the distance estimate from each base station to the UE and a location estimated determined based on the distance estimate from each base station to the UE.

Clause 12. A user equipment (UE) configured for supporting carrier phase positioning of the UE in a terrestrial wireless network, comprising: a wireless transceiver configured to wirelessly communicate with entities in a wireless network; at least one memory; at least one processor coupled to the wireless transceiver and the at least one memory, wherein the at least one processor is configured to: receive, via the wireless transceiver, positioning signals from base stations in the terrestrial wireless network; perform carrier phase (CP) measurements of the positioning signals received from the base stations; and determine a distance estimate from each base station to the UE using a sequential search of combinations of the CP measurements from a wide lane combination to a narrow lane combination, wherein results from the wide lane combination of the CP measurements is used in the sequential search.

Clause 13. The UE of clause 12, wherein the sequential search is performed from a widest lane combination of the CP measurements to a narrowest lane of combination of the CP measurements.

Clause 14. The UE of any of clauses 12-13, wherein, in the sequential search of combinations of the CP measurements, a distance estimate from the wide lane combination of the CP measurements is used to resolve an integer ambiguity of one or more subsequent narrow lane combinations of the CP measurements.

Clause 15. The UE of any of clauses 12-13, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 16. The UE of any of clauses 12-13, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 17. The UE of clause 16, wherein the distance estimate is determined based on at least a combination of the median distance estimate from the plurality of wide lane combinations of the CP measurements and a second median distance estimate from the one or more subsequent narrow lane combinations of the CP measurements.

Clause 18. The UE of any of clauses 12-17, wherein each lane combination of the CP measurements comprises a plurality of combinations of the CP measurements.

Clause 19. The UE of any of clauses 12-18, wherein, to determine the distance estimate from each base station to the UE using the sequential search of combinations of the CP measurements from the wide lane to the narrow lane, the at least one processor is configured to determine the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 20. The UE of clause 19, wherein the at least one processor is further configured to reject outlier distance estimates from one or more lane combinations of the CP measurements in determining the distance estimate from each base station to the UE.

Clause 21. The UE of any of clauses 12-20, wherein a measurement period or reporting time for determining the distance estimate from each base station to the UE is based on a number of lane combinations used in the sequential search of combinations of the CP measurements.

Clause 22. The UE of any of clauses 12-21, wherein the at least one processor is further configured to send, via the wireless transceiver, location information to a location server, wherein the location information comprises at least one of the distance estimate from each base station to the UE and a location estimated determined based on the distance estimate from each base station to the UE.

Clause 23. A user equipment (UE) configured for supporting carrier phase positioning of the UE in a terrestrial wireless network, comprising: means for receiving positioning signals from base stations in the terrestrial wireless network; means for performing carrier phase (CP) measurements of the positioning signals received from the base stations; and means for determining a distance estimate from each base station to the UE using a sequential search of combinations of the CP measurements from a wide lane combination to a narrow lane combination, wherein results from the wide lane combination of the CP measurements is used in the sequential search.

Clause 24. The UE of clause 23, wherein the sequential search is performed from a widest lane combination of the CP measurements to a narrowest lane of combination of the CP measurements.

Clause 25. The UE of any of clauses 23-24, wherein, in the sequential search of combinations of the CP measurements, a distance estimate from the wide lane combination of the CP measurements is used to resolve an integer ambiguity of one or more subsequent narrow lane combinations of the CP measurements.

Clause 26. The UE of any of clauses 23-24, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 27. The UE of any of clauses 23-24, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 28. The UE of clause 27, wherein the distance estimate is determined based on at least a combination of the median distance estimate from the plurality of wide lane combinations of the CP measurements and a second median distance estimate from the one or more subsequent narrow lane combinations of the CP measurements.

Clause 29. The UE of any of clauses 23-28, wherein each lane combination of the CP measurements comprises a plurality of combinations of the CP measurements.

Clause 30. The UE of any of clauses 23-29, wherein the means for determining the distance estimate from each base station to the UE using the sequential search of combinations of the CP measurements from the wide lane to the narrow lane comprises means for determining the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 31. The UE of clause 30, further comprising means for rejecting outlier distance estimates from one or more lane combinations of the CP measurements in determining the distance estimate from each base station to the UE.

Clause 32. The UE of any of clauses 23-31, wherein a measurement period or reporting time for determining the distance estimate from each base station to the UE is based on a number of lane combinations used in the sequential search of combinations of the CP measurements.

Clause 33. The UE of any of clauses 23-32, further comprising means for sending location information to a location server, wherein the location information comprises at least one of the distance estimate from each base station to the UE and a location estimated determined based on the distance estimate from each base station to the UE.

Clause 34. A non-transitory storage medium including program code stored thereon, the program code is operable to configure at least one processor in a user equipment (UE) for supporting carrier phase positioning of the UE in a terrestrial wireless network, the program code comprising instructions to: receive positioning signals from base stations in the terrestrial wireless network; perform carrier phase (CP) measurements of the positioning signals received from the base stations; and determine a distance estimate from each base station to the UE using a sequential search of combinations of the CP measurements from a wide lane combination to a narrow lane combination, wherein results from the wide lane combination of the CP measurements is used in the sequential search.

Clause 35. The non-transitory storage medium of clause 34, wherein the sequential search is performed from a widest lane combination of the CP measurements to a narrowest lane of combination of the CP measurements.

Clause 36. The non-transitory storage medium of any of clauses 34-35, wherein, in the sequential search of combinations of the CP measurements, a distance estimate from the wide lane combination of the CP measurements is used to resolve an integer ambiguity of one or more subsequent narrow lane combinations of the CP measurements.

Clause 37. The non-transitory storage medium of any of clauses 34-35, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 38. The non-transitory storage medium of any of clauses 34-35, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 39. The non-transitory storage medium of clause 38, wherein the distance estimate is determined based on at least a combination of the median distance estimate from the plurality of wide lane combinations of the CP measurements and a second median distance estimate from the one or more subsequent narrow lane combinations of the CP measurements.

Clause 40. The non-transitory storage medium of any of clauses 34-39, wherein each lane combination of the CP measurements comprises a plurality of combinations of the CP measurements.

Clause 41. The non-transitory storage medium of any of clauses 34-40, wherein the instructions to determine the distance estimate from each base station to the UE using the sequential search of combinations of the CP measurements from the wide lane to the narrow lane comprises instructions to determine the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 42. The non-transitory storage medium of clause 41, wherein the program code further comprises instructions to reject outlier distance estimates from one or more lane combinations of the CP measurements in determining the distance estimate from each base station to the UE.

Clause 43. The non-transitory storage medium of any of clauses 34-42, wherein a measurement period or reporting time for determining the distance estimate from each base station to the UE is based on a number of lane combinations used in the sequential search of combinations of the CP measurements.

Clause 44. The non-transitory storage medium of any of clauses 34-43, wherein the program code is further comprises instructions to send location information to a location server, wherein the location information comprises at least one of the distance estimate from each base station to the UE and a location estimated determined based on the distance estimate from each base station to the UE.

Clause 45. A method performed by a user equipment (UE) for supporting carrier phase positioning of the UE in a terrestrial wireless network, comprising: receiving positioning signals from base stations in the terrestrial wireless network; performing carrier phase (CP) measurements of the positioning signals received from the base stations; and sending location information to a location server, wherein the location information comprises the carrier phase measurements or one or more combinations of the carrier phase measurements to enable a distance estimate from each base station to the UE determined using a sequential search of combinations of the CP measurements from a wide lane combination to a narrow lane combination, wherein results from the wide lane combination of the CP measurements is used in the sequential search.

Clause 46. The method of clause 45, wherein the sequential search is performed from a widest lane combination of the CP measurements to a narrowest lane of combination of the CP measurements.

Clause 47. The method of any of clauses 45-46, wherein, in the sequential search of combinations of the CP measurements, a distance estimate from the wide lane combination of the CP measurements is used to resolve an integer ambiguity of one or more subsequent narrow lane combinations of the CP measurements.

Clause 48. The method of any of clauses 45-46, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 49. The method of any of clauses 45-46, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 50. The method of clause 49, wherein the distance estimate is determined based on at least a combination of the median distance estimate from the plurality of wide lane combinations of the CP measurements and a second median distance estimate from the one or more subsequent narrow lane combinations of the CP measurements.

Clause 51. The method of any of clauses 45-50, wherein each lane combination of the CP measurements comprises a plurality of combinations of the CP measurements.

Clause 52. The method of any of clauses 45-51, wherein the distance estimate from each base station to the UE determined using the sequential search of combinations of the CP measurements from the wide lane to the narrow lane is based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 53. The method of any of clauses 45-52, wherein a measurement period or reporting time for sending the location information is based on a number of lane combinations used in the sequential search of combinations of the CP measurements.

Clause 54. A user equipment (UE) configured for supporting carrier phase positioning of the UE in a terrestrial wireless network, comprising: a wireless transceiver configured to wirelessly communicate with entities in a wireless network; at least one memory; at least one processor coupled to the wireless transceiver and the at least one memory, wherein the at least one processor is configured to: receive, via the wireless transceiver, positioning signals from base stations in the terrestrial wireless network; perform carrier phase (CP) measurements of the positioning signals received from the base stations; and send, via the wireless transceiver, location information to a location server, wherein the location information comprises the carrier phase measurements or one or more combinations of the carrier phase measurements to enable a distance estimate from each base station to the UE determined using a sequential search of combinations of the CP measurements from a wide lane combination to a narrow lane combination, wherein results from the wide lane combination of the CP measurements is used in the sequential search.

Clause 55. The UE of clause 54, wherein the sequential search is performed from a widest lane combination of the CP measurements to a narrowest lane of combination of the CP measurements.

Clause 56. The UE of any of clauses 54-55, wherein, in the sequential search of combinations of the CP measurements, a distance estimate from the wide lane combination of the CP measurements is used to resolve an integer ambiguity of one or more subsequent narrow lane combinations of the CP measurements.

Clause 57. The UE of any of clauses 54-55, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 58. The UE of any of clauses 54-55, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 59. The UE of clause 58, wherein the distance estimate is determined based on at least a combination of the median distance estimate from the plurality of wide lane combinations of the CP measurements and a second median distance estimate from the one or more subsequent narrow lane combinations of the CP measurements.

Clause 60. The UE of any of clauses 54-59, wherein each lane combination of the CP measurements comprises a plurality of combinations of the CP measurements.

Clause 61. The UE of any of clauses 54-60, wherein the distance estimate from each base station to the UE determined using the sequential search of combinations of the CP measurements from the wide lane to the narrow lane is based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 62. The UE of any of clauses 54-61, wherein a measurement period or reporting time for sending the location information is based on a number of lane combinations used in the sequential search of combinations of the CP measurements.

Clause 63. A user equipment (UE) configured for supporting carrier phase positioning of the UE in a terrestrial wireless network, comprising: means for receiving positioning signals from base stations in the terrestrial wireless network; means for performing carrier phase (CP) measurements of the positioning signals received from the base stations; and means for sending location information to a location server, wherein the location information comprises the carrier phase measurements or one or more combinations of the carrier phase measurements to enable a distance estimate from each base station to the UE determined using a sequential search of combinations of the CP measurements from a wide lane combination to a narrow lane combination, wherein results from the wide lane combination of the CP measurements is used in the sequential search.

Clause 64. The UE of clause 63, wherein the sequential search is performed from a widest lane combination of the CP measurements to a narrowest lane of combination of the CP measurements.

Clause 65. The UE of any of clauses 63-64, wherein, in the sequential search of combinations of the CP measurements, a distance estimate from the wide lane combination of the CP measurements is used to resolve an integer ambiguity of one or more subsequent narrow lane combinations of the CP measurements.

Clause 66. The UE of any of clauses 63-64, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 67. The UE of any of clauses 63-64, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 68. The UE of clause 67, wherein the distance estimate is determined based on at least a combination of the median distance estimate from the plurality of wide lane combinations of the CP measurements and a second median distance estimate from the one or more subsequent narrow lane combinations of the CP measurements.

Clause 69. The UE of any of clauses 63-68, wherein each lane combination of the CP measurements comprises a plurality of combinations of the CP measurements.

Clause 70. The UE of any of clauses 63-69, wherein the distance estimate from each base station to the UE determined using the sequential search of combinations of the CP measurements from the wide lane to the narrow lane is based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 71. The UE of any of clauses 63-70, wherein a measurement period or reporting time for sending the location information is based on a number of lane combinations used in the sequential search of combinations of the CP measurements.

Clause 72. A non-transitory storage medium including program code stored thereon, the program code is operable to configure at least one processor in a user equipment (UE) for supporting carrier phase positioning of the UE in a terrestrial wireless network, the program code comprising instructions to: receive positioning signals from base stations in the terrestrial wireless network; perform carrier phase (CP) measurements of the positioning signals received from the base stations; and send location information to a location server, wherein the location information comprises the carrier phase measurements or one or more combinations of the carrier phase measurements to enable a distance estimate from each base station to the UE determined using a sequential search of combinations of the CP measurements from a wide lane combination to a narrow lane combination, wherein results from the wide lane combination of the CP measurements is used in the sequential search.

Clause 73. The non-transitory storage medium of clause 72, wherein the sequential search is performed from a widest lane combination of the CP measurements to a narrowest lane of combination of the CP measurements.

Clause 74. The non-transitory storage medium of any of clauses 72-73, wherein, in the sequential search of combinations of the CP measurements, a distance estimate from the wide lane combination of the CP measurements is used to resolve an integer ambiguity of one or more subsequent narrow lane combinations of the CP measurements.

Clause 75. The non-transitory storage medium of any of clauses 72-73, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 76. The non-transitory storage medium of any of clauses 72-73, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 77. The non-transitory storage medium of clause 76, wherein the distance estimate is determined based on at least a combination of the median distance estimate from the plurality of wide lane combinations of the CP measurements and a second median distance estimate from the one or more subsequent narrow lane combinations of the CP measurements.

Clause 78. The non-transitory storage medium of any of clauses 72-77, wherein each lane combination of the CP measurements comprises a plurality of combinations of the CP measurements.

Clause 79. The non-transitory storage medium of any of clauses 72-78, wherein the distance estimate from each base station to the UE determined using the sequential search of combinations of the CP measurements from the wide lane to the narrow lane is based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 80. The non-transitory storage medium of any of clauses 72-79, wherein a measurement period or reporting time for sending the location information is based on a number of lane combinations used in the sequential search of combinations of the CP measurements.

Clause 81. A method performed by a location server for supporting carrier phase positioning of a user equipment (UE) in a terrestrial wireless network, comprising: receiving from the UE carrier phase (CP) measurements of positioning signal received by the UE from base stations in the terrestrial wireless network; and determining a distance estimate from each base station to the UE using a sequential search of combinations of the CP measurements from a wide lane combination to a narrow lane combination, wherein results from the wide lane combination of the CP measurements is used in the sequential search.

Clause 82. The method of clause 81, wherein the sequential search is performed from a widest lane combination of the CP measurements to a narrowest lane of combination of the CP measurements.

Clause 83. The method of any of clauses 81-82, wherein, in the sequential search of combinations of the CP measurements, a distance estimate from the wide lane combination of the CP measurements is used to resolve an integer ambiguity of one or more subsequent narrow lane combinations of the CP measurements.

Clause 84. The method of any of clauses 81-82, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 85. The method of any of clauses 81-82, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 86. The method of clause 85, wherein the distance estimate is determined based on at least a combination of the median distance estimate from the plurality of wide lane combinations of the CP measurements and a second median distance estimate from the one or more subsequent narrow lane combinations of the CP measurements.

Clause 87. The method of any of clauses 81-86, wherein each lane combination of the CP measurements comprises a plurality of combinations of the CP measurements.

Clause 88. The method of any of clauses 81-87, wherein determining the distance estimate from each base station to the UE using the sequential search of combinations of the CP measurements from the wide lane to the narrow lane comprises determining the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 89. The method of clause 88, further comprising rejecting outlier distance estimates from one or more lane combinations of the CP measurements in determining the distance estimate from each base station to the UE.

Clause 90. The method of any of clauses 81-89, wherein a measurement period or reporting time for determining the distance estimate from each base station to the UE is based on a number of lane combinations used in the sequential search of combinations of the CP measurements.

Clause 91. A location server configured for supporting carrier phase positioning of a user equipment (UE) in a terrestrial wireless network, comprising: an external interface configured to communicate with entities in a wireless network; at least one memory; at least one processor coupled to the external interface and the at least one memory, wherein the at least one processor is configured to: receive, via the external interface, from the UE carrier phase (CP) measurements of positioning signal received by the UE from base stations in the terrestrial wireless network; and determine a distance estimate from each base station to the UE using a sequential search of combinations of the CP measurements from a wide lane combination to a narrow lane combination, wherein results from the wide lane combination of the CP measurements is used in the sequential search.

Clause 92. The location server of clause 91, wherein the sequential search is performed from a widest lane combination of the CP measurements to a narrowest lane of combination of the CP measurements.

Clause 93. The location server of any of clauses 91-92, wherein, in the sequential search of combinations of the CP measurements, a distance estimate from the wide lane combination of the CP measurements is used to resolve an integer ambiguity of one or more subsequent narrow lane combinations of the CP measurements.

Clause 94. The location server of any of clauses 91-92, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 95. The location server of any of clauses 91-92, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 96. The location server of clause 95, wherein the distance estimate is determined based on at least a combination of the median distance estimate from the plurality of wide lane combinations of the CP measurements and a second median distance estimate from the one or more subsequent narrow lane combinations of the CP measurements.

Clause 97. The location server of any of clauses 91-96, wherein each lane combination of the CP measurements comprises a plurality of combinations of the CP measurements.

Clause 98. The location server of any of clauses 91-97, wherein the at least one processor configured to determine the distance estimate from each base station to the UE using the sequential search of combinations of the CP measurements from the wide lane to the narrow lane is configured to determine the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 99. The location server of clause 98, wherein the at least one processor is further configured to reject outlier distance estimates from one or more lane combinations of the CP measurements in determining the distance estimate from each base station to the UE.

Clause 100. The location server of any of clauses 91-99, wherein a measurement period or reporting time for determining the distance estimate from each base station to the UE is based on a number of lane combinations used in the sequential search of combinations of the CP measurements.

Clause 101. A location server configured for supporting carrier phase positioning of a user equipment (UE) in a terrestrial wireless network, comprising: means for receiving from the UE carrier phase (CP) measurements of positioning signal received by the UE from base stations in the terrestrial wireless network; and means for determining a distance estimate from each base station to the UE using a sequential search of combinations of the CP measurements from a wide lane combination to a narrow lane combination, wherein results from the wide lane combination of the CP measurements is used in the sequential search.

Clause 102. The location server of clause 101, wherein the sequential search is performed from a widest lane combination of the CP measurements to a narrowest lane of combination of the CP measurements.

Clause 103. The location server of any of clauses 101-102, wherein, in the sequential search of combinations of the CP measurements, a distance estimate from the wide lane combination of the CP measurements is used to resolve an integer ambiguity of one or more subsequent narrow lane combinations of the CP measurements.

Clause 104. The location server of any of clauses 101-102, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 105. The location server of any of clauses 101-102, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 106. The location server of clause 105, wherein the distance estimate is determined based on at least a combination of the median distance estimate from the plurality of wide lane combinations of the CP measurements and a second median distance estimate from the one or more subsequent narrow lane combinations of the CP measurements.

Clause 107. The location server of any of clauses 101-106, wherein each lane combination of the CP measurements comprises a plurality of combinations of the CP measurements.

Clause 108. The location server of any of clauses 101-107, wherein the means for determining the distance estimate from each base station to the UE using the sequential search of combinations of the CP measurements from the wide lane to the narrow lane comprises means for determining the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 109. The location server of clause 108, further comprising means for rejecting outlier distance estimates from one or more lane combinations of the CP measurements in determining the distance estimate from each base station to the UE.

Clause 110. The location server of any of clauses 101-109, wherein a measurement period or reporting time for determining the distance estimate from each base station to the UE is based on a number of lane combinations used in the sequential search of combinations of the CP measurements.

Clause 111. A non-transitory storage medium including program code stored thereon, the program code is operable to configure at least one processor in a location server for supporting carrier phase positioning of a user equipment (UE) in a terrestrial wireless network, the program code comprising instructions to: receive from the UE carrier phase (CP) measurements of positioning signal received by the UE from base stations in the terrestrial wireless network; and determine a distance estimate from each base station to the UE using a sequential search of combinations of the CP measurements from a wide lane combination to a narrow lane combination, wherein results from the wide lane combination of the CP measurements is used in the sequential search.

Clause 112. The non-transitory storage medium of clause 111, wherein the sequential search is performed from a widest lane combination of the CP measurements to a narrowest lane of combination of the CP measurements.

Clause 113. The non-transitory storage medium of any of clauses 111-112, wherein, in the sequential search of combinations of the CP measurements, a distance estimate from the wide lane combination of the CP measurements is used to resolve an integer ambiguity of one or more subsequent narrow lane combinations of the CP measurements.

Clause 114. The non-transitory storage medium of any of clauses 111-112, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

Clause 115. The non-transitory storage medium of any of clauses 111-112, wherein, in the sequential search of combinations of the CP measurements, a median distance estimate from a plurality of wide lane combinations of the CP measurements is used to resolve an integer ambiguity of one or more subsequent narrow lane combinations of the CP measurements.

Clause 116. The non-transitory storage medium of clause 115, wherein the distance estimate is determined based on at least a combination of the median distance estimate from the plurality of wide lane combinations of the CP measurements and a second median distance estimate from the one or more subsequent narrow lane combinations of the CP measurements.

Clause 117. The non-transitory storage medium of any of clauses 111-116, wherein each lane combination of the CP measurements comprises a plurality of combinations of the CP measurements.

Clause 118. The non-transitory storage medium of any of clauses 111-117, wherein the instructions to determine the distance estimate from each base station to the UE using the sequential search of combinations of the CP measurements from the wide lane to the narrow lane comprise instructions to determine the distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof.

Clause 119. The non-transitory storage medium of clause 118, wherein the program code further comprises instructions to reject outlier distance estimates from one or more lane combinations of the CP measurements in determining the distance estimate from each base station to the UE.

Clause 120. The non-transitory storage medium of any of clauses 111-119, wherein a measurement period or reporting time for determining the distance estimate from each base station to the UE is based on a number of lane combinations used in the sequential search of combinations of the CP measurements.

Clause 121. A method performed by a user equipment (UE) for supporting carrier phase positioning of the UE in a terrestrial wireless network, comprising: receiving from an entity in the terrestrial wireless network an expected trip time or expected integer cycle associated with at least one positioning signal from at least one transmitting entity; receiving the at least one positioning signal from the at least one transmitting entity; performing CP measurements of the at least one positioning signal received from the at least one transmitting entity; and determining a distance estimate from the at least one transmitting entity to the UE based on the CP measurements and the expected trip time or the expected integer cycle associated with the at least one positioning signal from the at least one transmitting entity.

Clause 122. The method of clause 121, wherein the expected trip time or the expected integer cycle is associated to one of a PRS resource, a PRS resource set, a transmission reception point, or a combination thereof.

Clause 123. The method of any of clauses 121-122, wherein the at least one transmitting entity comprises a base station or a sidelink UE.

Clause 124. The method of any of clauses 121-123, wherein the entity in the terrestrial wireless network comprises a location server or a sidelink UE.

Clause 125. The method of any of clauses 121-124, further comprising: sending a capabilities message to a location server indicating that the UE is capable of performing CP positioning measurements; and receiving assistance data from the location server associated with a CP positioning method at least based on the received capabilities message, wherein the expected trip time or the expected integer cycle associated with the at least one positioning signal from the at least one transmitting entity is received in positioning assistance data.

Clause 126. The method of clause 125, wherein the positioning assistance data is received via on-demand, unicast, or broadcast.

Clause 127. The method of any of clauses 121-126, wherein the expected trip time or the expected integer cycle associated with the at least one positioning signal from the at least one transmitting entity is for only one transmitting entity, the method further comprising: receiving at least one of a Reference Signal Time Difference (RSTD), Timing Advance (TA), or a combination thereof for the one transmitting entity and one or more other transmitting entities; and determining an expected trip time or an expected integer cycle associated with at least one positioning signal from the one or more other transmitting entities based on the at least one of the RSTD, TA, or the combination thereof and the expected trip time or the expected integer cycle associated with the at least one positioning signal from the one transmitting entity.

Clause 128. The method of any of clauses 121-127, further comprising receiving an expected trip time uncertainty with the expected trip time.

Clause 129. The method of clause 128, further comprising receiving integrity information comprising at least one of a variance of the expected trip time, a variance of the expected trip time uncertainty, or a combination thereof.

Clause 130. The method of any of clauses 121-129, wherein the expected integer cycle is based on at least one of an expected lane combinations of the CP measurements, expected subcarrier spacing, expected wavelength, or a combination thereof.

Clause 131. The method of any of clauses 121-130, wherein determining the distance estimate from the at least one transmitting entity to the UE comprises defining a search space to determine the distance estimate from the at least one transmitting entity to the UE using the expected trip time or the expected integer cycle associated with at least one the positioning signal from the at least one transmitting entity.

Clause 132. The method of clause 131, further comprising determining an uncertainty for an integer ambiguity in the CP measurements of the at least one positioning signal based on the distance estimate.

Clause 133. A user equipment (UE) configured for supporting carrier phase positioning of the UE in a terrestrial wireless network, comprising: a wireless transceiver configured to wirelessly communicate with entities in a wireless network; at least one memory; at least one processor coupled to the wireless transceiver and the at least one memory, wherein the at least one processor is configured to: receive, via the wireless transceiver, from an entity in the terrestrial wireless network an expected trip time or expected integer cycle associated with at least one positioning signal from at least one transmitting entity; receive, via the wireless transceiver, the at least one positioning signal from the at least one transmitting entity; perform CP measurements of the at least one positioning signal received from the at least one transmitting entity; and determine a distance estimate from the at least one transmitting entity to the UE based on the CP measurements and the expected trip time or the expected integer cycle associated with the at least one positioning signal from the at least one transmitting entity.

Clause 134. The UE of clause 133, wherein the expected trip time or the expected integer cycle is associated to one of a PRS resource, a PRS resource set, a transmission reception point, or a combination thereof.

Clause 135. The UE of any of clauses 133-134, wherein the at least one transmitting entity comprises a base station or a sidelink UE.

Clause 136. The UE of any of clauses 133-135, wherein the entity in the terrestrial wireless network comprises a location server or a sidelink UE.

Clause 137. The UE of any of clauses 133-136, wherein the at least one processor is further configured to: send, via the wireless transceiver, a capabilities message to a location server indicating that the UE is capable of performing CP positioning measurements; and receive, via the wireless transceiver, assistance data from the location server associated with a CP positioning method at least based on the received capabilities message, wherein the expected trip time or the expected integer cycle associated with the at least one positioning signal from the at least one transmitting entity is received in positioning assistance data.

Clause 138. The UE of clause 137, wherein the positioning assistance data is received via on-demand, unicast, or broadcast.

Clause 139. The UE of any of clauses 133-138, wherein the expected trip time or the expected integer cycle associated with the at least one positioning signal from the at least one transmitting entity is for only one transmitting entity, wherein the at least one processor is further configured to: receive, via the wireless transceiver, at least one of a Reference Signal Time Difference (RSTD), Timing Advance (TA), or a combination thereof for the one transmitting entity and one or more other transmitting entities; and determine an expected trip time or an expected integer cycle associated with at least one positioning signal from the one or more other transmitting entities based on the at least one of the RSTD, TA, or the combination thereof and the expected trip time or the expected integer cycle associated with the at least one positioning signal from the one transmitting entity.

Clause 140. The UE of any of clauses 133-139, wherein the at least one processor is further configured to receive, via the wireless transceiver, an expected trip time uncertainty with the expected trip time.

Clause 141. The UE of clause 140, wherein the at least one processor is further configured to receive, via the wireless transceiver, integrity information comprising at least one of a variance of the expected trip time, a variance of the expected trip time uncertainty, or a combination thereof.

Clause 142. The UE of any of clauses 133-141, wherein the expected integer cycle is based on at least one of an expected lane combinations of the CP measurements, expected subcarrier spacing, expected wavelength, or a combination thereof.

Clause 143. The UE of any of clauses 133-142, wherein the at least one processor is configured to determine the distance estimate from the at least one transmitting entity to the UE by being configured to define a search space to determine the distance estimate from the at least one transmitting entity to the UE using the expected trip time or the expected integer cycle associated with at least one the positioning signal from the at least one transmitting entity.

Clause 144. The UE of clause 143, wherein the at least one processor is further configured to determine an uncertainty for an integer ambiguity in the CP measurements of the at least one positioning signal based on the distance estimate.

Clause 145. A user equipment (UE) configured for supporting carrier phase positioning of the UE in a terrestrial wireless network, comprising: means for receiving from an entity in the terrestrial wireless network an expected trip time or expected integer cycle associated with at least one positioning signal from at least one transmitting entity; means for receiving the at least one positioning signal from the at least one transmitting entity; means for performing CP measurements of the at least one positioning signal received from the at least one transmitting entity; and means for determining a distance estimate from the at least one transmitting entity to the UE based on the CP measurements and the expected trip time or the expected integer cycle associated with the at least one positioning signal from the at least one transmitting entity.

Clause 146. The UE of clause 145, wherein the expected trip time or the expected integer cycle is associated to one of a PRS resource, a PRS resource set, a transmission reception point, or a combination thereof.

Clause 147. The UE of any of clauses 145-146, wherein the at least one transmitting entity comprises a base station or a sidelink UE.

Clause 148. The UE of any of clauses 145-147, wherein the entity in the terrestrial wireless network comprises a location server or a sidelink UE.

Clause 149. The UE of any of clauses 145-148, further comprising: means for sending a capabilities message to a location server indicating that the UE is capable of performing CP positioning measurements; and means for receiving assistance data from the location server associated with a CP positioning method at least based on the received capabilities message, wherein the expected trip time or the expected integer cycle associated with the at least one positioning signal from the at least one transmitting entity is received in positioning assistance data.

Clause 150. The UE of clause 149, wherein the positioning assistance data is received via on-demand, unicast, or broadcast.

Clause 151. The UE of any of clauses 145-150, wherein the expected trip time or the expected integer cycle associated with the at least one positioning signal from the at least one transmitting entity is for only one transmitting entity, further comprising: means for receiving at least one of a Reference Signal Time Difference (RSTD), Timing Advance (TA), or a combination thereof for the one transmitting entity and one or more other transmitting entities; and means for determining an expected trip time or an expected integer cycle associated with at least one positioning signal from the one or more other transmitting entities based on the at least one of the RSTD, TA, or the combination thereof and the expected trip time or the expected integer cycle associated with the at least one positioning signal from the one transmitting entity.

Clause 152. The UE of any of clauses 145-151, further comprising means for receiving an expected trip time uncertainty with the expected trip time.

Clause 153. The UE of clause 152, further comprising means for receiving integrity information comprising at least one of a variance of the expected trip time, a variance of the expected trip time uncertainty, or a combination thereof.

Clause 154. The UE of any of clauses 145-153, wherein the expected integer cycle is based on at least one of an expected lane combinations of the CP measurements, expected subcarrier spacing, expected wavelength, or a combination thereof.

Clause 155. The UE of any of clauses 145-154, wherein the means for determining the distance estimate from the at least one transmitting entity to the UE comprises means for defining a search space to determine the distance estimate from the at least one transmitting entity to the UE using the expected trip time or the expected integer cycle associated with at least one the positioning signal from the at least one transmitting entity.

Clause 156. The UE of clause 155, further comprising means for determining an uncertainty for an integer ambiguity in the CP measurements of the at least one positioning signal based on the distance estimate.

Clause 157. A non-transitory storage medium including program code stored thereon, the program code is operable to configure at least one processor in a user equipment (UE) for supporting carrier phase positioning of the UE in a terrestrial wireless network, the program code comprising instructions to: receive from an entity in the terrestrial wireless network an expected trip time or expected integer cycle associated with at least one positioning signal from at least one transmitting entity; receive the at least one positioning signal from the at least one transmitting entity; perform CP measurements of the at least one positioning signal received from the at least one transmitting entity; and determine a distance estimate from the at least one transmitting entity to the UE based on the CP measurements and the expected trip time or the expected integer cycle associated with the at least one positioning signal from the at least one transmitting entity.

Clause 158. The non-transitory storage medium of clause 157, wherein the expected trip time or the expected integer cycle is associated to one of a PRS resource, a PRS resource set, a transmission reception point, or a combination thereof.

Clause 159. The non-transitory storage medium of any of clauses 157-158, wherein the at least one transmitting entity comprises a base station or a sidelink UE.

Clause 160. The non-transitory storage medium of any of clauses 157-159, wherein the entity in the terrestrial wireless network comprises a location server or a sidelink UE.

Clause 161. The non-transitory storage medium of any of clauses 157-160, wherein the program code further comprises instructions to: send a capabilities message to a location server indicating that the UE is capable of performing CP positioning measurements; and receive assistance data from the location server associated with a CP positioning method at least based on the received capabilities message, wherein the expected trip time or the expected integer cycle associated with the at least one positioning signal from the at least one transmitting entity is received in positioning assistance data.

Clause 162. The non-transitory storage medium of clause 161, wherein the positioning assistance data is received via on-demand, unicast, or broadcast.

Clause 163. The non-transitory storage medium of any of clauses 157-162, wherein the expected trip time or the expected integer cycle associated with the at least one positioning signal from the at least one transmitting entity is for only one transmitting entity, wherein the program code further comprises instructions to: receive at least one of a Reference Signal Time Difference (RSTD), Timing Advance (TA), or a combination thereof for the one transmitting entity and one or more other transmitting entities; and determine an expected trip time or an expected integer cycle associated with at least one positioning signal from the one or more other transmitting entities based on the at least one of the RSTD, TA, or the combination thereof and the expected trip time or the expected integer cycle associated with the at least one positioning signal from the one transmitting entity.

Clause 164. The non-transitory storage medium of any of clauses 157-163, wherein the program code further comprises instructions to receive an expected trip time uncertainty with the expected trip time.

Clause 165. The non-transitory storage medium of clause 164, wherein the program code further comprises instructions to receive integrity information comprising at least one of a variance of the expected trip time, a variance of the expected trip time uncertainty, or a combination thereof.

Clause 166. The non-transitory storage medium of any of clauses 157-165, wherein the expected integer cycle is based on at least one of an expected lane combinations of the CP measurements, expected subcarrier spacing, expected wavelength, or a combination thereof.

Clause 167. The non-transitory storage medium of any of clauses 157-166, wherein the instructions to determine the distance estimate from the at least one transmitting entity to the UE comprises instructions to define a search space to determine the distance estimate from the at least one transmitting entity to the UE using the expected trip time or the expected integer cycle associated with at least one the positioning signal from the at least one transmitting entity.

Clause 168. The non-transitory storage medium of clause 167, wherein the at least one processor is further configured to determine an uncertainty for an integer ambiguity in the CP measurements of the at least one positioning signal based on the distance estimate.

Clause 169. A method performed by a location server for supporting carrier phase positioning of a user equipment (UE) in a terrestrial wireless network, comprising: receiving a capabilities message from the UE indicating that the UE is capable of performing carrier phase (CP) positioning measurements; sending assistance data to the UE associated with a CP positioning method at least based on the received capabilities message, wherein the assistance data includes an expected trip time or expected integer cycle associated with at least one positioning signal from at least one transmitting entity; wherein a distance estimate from the at least one transmitting entity to the UE is determined based on CP measurements of the at least one positioning signal received by the UE from the at least one transmitting entity and the expected trip time or the expected integer cycle for the at least one positioning signal from the at least one transmitting entity.

Clause 170. The method of clause 169, wherein the expected trip time or the expected integer cycle is associated to one of a PRS resource, a PRS resource set, a transmission reception point, or a combination thereof.

Clause 171. The method of any of clauses 169-170, wherein the at least one transmitting entity comprises a base station or a sidelink UE.

Clause 172. The method of any of clauses 169-171, wherein the expected trip time or the expected integer cycle for the at least one positioning signal from the at least one transmitting entity is for only one transmitting entity, the method further comprising: sending at least one of a Reference Signal Time Difference (RSTD), Timing Advance (TA), or a combination thereof for the one transmitting entity and one or more other transmitting entities, wherein an expected trip time or an expected integer cycle for at least one positioning signal from the one or more other transmitting entities is determined based on the at least one of the RSTD, TA, or the combination thereof and the expected trip time or the expected integer cycle for the at least one positioning signal from the one transmitting entity.

Clause 173. The method of any of clauses 169-172, further comprising sending to the UE an expected trip time uncertainty with the expected trip time.

Clause 174. The method of clause 173, further comprising sending to the UE integrity information comprising at least one of a variance of the expected trip time, a variance of the expected trip time uncertainty, or a combination thereof.

Clause 175. The method of any of clauses 169-174, wherein the expected integer cycle is based on at least one of an expected lane combinations of the CP measurements, expected subcarrier spacing, expected wavelength, or a combination thereof.

Clause 176. The method of any of clauses 169-175, wherein a search space to determine the distance estimate from each transmitting entity to the UE is determined using the expected trip time or the expected integer cycle associated with the at least one positioning signal from the at least one transmitting entity.

Clause 177. The method of clause 176, wherein an uncertainty for an integer ambiguity in the CP measurements of the at least one positioning signal is determined based on the distance estimate.

Clause 178. A location server configured for supporting carrier phase positioning of a user equipment (UE) in a terrestrial wireless network, comprising: an external interface configured to communicate with entities in a wireless network; at least one memory; at least one processor coupled to the external interface and the at least one memory, wherein the at least one processor is configured to: receive, via the external interface, a capabilities message from the UE indicating that the UE is capable of performing carrier phase (CP) positioning measurements; send, via the external interface, assistance data to the UE associated with a CP positioning method at least based on the received capabilities message, wherein the assistance data includes an expected trip time or expected integer cycle associated with at least one positioning signal from at least one transmitting entity; wherein a distance estimate from the at least one transmitting entity to the UE is determined based on CP measurements of the at least one positioning signal received by the UE from the at least one transmitting entity and the expected trip time or the expected integer cycle for the at least one positioning signal from the at least one transmitting entity.

Clause 179. The location server of clause 178, wherein the expected trip time or the expected integer cycle is associated to one of a PRS resource, a PRS resource set, a transmission reception point, or a combination thereof.

Clause 180. The location server of any of clauses 178-179, wherein the at least one transmitting entity comprises a base station or a sidelink UE.

Clause 181. The location server of any of clauses 178-180, wherein the expected trip time or the expected integer cycle for the at least one positioning signal from the at least one transmitting entity is for only one transmitting entity, wherein the at least one processor is further configured to: send, via the external interface, at least one of a Reference Signal Time Difference (RSTD), Timing Advance (TA), or a combination thereof for the one transmitting entity and one or more other transmitting entities, wherein an expected trip time or an expected integer cycle for at least one positioning signal from the one or more other transmitting entities is determined based on the at least one of the RSTD, TA, or the combination thereof and the expected trip time or the expected integer cycle for the at least one positioning signal from the one transmitting entity.

Clause 182. The location server of any of clauses 178-181, wherein the at least one processor is further configured to send, via the external interface, to the UE an expected trip time uncertainty with the expected trip time.

Clause 183. The location server of clause 182, wherein the at least one processor is further configured to send, via the external interface, to the UE integrity information comprising at least one of a variance of the expected trip time, a variance of the expected trip time uncertainty, or a combination thereof.

Clause 184. The location server of any of clauses 178-183, wherein the expected integer cycle is based on at least one of an expected lane combinations of the CP measurements, expected subcarrier spacing, expected wavelength, or a combination thereof.

Clause 185. The location server of any of clauses 178-184, wherein a search space to determine the distance estimate from each transmitting entity to the UE is determined using the expected trip time or the expected integer cycle associated with the at least one positioning signal from the at least one transmitting entity.

Clause 186. The location server of clause 185, wherein an uncertainty for an integer ambiguity in the CP measurements of the at least one positioning signal is determined based on the distance estimate.

Clause 187. A location server configured for supporting carrier phase positioning of a user equipment (UE) in a terrestrial wireless network, comprising: means for receiving a capabilities message from the UE indicating that the UE is capable of performing carrier phase (CP) positioning measurements; means for sending assistance data to the UE associated with a CP positioning method at least based on the received capabilities message, wherein the assistance data includes an expected trip time or expected integer cycle associated with at least one positioning signal from at least one transmitting entity; wherein a distance estimate from the at least one transmitting entity to the UE is determined based on CP measurements of the at least one positioning signal received by the UE from the at least one transmitting entity and the expected trip time or the expected integer cycle for the at least one positioning signal from the at least one transmitting entity.

Clause 188. The location server of clause 187, wherein the expected trip time or the expected integer cycle is associated to one of a PRS resource, a PRS resource set, a transmission reception point, or a combination thereof.

Clause 189. The location server of any of clauses 187-188, wherein the at least one transmitting entity comprises a base station or a sidelink UE.

Clause 190. The location server of any of clauses 187-189, wherein the expected trip time or the expected integer cycle for the at least one positioning signal from the at least one transmitting entity is for only one transmitting entity, further comprising: location server sending at least one of a Reference Signal Time Difference (RSTD), Timing Advance (TA), or a combination thereof for the one transmitting entity and one or more other transmitting entities, wherein an expected trip time or an expected integer cycle for at least one positioning signal from the one or more other transmitting entities is determined based on the at least one of the RSTD, TA, or the combination thereof and the expected trip time or the expected integer cycle for the at least one positioning signal from the one transmitting entity.

Clause 191. The location server of any of clauses 187-190, further comprising means for sending to the UE an expected trip time uncertainty with the expected trip time.

Clause 192. The location server of clause 191, further comprising means for sending to the UE integrity information comprising at least one of a variance of the expected trip time, a variance of the expected trip time uncertainty, or a combination thereof.

Clause 193. The location server of any of clauses 187-192, wherein the expected integer cycle is based on at least one of an expected lane combinations of the CP measurements, expected subcarrier spacing, expected wavelength, or a combination thereof.

Clause 194. The location server of any of clauses 187-193, wherein a search space to determine the distance estimate from each transmitting entity to the UE is determined using the expected trip time or the expected integer cycle associated with the at least one positioning signal from the at least one transmitting entity.

Clause 195. The location server of clause 194, wherein an uncertainty for an integer ambiguity in the CP measurements of the at least one positioning signal is determined based on the distance estimate.

Clause 196. A non-transitory storage medium including program code stored thereon, the program code is operable to configure at least one processor in a location server for supporting carrier phase positioning of a user equipment (UE) in a terrestrial wireless network, the program code comprising instructions to: receive a capabilities message from the UE indicating that the UE is capable of performing carrier phase (CP) positioning measurements; send assistance data to the UE associated with a CP positioning method at least based on the received capabilities message, wherein the assistance data includes an expected trip time or expected integer cycle associated with at least one positioning signal from at least one transmitting entity; wherein a distance estimate from the at least one transmitting entity to the UE is determined based on CP measurements of the at least one positioning signal received by the UE from the at least one transmitting entity and the expected trip time or the expected integer cycle for the at least one positioning signal from the at least one transmitting entity.

Clause 197. The non-transitory storage medium of clause 196, wherein the expected trip time or the expected integer cycle is associated to one of a PRS resource, a PRS resource set, a transmission reception point, or a combination thereof.

Clause 198. The non-transitory storage medium of any of clauses 196-197, wherein the at least one transmitting entity comprises a base station or a sidelink UE.

Clause 199. The non-transitory storage medium of any of clauses 196-198, wherein the expected trip time or the expected integer cycle for the at least one positioning signal from the at least one transmitting entity is for only one transmitting entity, wherein the program code further comprises instructions to: send at least one of a Reference Signal Time Difference (RSTD), Timing Advance (TA), or a combination thereof for the one transmitting entity and one or more other transmitting entities, wherein an expected trip time or an expected integer cycle for at least one positioning signal from the one or more other transmitting entities is determined based on the at least one of the RSTD, TA, or the combination thereof and the expected trip time or the expected integer cycle for the at least one positioning signal from the one transmitting entity.

Clause 200. The non-transitory storage medium of any of clauses 196-199, wherein the program code further comprises instructions to send to the UE an expected trip time uncertainty with the expected trip time.

Clause 201. The non-transitory storage medium of clause 200, wherein the program code further comprises instructions to send to the UE integrity information comprising at least one of a variance of the expected trip time, a variance of the expected trip time uncertainty, or a combination thereof.

Clause 202. The non-transitory storage medium of any of clauses 196-201, wherein the expected integer cycle is based on at least one of an expected lane combinations of the CP measurements, expected subcarrier spacing, expected wavelength, or a combination thereof.

Clause 203. The non-transitory storage medium of any of clauses 196-202, wherein a search space to determine the distance estimate from each transmitting entity to the UE is determined using the expected trip time or the expected integer cycle associated with the at least one positioning signal from the at least one transmitting entity.

Clause 204. The non-transitory storage medium of clause 203, wherein an uncertainty for an integer ambiguity in the CP measurements of the at least one positioning signal is determined based on the distance estimate.

Clause 205. A method performed by a user equipment (UE) for supporting carrier phase positioning of the UE in a terrestrial wireless network, comprising: receiving positioning signals from transmission reception points (TRPs) in the terrestrial wireless network; performing a carrier phase (CP) measurement of each of the positioning signals received from the TRPs for determining a distance estimate from each TRP to the UE; detecting whether a cycle slip of a CP for a positioning signal occurred; and sending a report with an indication of whether the cycle slip of the CP for the positioning signal is detected.

Clause 206. The method of clause 205, wherein the positioning signals are positioning reference signal (PRS) resources, wherein the indication of whether a cycle slip occurred is sent for each TRP and PRS resource.

Clause 207. The method of any of clauses 205-206, wherein the indication of whether the cycle slip of the CP for the positioning signal is detected comprises a field with a Boolean indication of whether the cycle slip is detected.

Clause 208. The method of any of clauses 205-206, wherein the indication of whether the cycle slip of the CP for the positioning signal is detected comprises a field that indicates an amount of the cycle slip or a likelihood that the cycle slip occurred, or a combination thereof.

Clause 209. The method of any of clauses 205-208, wherein the report is sent to one of a location server or a sidelink UE.

Clause 210. A user equipment (UE) configured for supporting carrier phase positioning of the UE in a terrestrial wireless network, comprising: a wireless transceiver configured to wirelessly communicate with entities in a wireless network; at least one memory; at least one processor coupled to the wireless transceiver and the at least one memory, wherein the at least one processor is configured to: receive, via the wireless transceiver, positioning signals from transmission reception points (TRPs) in the terrestrial wireless network; perform a carrier phase (CP) measurement of each of the positioning signals received from the TRPs for determining a distance estimate from each TRP to the UE; detect whether a cycle slip of a CP for a positioning signal occurred; and send, via the wireless transceiver, a report with an indication of whether the cycle slip of the CP for the positioning signal is detected.

Clause 211. The UE of clause 210, wherein the positioning signals are positioning reference signal (PRS) resources, wherein the indication of whether a cycle slip occurred is sent for each TRP and PRS resource.

Clause 212. The UE of any of clauses 210-211, wherein the indication of whether the cycle slip of the CP for the positioning signal is detected comprises a field with a Boolean indication of whether the cycle slip is detected.

Clause 213. The UE of any of clauses 210-211, wherein the indication of whether the cycle slip of the CP for the positioning signal is detected comprises a field that indicates an amount of the cycle slip or a likelihood that the cycle slip occurred, or a combination thereof.

Clause 214. The UE of any of clauses 210-213, wherein the report is sent to one of a location server or a sidelink UE.

Clause 215. A user equipment (UE) configured for supporting carrier phase positioning of the UE in a terrestrial wireless network, comprising: means for receiving positioning signals from transmission reception points (TRPs) in the terrestrial wireless network; means for performing a carrier phase (CP) measurement of each of the positioning signals received from the TRPs for determining a distance estimate from each TRP to the UE; means for detecting whether a cycle slip of a CP for a positioning signal occurred; and means for sending a report with an indication of whether the cycle slip of the CP for the positioning signal is detected.

Clause 216. The UE of clause 215, wherein the positioning signals are positioning reference signal (PRS) resources, wherein the indication of whether a cycle slip occurred is sent for each TRP and PRS resource.

Clause 217. The UE of any of clauses 215-216, wherein the indication of whether the cycle slip of the CP for the positioning signal is detected comprises a field with a Boolean indication of whether the cycle slip is detected.

Clause 218. The UE of any of clauses 215-216, wherein the indication of whether the cycle slip of the CP for the positioning signal is detected comprises a field that indicates an amount of the cycle slip or a likelihood that the cycle slip occurred, or a combination thereof.

Clause 219. The UE of any of clauses 215-218, wherein the report is sent to one of a location server or a sidelink UE.

Clause 220. A non-transitory storage medium including program code stored thereon, the program code is operable to configure at least one processor in a user equipment (UE) for supporting carrier phase positioning of the UE in a terrestrial wireless network, the program code comprising instructions to: receive positioning signals from transmission reception points (TRPs) in the terrestrial wireless network; perform a carrier phase (CP) measurement of each of the positioning signals received from the TRPs for determining a distance estimate from each TRP to the UE; detect whether a cycle slip of a CP for a positioning signal occurred; and send a report with an indication of whether the cycle slip of the CP for the positioning signal is detected.

Clause 221. The non-transitory storage medium of clause 220, wherein the positioning signals are positioning reference signal (PRS) resources, wherein the indication of whether a cycle slip occurred is sent for each TRP and PRS resource.

Clause 222. The non-transitory storage medium of any of clauses 220-221, wherein the indication of whether the cycle slip of the CP for the positioning signal is detected comprises a field with a Boolean indication of whether the cycle slip is detected.

Clause 223. The non-transitory storage medium of any of clauses 220-221, wherein the indication of whether the cycle slip of the CP for the positioning signal is detected comprises a field that indicates an amount of the cycle slip or a likelihood that the cycle slip occurred, or a combination thereof.

Clause 224. The non-transitory storage medium of any of clauses 220-223, wherein the report is sent to one of a location server or a sidelink UE.

Clause 225. A method performed by a location server for supporting carrier phase positioning of a user equipment (UE) in a terrestrial wireless network, comprising: sending a request for location to the UE; and receiving a report from an entity in the terrestrial wireless network with an indication of whether a cycle slip is detected in a carrier phase (CP) of positioning signals received by the entity for determining a distance estimate from the entity to another entity.

Clause 226. The method of clause 225, wherein the entity comprises one of the UE that receives the positioning signals from a transmission reception point (TRP) or the TRP that receives the positioning signals from the UE.

Clause 227. The method of any of clauses 225-226, wherein the positioning signals are positioning reference signal (PRS) resources from a transmission reception point (TRP), wherein the indication of whether the cycle slip is detected is for the TRP and PRS resource.

Clause 228. The method of any of clauses 225-226, wherein the indication of whether the cycle slip is detected comprises a field with a Boolean indication of whether a cycle slip is detected.

Clause 229. The method of any of clauses 225-228, wherein the indication of whether the cycle slip is detected comprises a field that indicates an amount of the cycle slip or a likelihood that the cycle slip occurred, or a combination thereof.

Clause 230. A location server configured for supporting carrier phase positioning of a user equipment (UE) in a terrestrial wireless network, comprising: an external interface configured to communicate with entities in a wireless network; at least one memory; at least one processor coupled to the external interface and the at least one memory, wherein the at least one processor is configured to: send, via the external interface, a request for location to the UE; and receive, via the external interface, a report from an entity in the terrestrial wireless network with an indication of whether a cycle slip is detected in a carrier phase (CP) of positioning signals received by the entity for determining a distance estimate from the entity to another entity.

Clause 231. The location server of clause 230, wherein the entity comprises one of the UE that receives the positioning signals from a transmission reception point (TRP) or the TRP that receives the positioning signals from the UE.

Clause 232. The location server of any of clauses 230-231, wherein the positioning signals are positioning reference signal (PRS) resources from a transmission reception point (TRP), wherein the indication of whether the cycle slip is detected is for the TRP and PRS resource.

Clause 233. The location server of any of clauses 230-231, wherein the indication of whether the cycle slip is detected comprises a field with a Boolean indication of whether a cycle slip is detected.

Clause 234. The location server of any of clauses 230-233, wherein the indication of whether the cycle slip is detected comprises a field that indicates an amount of the cycle slip or a likelihood that the cycle slip occurred, or a combination thereof.

Clause 235. A location server configured for supporting carrier phase positioning of a user equipment (UE) in a terrestrial wireless network, comprising: means for sending a request for location to the UE; and means for receiving a report from an entity in the terrestrial wireless network with an indication of whether a cycle slip is detected in a carrier phase (CP) of positioning signals received by the entity for determining a distance estimate from the entity to another entity.

Clause 236. The location server of clause 235, wherein the entity comprises one of the UE that receives the positioning signals from a transmission reception point (TRP) or the TRP that receives the positioning signals from the UE.

Clause 237. The location server of any of clauses 235-236, wherein the positioning signals are positioning reference signal (PRS) resources from a transmission reception point (TRP), wherein the indication of whether the cycle slip is detected is for the TRP and PRS resource.

Clause 238. The location server of any of clauses 235-236, wherein the indication of whether the cycle slip is detected comprises a field with a Boolean indication of whether a cycle slip is detected.

Clause 239. The location server of any of clauses 235-238, wherein the indication of whether the cycle slip is detected comprises a field that indicates an amount of the cycle slip or a likelihood that the cycle slip occurred, or a combination thereof.

Clause 240. A non-transitory storage medium including program code stored thereon, the program code is operable to configure at least one processor in a location server for supporting carrier phase positioning of a user equipment (UE) in a terrestrial wireless network, the program code comprising instructions to: send a request for location to the UE; and receive a report from an entity in the terrestrial wireless network with an indication of whether a cycle slip is detected in a carrier phase (CP) of positioning signals received by the entity for determining a distance estimate from the entity to another entity.

Clause 241. The non-transitory storage medium of clause 240, wherein the entity comprises one of the UE that receives the positioning signals from a transmission reception point (TRP) or the TRP that receives the positioning signals from the UE.

Clause 242. The non-transitory storage medium of any of clauses 240-241, wherein the positioning signals are positioning reference signal (PRS) resources from a transmission reception point (TRP), wherein the indication of whether the cycle slip is detected is for the TRP and PRS resource.

Clause 243. The non-transitory storage medium of any of clauses 240-241, wherein the indication of whether the cycle slip is detected comprises a field with a Boolean indication of whether a cycle slip is detected.

Clause 244. The non-transitory storage medium of any of clauses 240-243, wherein the indication of whether the cycle slip is detected comprises a field that indicates an amount of the cycle slip or a likelihood that the cycle slip occurred, or a combination thereof.

Clause 245. A method performed by a transmission reception point (TRP) for supporting carrier phase positioning of a user equipment (UE) in a terrestrial wireless network, comprising: receiving positioning signals from the UE;

performing a carrier phase (CP) measurement of the positioning signals received from the UE for determining a distance estimate from the TRP to the UE; detecting whether a cycle slip of a CP for a positioning signal occurred; and sending a report to a location server with an indication of whether the cycle slip of the CP for the positioning signal is detected.

Clause 246. The method of clause 245, wherein the indication of whether the cycle slip of the CP for the positioning signal is detected comprises a field with a Boolean indication of whether the cycle slip is detected.

Clause 247. The method of clause 245, wherein the indication of whether the cycle slip of the CP for the positioning signal is detected comprises a field that indicates an amount of the cycle slip or a likelihood that the cycle slip occurred, or a combination thereof.

Clause 248. A transmission reception point (TRP) configured for supporting carrier phase positioning of a user equipment (UE) in a terrestrial wireless network, comprising: an external interface configured to communicate with entities in a wireless network; at least one memory; at least one processor coupled to the external interface and the at least one memory, wherein the at least one processor is configured to: receive, via the external interface, positioning signals from the UE; perform a carrier phase (CP) measurement of the positioning signals received from the UE for determining a distance estimate from the TRP to the UE; detect whether a cycle slip of a CP for a positioning signal occurred; and send, via the external interface, a report to a location server with an indication of whether the cycle slip of the CP for the positioning signal is detected.

Clause 249. The TRP of clause 248, wherein the indication of whether the cycle slip of the CP for the positioning signal is detected comprises a field with a Boolean indication of whether the cycle slip is detected.

Clause 250. The TRP of clause 248, wherein the indication of whether the cycle slip of the CP for the positioning signal is detected comprises a field that indicates an amount of the cycle slip or a likelihood that the cycle slip occurred, or a combination thereof.

Clause 251. A transmission reception point (TRP) configured for supporting carrier phase positioning of a user equipment (UE) in a terrestrial wireless network, comprising: means for receiving positioning signals from the UE; means for performing a carrier phase (CP) measurement of the positioning signals received from the UE for determining a distance estimate from the TRP to the UE; means for detecting whether a cycle slip of a CP for a positioning signal occurred; and means for sending a report to a location server with an indication of whether the cycle slip of the CP for the positioning signal is detected.

Clause 252. The TRP of clause 251, wherein the indication of whether the cycle slip of the CP for the positioning signal is detected comprises a field with a Boolean indication of whether the cycle slip is detected.

Clause 253. The TRP of clause 251, wherein the indication of whether the cycle slip of the CP for the positioning signal is detected comprises a field that indicates an amount of the cycle slip or a likelihood that the cycle slip occurred, or a combination thereof.

Clause 254. A non-transitory storage medium including program code stored thereon, the program code is operable to configure at least one processor in a transmission reception point (TRP) for supporting carrier phase positioning of a user equipment (UE) in a terrestrial wireless network, the program code comprising instructions to: receive positioning signals from the UE; perform a carrier phase (CP) measurement of the positioning signals received from the UE for determining a distance estimate from the TRP to the UE; detect whether a cycle slip of a CP for a positioning signal occurred; and send a report to a location server with an indication of whether the cycle slip of the CP for the positioning signal is detected.

Clause 255. The non-transitory storage medium of clause 254, wherein the indication of whether the cycle slip of the CP for the positioning signal is detected comprises a field with a Boolean indication of whether the cycle slip is detected.

Clause 256. The non-transitory storage medium of clause 254, wherein the indication of whether the cycle slip of the CP for the positioning signal is detected comprises a field that indicates an amount of the cycle slip or a likelihood that the cycle slip occurred, or a combination thereof.

Clause 257. A method performed by a location server for supporting carrier phase positioning of a user equipment (UE) in a terrestrial wireless network, comprising: receiving a report from the UE with an indication of whether a cycle slip is detected in a carrier phase (CP) of positioning reference signal (PRS) resources received by the UE from a plurality of transmission reception points (TRPs) for determining a distance estimate from the UE to the TRP; determining a likelihood of cycle slip of the CP occurring for PRS resources from the plurality of TRPs based on the report; and sending assistance data to one or more UEs comprising an indication of the likelihood of cycle slip of the CP occurring for the PRS resources from the plurality of TRPs based on the report.

Clause 258. The method of clause 257, wherein the indication of the likelihood of cycle slip of the CP occurring comprises a Boolean indication.

Clause 259. The method of clause 257, wherein the indication of the likelihood of cycle slip of the CP occurring comprises a range of likelihoods.

Clause 260. A location server configured for supporting carrier phase positioning of a user equipment (UE) in a terrestrial wireless network, comprising: an external interface configured to communicate with entities in a wireless network; at least one memory; at least one processor coupled to the external interface and the at least one memory, wherein the at least one processor is configured to: receive, via the external report, a report from the UE with an indication of whether a cycle slip is detected in a carrier phase (CP) of positioning reference signal (PRS) resources received by the UE from a plurality of transmission reception points (TRPs) for determining a distance estimate from the UE to the TRP; determine a likelihood of cycle slip of the CP occurring for PRS resources from the plurality of TRPs based on the report; and send, via the external report, assistance data to one or more UEs comprising an indication of the likelihood of cycle slip of the CP occurring for the PRS resources from the plurality of TRPs based on the report.

Clause 261. The location server of clause 260, wherein the indication of the likelihood of cycle slip of the CP occurring comprises a Boolean indication.

Clause 262. The location server of clause 260, wherein the indication of the likelihood of cycle slip of the CP occurring comprises a range of likelihoods.

Clause 263. A location server configured for supporting carrier phase positioning of a user equipment (UE) in a terrestrial wireless network, comprising: means for receiving a report from the UE with an indication of whether a cycle slip is detected in a carrier phase (CP) of positioning reference signal (PRS) resources received by the UE from a plurality of transmission reception points (TRPs) for determining a distance estimate from the UE to the TRP; means for determining a likelihood of cycle slip of the CP occurring for PRS resources from the plurality of TRPs based on the report; and means for sending assistance data to one or more UEs comprising an indication of the likelihood of cycle slip of the CP occurring for the PRS resources from the plurality of TRPs based on the report.

Clause 264. The location server of clause 263, wherein the indication of the likelihood of cycle slip of the CP occurring comprises a Boolean indication.

Clause 265. The location server of clause 263, wherein the indication of the likelihood of cycle slip of the CP occurring comprises a range of likelihoods.

Clause 266. A non-transitory storage medium including program code stored thereon, the program code is operable to configure at least one processor in a location server for supporting carrier phase positioning of a user equipment (UE) in a terrestrial wireless network, the program code comprising instructions to: receive a report from the UE with an indication of whether a cycle slip is detected in a carrier phase (CP) of positioning reference signal (PRS) resources received by the UE from a plurality of transmission reception points (TRPs) for determining a distance estimate from the UE to the TRP; determine a likelihood of cycle slip of the CP occurring for PRS resources from the plurality of TRPs based on the report; and send assistance data to one or more UEs comprising an indication of the likelihood of cycle slip of the CP occurring for the PRS resources from the plurality of TRPs based on the report.

Clause 267. The non-transitory storage medium of clause 266, wherein the indication of the likelihood of cycle slip of the CP occurring comprises a Boolean indication.

Clause 268. The non-transitory storage medium of clause 266, wherein the indication of the likelihood of cycle slip of the CP occurring comprises a range of likelihoods.

Clause 269. A method performed by a user equipment (UE) for supporting carrier phase positioning of the in a terrestrial wireless network, comprising: receiving assistance data from a location server comprising an indication of a likelihood of cycle slip in a carrier phase (CP) of positioning reference signal (PRS) resources from a plurality of transmission reception points (TRPs); performing CP measurements of PRS resources from the plurality of TRPs based on the likelihood of cycle slip in the CP the PRS resources from the plurality of TRPs; and determining a distance estimate from each of the plurality of TRPs to the UE using the CP measurements of PRS resources from the plurality of TRPs.

Clause 270. The method of clause 269, wherein the indication of the likelihood of cycle slip of the CP occurring comprises a Boolean indication.

Clause 271. The method of clause 269, wherein the indication of the likelihood of cycle slip of the CP occurring comprises a range of likelihoods.

Clause 272. A user equipment (UE) configured for supporting carrier phase positioning of the in a terrestrial wireless network, comprising: a wireless transceiver configured to wirelessly communicate with entities in a wireless network; at least one memory; at least one processor coupled to the wireless transceiver and the at least one memory, wherein the at least one processor is configured to: receive, via the wireless transceiver, assistance data from a location server comprising an indication of a likelihood of cycle slip in a carrier phase (CP) of positioning reference signal (PRS) resources from a plurality of transmission reception points (TRPs); perform CP measurements of PRS resources from the plurality of TRPs based on the likelihood of cycle slip in the CP the PRS resources from the plurality of TRPs; and determine a distance estimate from each of the plurality of TRPs to the UE using the CP measurements of PRS resources from the plurality of TRPs.

Clause 273. The UE of clause 272, wherein the indication of the likelihood of cycle slip of the CP occurring comprises a Boolean indication.

Clause 274. The UE of clause 272, wherein the indication of the likelihood of cycle slip of the CP occurring comprises a range of likelihoods.

Clause 275. A user equipment (UE) configured for supporting carrier phase positioning of the in a terrestrial wireless network, comprising: means for receiving assistance data from a location server comprising an indication of a likelihood of cycle slip in a carrier phase (CP) of positioning reference signal (PRS) resources from a plurality of transmission reception points (TRPs); means for performing CP measurements of PRS resources from the plurality of TRPs based on the likelihood of cycle slip in the CP the PRS resources from the plurality of TRPs; and means for determining a distance estimate from each of the plurality of TRPs to the UE using the CP measurements of PRS resources from the plurality of TRPs.

Clause 276. The UE of clause 275, wherein the indication of the likelihood of cycle slip of the CP occurring comprises a Boolean indication.

Clause 277. The UE of clause 275, wherein the indication of the likelihood of cycle slip of the CP occurring comprises a range of likelihoods.

Clause 278. A non-transitory storage medium including program code stored thereon, the program code is operable to configure at least one processor in a user equipment (UE) for supporting carrier phase positioning of the in a terrestrial wireless network, the program code comprising instructions to: receive assistance data from a location server comprising an indication of a likelihood of cycle slip in a carrier phase (CP) of positioning reference signal (PRS) resources from a plurality of transmission reception points (TRPs); perform CP measurements of PRS resources from the plurality of TRPs based on the likelihood of cycle slip in the CP the PRS resources from the plurality of TRPs; and determine a distance estimate from each of the plurality of TRPs to the UE using the CP measurements of PRS resources from the plurality of TRPs.

Clause 279. The non-transitory storage medium of clause 278, wherein the indication of the likelihood of cycle slip of the CP occurring comprises a Boolean indication.

Clause 280. The non-transitory storage medium of clause 278, wherein the indication of the likelihood of cycle slip of the CP occurring comprises a range of likelihoods.

Therefore, it is intended that claimed subject matter not be limited to the particular examples disclosed, but that such claimed subject matter may also include all aspects falling within the scope of appended claims, and equivalents thereof.

**Claims**

1.  A method performed by a user equipment (UE) for supporting carrier phase positioning of the UE in a terrestrial wireless network, comprising:

    receiving positioning signals from base stations in the terrestrial wireless network;
    performing carrier phase (CP) measurements of the positioning signals received from the base stations; and
    determining a location-related estimate from each base station to the UE using a sequential search of combinations of the CP measurements from a wide lane combination to a narrow lane combination, wherein results from the wide lane combination of the CP measurements is used in the sequential search.

2.  The method of claim 1, wherein the sequential search is performed from a widest lane combination of the CP measurements to a narrowest lane of combination of the CP measurements.

3.  The method of claim 1, wherein, in the sequential search of combinations of the CP measurements, a distance estimate from the wide lane combination of the CP measurements is used to resolve an integer ambiguity of one or more subsequent narrow lane combinations of the CP measurements.

4.  The method of claim 1, wherein, in the sequential search of combinations of the CP measurements, a distance estimate from the wide lane combination of the CP measurements is used to reduce a number of subsequent combinations of the CP measurements in the sequential search to combinations of the CP measurements that are not affected by an integer ambiguity.

5.  The method of claim 1, wherein, in the sequential search of combinations of the CP measurements, a median distance estimate from a plurality of wide lane combinations of the CP measurements is used to resolve an integer ambiguity of one or more subsequent narrow lane combinations of the CP measurements, and optionally wherein the location-related estimate is determined based on at least a combination of the median distance estimate from the plurality of wide lane combinations of the CP measurements and a second median distance estimate from the one or more subsequent narrow lane combinations of the CP measurements.

6.  The method of claim 1, wherein each lane combination of the CP measurements comprises a plurality of combinations of the CP measurements.

7.  The method of claim 1, wherein determining the location-related estimate from each base station to the UE using the sequential search of combinations of the CP measurements from the wide lane to the narrow lane comprises determining a distance estimate based on at least one of a minimization of mean square error of distance estimates from a plurality of lane combinations of the CP measurements, a median distance estimate determined from the distance estimates from the plurality of lane combinations of the CP measurements, an average distance estimate determined from the distance estimates from the plurality of lane combinations of the CP measurements, or any combination thereof, and optionally further comprising rejecting outlier distance estimates from one or more lane combinations of the CP measurements in determining the distance estimate from each base station to the UE.

8.  The method of claim 1, wherein a measurement period or reporting time for determining the location-related estimate from each base station to the UE is based on a number of lane combinations used in the sequential search of combinations of the CP measurements.

9.  The method of claim 1, further comprising sending location information to a location server, wherein the location information comprises at least one of a distance estimate from each base station to the UE and a location estimated determined based on the distance estimate from each base station to the UE.

10. A user equipment (UE) configured for supporting carrier phase positioning of the UE in a terrestrial wireless network, comprising:

a wireless transceiver configured to wirelessly communicate with entities in a wireless network;
at least one memory;
at least one processor coupled to the wireless transceiver and the at least one memory, wherein the at least one processor is configured to:

receive, via the wireless transceiver, positioning signals from base stations in the terrestrial wireless network;
perform carrier phase (CP) measurements of the positioning signals received from the base stations; and
determine a location-related estimate from each base station to the UE using a sequential search of combinations of the CP measurements from a wide lane combination to a narrow lane combination, wherein results from the wide lane combination of the CP measurements is used in the sequential search.

11. The UE of claim 10, further configured to perform the method of any of claims 2 to 9.

12. A method performed by a user equipment (UE) for supporting carrier phase positioning of the UE in a terrestrial wireless network, comprising:

receiving positioning signals from base stations in the terrestrial wireless network;
performing carrier phase (CP) measurements of the positioning signals received from the base stations; and
sending location information to a location server, wherein the location information comprises the carrier phase measurements or one or more combinations of the carrier phase measurements to enable a location-related estimate from each base station to the UE determined using a sequential search of combinations of the CP measurements from a wide lane combination to a narrow lane combination, wherein results from the wide lane combination of the CP measurements is used in the sequential search.

13. A user equipment (UE) configured for supporting carrier phase positioning of the UE in a terrestrial wireless network, comprising:

a wireless transceiver configured to wirelessly communicate with entities in a wireless network;
at least one memory;
at least one processor coupled to the wireless transceiver and the at least one memory, wherein the at least one processor is configured to:

receive, via the wireless transceiver, positioning signals from base stations in the terrestrial wireless network;
perform carrier phase (CP) measurements of the positioning signals received from the base stations; and
send, via the wireless transceiver, location information to a location server, wherein the location information comprises the carrier phase measurements or one or more combinations of the carrier phase measurements to enable a location-related estimate from each base station to the UE determined using a sequential search of combinations of the CP measurements from a wide lane combination to a narrow lane combination, wherein results from the wide lane combination of the CP measurements is used in the sequential search.

14. A method performed by a location server for supporting carrier phase positioning of a user equipment (UE) in a terrestrial wireless network, comprising:

receiving from the UE carrier phase (CP) measurements of positioning signal received by the UE from base stations in the terrestrial wireless network; and
determining a location-related estimate from each base station to the UE using a sequential search of combinations of the CP measurements from a wide lane combination to a narrow lane combination, wherein results from the wide lane combination of the CP measurements is used in the sequential search.

15. A location server configured for supporting carrier phase positioning of a user equipment (UE) in a terrestrial wireless network, comprising:

an external interface configured to communicate with entities in a wireless network;
at least one memory;
at least one processor coupled to the external interface and the at least one memory, wherein the at least one processor is configured to:

receive, via the external interface, from the UE carrier phase (CP) measurements of positioning signal received by the UE from base stations in the terrestrial wireless network; and
determine a location-related estimate from each base station to the UE using a sequential search of combinations of the CP measurements from a wide lane combination to a narrow lane combination, wherein results from the wide lane combination of the CP measurements is used in the sequential search.

16. The method of any of claims 1 to 9, 12 and 14, wherein the location-related estimate is a distance estimate.

17. The UE of claims 10, 11 and 13, wherein the location-related estimate is a distance estimate.

18. The location server of claim 15, wherein the location-related estimate is a distance estimate.

FIG. 1

FIG. 2

EP 4 671 802 A2

FIG. 3

Lane with 272 PRB, SCS=30 Khz

FIG. 4

500

502 — PRS FD Descrambled Tones

504 — $a\tan\left\{\dfrac{\mathrm{Im}(RE)}{\mathrm{Re}(RE)}\right\}$

512 — $\overline{\Delta\phi_m}, m=1$

522 — $\widehat{\rho_1} = median\left(\dfrac{\overline{\Delta\phi_1}}{2\pi}\lambda_\Delta^1\right)$ → $\widehat{\rho_1}$

514 — $\overline{\Delta\phi_m}, m=2$

524 — $\widehat{\rho_2} = median\left(\dfrac{\overline{\Delta\phi_2}}{2\pi}\lambda_\Delta^2\right) + \lambda_\Delta^2\left\lfloor\dfrac{\widehat{\rho_1}}{\lambda_\Delta^2}\right\rfloor$ → $\widehat{\rho_2}$

516 — $\overline{\Delta\phi_m}, m=1630$

526 — $\widehat{\rho_{1630}} = median\left(\dfrac{\overline{\Delta\phi_{1630}}}{2\pi}\lambda_\Delta^{1630}\right) + \lambda_\Delta^{1630}\left\lfloor\dfrac{\widehat{\rho_1}}{\lambda_\Delta^{1630}}\right\rfloor$ → $\widehat{\rho_{1630}}$

518 — $\overline{\Delta\phi_m}, m=1631$

528 — $\widehat{\rho_{1631}} = median\left(\dfrac{\overline{\Delta\phi_{1631}}}{2\pi}\lambda_\Delta^{1631}\right) + \lambda_\Delta^{1631}\left\lfloor\dfrac{\widehat{\rho_1}}{\lambda_\Delta^{1631}}\right\rfloor$ → $\widehat{\rho_{1631}}$

$\widehat{\rho}$

m=1, widest lane
m=1631, narrowest lane

**FIG. 5**

EP 4 671 802 A2

600

502 PRS FD Descrambled Tones

504 $a\tan\left\{\dfrac{\mathrm{Im}(RE)}{\mathrm{Re}(RE)}\right\}$

512 $\overline{\Delta\phi_m}, m = 1$

522 $\widehat{\rho_1} = median\left(\dfrac{\overline{\Delta\phi_1}}{2\pi}\lambda_\Delta^1\right)$ → $\widehat{\rho_1}$

514 $\overline{\Delta\phi_m}, m = 2$

624 $\widehat{\rho_2} = median\left(\dfrac{\overline{\Delta\phi_2}}{2\pi}\lambda_\Delta^2\right)$ → $\widehat{\rho_2}$

516 $\overline{\Delta\phi_m}, m = 1630$

626 $\widehat{\rho_{1630}} = median\left(\dfrac{\overline{\Delta\phi_{1630}}}{2\pi}\lambda_\Delta^{1630}\right)$ → $\widehat{\rho_{1630}}$

518 $\overline{\Delta\phi_m}, m = 1631$

628 $\widehat{\rho_{1631}} = median\left(\dfrac{\overline{\Delta\phi_{1631}}}{2\pi}\lambda_\Delta^{1631}\right)$ → $\widehat{\rho_{1631}}$

$\widehat{\rho}$

m=1, widest lane
m=1631, narrowest lane

FIG. 6

FIG. 7

EP 4 671 802 A2

FIG. 8

FIG. 9

73

1011

| WWAN 1010 | WLAN 1011 | UWB 1012 | BT 1013 |
|---|---|---|---|
| 1010t 1010r | 1011t 1011r | 1012t 1012r | 1013t 1013r |

Connections(s) 1006

Sensors
1014

SPS
Receiver
1015

Memory
1004

Processor(s)
1002

Medium
1020

1008

Positioning Signal
1022

CP Measurement
1024

Distance Estimate
1026

Assistance Data
1028

Capabilities
1030

Cycle Slip
1032

Position
Determination
1032

1000

FIG. 10

Connections(s) 1106

Processor(s) 1102

Medium 1120

1108

CP Measurement 1122

Distance Estimate 1124

Capabilities 1126

Assistance Data 1128

Request 1130

Cycle Slip 1132

External Interface 1110

Memory 1104

1100

# FIG. 11

1211

WWAN Transceiver 1210

1210t

1210r

Connections(s) 1206

Processor(s)
1202

Medium
1220

1208

Positioning Signal
1222

CP Measurement
1224

Cycle Slip
1226

External
Interface
1212

Memory
1204

1200

FIG. 12

1300

1302

Receive positioning signals from base stations in the terrestrial wireless network

1304

Perform carrier phase (CP) measurements of the positioning signals received from the base stations

1306

Determine a distance estimate from each base station to the UE using a sequential search of combinations of the CP measurements from a wide lane combination to a narrow lane combination, wherein results from the wide lane combination of the CP measurements is used in the sequential search

## FIG. 13A

1350

1352

Receive positioning signals from base stations in the terrestrial wireless network

1354

Perform carrier phase (CP) measurements of the positioning signals received from the base stations

1356

Send location information to a location server, wherein the location information comprises the carrier phase measurements or one or more combinations of the carrier phase measurements to enable a distance estimate from each base station to the UE determined using a sequential search of combinations of the CP measurements from a wide lane combination to a narrow lane combination, wherein results from the wide lane combination of the CP measurements is used in the sequential search

## FIG. 13B

1400

Receive from the UE carrier phase (CP) measurements of positioning signal received by the UE from base stations in the terrestrial wireless network

1402

Determine a distance estimate from each base station to the UE using a sequential search of combinations of the CP measurements from a wide lane combination to a narrow lane combination, wherein results from the wide lane combination of the CP measurements is used in the sequential search

1404

# FIG. 14

Receive from an entity in the terrestrial wireless network an expected trip time or expected integer cycle associated with at least one positioning signal from at least one transmitting entity — 1502

Receiving the at least one positioning signal from the at least one transmitting entity — 1504

Perform CP measurements of the at least one positioning signal received from the at least one transmitting entity — 1506

Determine a distance estimate from the at least one transmitting entity to the UE based on the CP measurements and the expected trip time or the expected integer cycle associated with the at least one positioning signal from the at least one transmitting entity — 1508

1500

# FIG. 15

— 1600

Receive a capabilities message from the UE indicating that the UE is capable of performing carrier phase (CP) positioning measurements ⌐1602

Send assistance data to the UE associated with a CP positioning method at least based on the received capabilities message, wherein the assistance data includes an expected trip time or expected integer cycle associated with at least one positioning signal from at least one transmitting entity, wherein a distance estimate from the at least one transmitting entity to the UE is determined based on CP measurements of the at least one positioning signal received by the UE from the at least one transmitting entity and the expected trip time or the expected integer cycle for the at least one positioning signal from the at least one transmitting entity ⌐1604

# FIG. 16

1700

1702

Receive positioning signals from transmission reception points (TRPs) in the terrestrial wireless network

1704

Perform a carrier phase (CP) measurement of each of the positioning signals received from the TRPs for determining a distance estimate from each TRP to the UE

1706

Detect whether a cycle slip of a CP for a positioning signal occurred

1708

Send a report with an indication of whether the cycle slip of the CP for the positioning signal is detected

# FIG. 17

1800

1802

Send a request for location to the UE

1804

Receive a report from an entity in the terrestrial wireless network with an indication of whether a cycle slip is detected in a carrier phase (CP) of positioning signals received by the entity for determining a distance estimate from the entity to another entity

# FIG. 18

1900

1902

Receive positioning signals from the UE

1904

Perform a carrier phase (CP) measurement of the positioning signals received from the UE for determining a distance estimate from the TRP to the UE

1906

Detect whether a cycle slip of a CP for a positioning signal occurred

1908

Send a report to a location server with an indication of whether the cycle slip of the CP for the positioning signal is detected

# FIG. 19

2000

Receive a report from the UE with an indication of whether a cycle slip is detected in a carrier phase (CP) of positioning reference signal (PRS) resources received by the UE from a plurality of transmission reception points (TRPs) for determining a distance estimate from the UE to the TRP — 2002

Determine a likelihood of cycle slip of the CP occurring for PRS resources from the plurality of TRPs based on the report — 2004

Send assistance data to one or more UEs comprising an indication of the likelihood of cycle slip of the CP occurring for the PRS resources from the plurality of TRPs based on the report — 2006

# FIG. 20

2100

Receive assistance data from a location server comprising an indication of a likelihood of cycle slip in a carrier phase (CP) of positioning reference signal (PRS) resources from a plurality of transmission reception points (TRPs) — 2102

Perform CP measurements of PRS resources from the plurality of TRPs based on the likelihood of cycle slip in the CP the PRS resources from the plurality of TRPs — 2104

Determine a distance estimate from each of the plurality of TRPs to the UE using the CP measurements of PRS resources from the plurality of TRPs — 2106

# FIG. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GR 20220100276